# EUROPEAN PATENT APPLICATION

(11) **EP 4 561 010 A1**
(43) Date of publication of application: **28.05.2025**
(21) Application number: 23845224.7
(22) Date of filing: 29.06.2023
(51) Int. Cl.: H04L 45/24

(54) **RESOURCE RESERVATION PATH ESTABLISHMENT METHOD AND APPARATUS, AND COMMUNICATION METHOD AND APPARATUS**

(30) Priority: 29.07.2022 CN 202210908499
(71) Applicant: Huawei Technologies Co., Ltd., Shenzhen, Guangdong 518129 (CN)
(72) Inventor: ZHANG, Xudong, Shenzhen, Guangdong 518129 (CN); LIU, Guoquan, Shenzhen, Guangdong 518129 (CN); WANG, Yali, Shenzhen, Guangdong 518129 (CN); WANG, Jian, Shenzhen, Guangdong 518129 (CN)
(74) Representative: Thun, Clemens
(86) International application number: PCT/CN2023/104239
(87) International publication number: WO 2024/022011

(57) **Abstract**

A method for establishing a resource reservation path, a communication method, and an apparatus are provided. The communication method includes: A source node sends a data packet, where a packet header of the data packet includes a topology identifier field, the topology identifier field indicates a type of a forwarding path corresponding to the data packet, the type includes a first type and a second type, and quality of service of a first forwarding path corresponding to the first type is higher than quality of service of a second forwarding path corresponding to the second type; and a receive end of the data packet forwards the data packet based on the topology identifier field in the data packet. The first forwarding path is a resource reservation path or referred to as a reservation path.

## Description

This application claims priority to Chinese Patent Application No. 202210908499.0, filed with the China National Intellectual Property Administration on July 29, 2022 and entitled "METHOD FOR ESTABLISHING RESOURCE RESERVATION PATH, COMMUNICATION METHOD, AND APPARATUS", which is incorporated herein by reference in its entirety.

### TECHNICAL FIELD

This application relates to the communication field, and in particular, to a method for establishing a resource reservation path, a communication method, and an apparatus.

### BACKGROUND

In network communication, traffic is usually forwarded by searching a forwarding table hop by hop based on a destination address. Packet loss or delay often occurs in a forwarding process. How to improve communication quality of a network and improve reliability and availability of the network communication is an urgent problem to be resolved.

### SUMMARY

This application discloses a method for establishing a resource reservation path, a communication method, and an apparatus, to help improve communication quality of a network.

According to a first aspect, this application provides a communication method. The method includes: receiving a data packet, where a packet header of the data packet includes a topology identifier field, the topology identifier field indicates a type of a forwarding path corresponding to the data packet, the type includes a first type and a second type, and quality of service of a first forwarding path corresponding to the first type is higher than quality of service of a second forwarding path corresponding to the second type; and forwarding the data packet based on the topology identifier field.

The method is applied to a network device having a routing and forwarding capability, for example, may be a wireless network device, or may be a router, a layer 3 switch (or referred to as a multi-layer switch), or the like, or may be a component that is used in the network device and that can implement the foregoing method. The component may be, for example, an integrated circuit, a line card, or a chip.

Herein, that quality of service of a first forwarding path is higher than quality of service of a second forwarding path corresponding to the second type is, for example, that the first forwarding path has one or more of features such as a larger bandwidth, a lower latency, a higher transmission priority, and a lower packet loss rate compared with the second forwarding path.

For example, the first forwarding path may alternatively be referred to as an advanced topology, and the second forwarding path may be referred to as a basic topology. The advanced topology may be a topology that meets a quality of service requirement and that is provided for an application. Further, the basic topology may be used by a network protocol and a control protocol of the network protocol, or may be used as a backup topology of the advanced topology. In other words, when the advanced topology is not established, a temporary topology (or referred to as a temporary forwarding path) may be provided for traffic forwarding of an application.

In the foregoing method, the topology identifier field is carried in the packet header of the data packet, so that forwarding behaviors with different quality of service on a data plane can be supported. For example, quality of service of forwarding based on the advanced topology is higher than quality of service of forwarding based on the basic topology. In this way, the packet header has better extensibility, and communication quality is improved.

Optionally, when the type indicated by the topology identifier field is the first type, the packet header further includes a flow label field, the flow label field indicates a flow label of a data flow to which the data packet belongs, and the flow label is used to guide forwarding of the data packet.

For example, when the type indicated by the topology identifier field is the second type, the packet header of the data packet may also include the flow label field. In this case, the flow label field is set to a default value.

In the implementation, the flow label field in the packet header is a key field for searching for a corresponding forwarding entry in a data packet forwarding process, so that the data packet can be forwarded.

Optionally, the forwarding the data packet based on the topology identifier field includes: when the type indicated by the topology identifier field is the first type, sending the data packet based on the first forwarding path.

In the implementation, the topology identifier field indicates the first type, so that the data packet can be forwarded based on the advanced topology, to meet a transmission requirement for high quality of service of a service traffic.

Optionally, the first type corresponds to a first forwarding table, and the sending the data packet based on the first forwarding path includes: obtaining a first forwarding entry from the first forwarding table based on a destination address field, a source address field, and the flow label field in the packet header; and sending the data packet based on the first forwarding entry, where the first forwarding entry is a mapping relationship among a network address indicated by the destination address field, a network address of a source node indicated by the source address field, the flow label indicated by the flow label field, a nexthop layer 2 identifier of a local node on the first forwarding path, an out interface identifier of the local node, a transport channel identifier TCID, and a logical channel identifier LCID.

In the implementation, the corresponding forwarding entry is searched for based on the destination address field, the source address field, and the flow label field in the packet header of the data packet, and the forwarding entry may be used to implement forwarding of the data packet based on the advanced topology.

Optionally, the forwarding the data packet based on the topology identifier field includes: when the topology identifier field indicates the first type, and it is detected that a next node of a local node on the first forwarding path is faulty or a link from the local node to the next node is faulty, changing the type indicated by the topology identifier field in the packet header from the first type to the second type, and sending a changed data packet based on the second forwarding path.

In the implementation, when the topology identifier field indicates the type of the first forwarding path with high quality of service, if the local node perceives that a next hop of the local node on the first forwarding path is faulty or a link to the next node is faulty, the local node may switch the service traffic from the first forwarding path with high quality of service to the second forwarding path with low quality of service. In this way, fast rerouting is implemented, and a service traffic loss is reduced.

Optionally, the second type corresponds to a second forwarding table, and the sending a changed data packet based on the second forwarding path includes: obtaining a second forwarding entry from the second forwarding table based on a destination address field in the packet header; and sending the changed data packet based on the second forwarding entry, where the second forwarding entry is a mapping relationship among a network address indicated by the destination address field, a nexthop layer 2 identifier of the local node on the second forwarding path, an out interface identifier of the local node, a transport channel identifier TCID, and a logical channel identifier LCID.

In the implementation, the corresponding forwarding entry is searched for based on the destination address field in the packet header of the data packet, and the forwarding entry may be used to implement forwarding of the data packet based on the basic topology.

Optionally, the first forwarding path is established based on the method performed by a system in any one of the second aspect or the possible implementations of the second aspect.

According to a second aspect, this application provides a system for establishing a resource reservation path. The system includes: a source node, configured to send a first message to a first intermediate node accessed by the source node, where the first message is used to request to establish a first forwarding path from the source node to a destination node, and the first forwarding path meets a quality of service condition; and the first intermediate node, configured to: determine the first forwarding path based on the first message, and send a second message when a resource is successfully reserved for the first forwarding path locally, where the second message is used to notify a next hop of the first intermediate node on the first forwarding path to reserve a resource for the first forwarding path. The first message includes a first type field, a request source location identifier field, and a request location identifier field, where the first type field indicates that a type of the first message is a resource reservation request message, the request source location identifier field indicates a network address of the first intermediate node, and the request location identifier field indicates a network address of a second intermediate node. The destination node is the second intermediate node or the destination node is an end node that accesses the second intermediate node. A second type field in the second message indicates that a type of the second message is a resource reservation path message.

Herein, the source node may be, for example, an electronic device having a communication capability, for example, may be an independent device like a handheld terminal, a vehicle, a vehicle-mounted device, a network side device, user equipment, an access terminal, a subscriber unit, a subscriber station, a mobile station, a mobile console, a remote station, a remote terminal, a wireless communication device, a user agent, or a user apparatus, or may be a component (for example, a chip or an integrated circuit) included in an independent device, or may be any possible intelligent terminal device (for example, a mobile phone), an intelligent transportation device (for example, a vehicle or an unmanned aerial vehicle), an intelligent manufacturing device, a smart home device (for example, a large screen or a speaker), or the like, or may be a component that is used in the electronic device and that can implement the foregoing method. The component may be, for example, an integrated circuit, a line card, or a chip.

The first intermediate node may be, for example, a network device having a routing and forwarding capability, for example, may be a wireless network device, or may be a router, a layer 3 switch (or referred to as a multi-layer switch), or the like, or may be a component that is used in the network device and that can implement the foregoing method. The component may be, for example, an integrated circuit, a line card, or a chip.

Herein, the first forwarding path meets the quality of service condition. The quality of service condition includes, for example, one or more of a bandwidth being greater than a first preset threshold, a delay being less than a second preset threshold, a packet loss rate being less than a third preset threshold, a delay jitter being less than a fourth preset threshold, and the like. In other words, the first forwarding path is an advanced topology different from a basic topology, and quality of service of the first forwarding path is higher than quality of service of the basic topology.

For example, it is assumed that the quality of service condition is that the bandwidth is not less than 10 mega M. That the first intermediate node successfully reserves the resource for the first forwarding path locally is that a local idle bandwidth resource of the first intermediate node is 30 M, and the first intermediate node may locally reserve at least 10 M for the first forwarding path. In this way, the first intermediate node successfully reserves the resource for the first forwarding path locally.

A network location or an access location of the source node may be determined based on the request source location identifier field, and a network location or an access location of the destination node may be determined based on the request location identifier field. The request source location identifier field and the request location identifier field are used by the first intermediate node to determine the first forwarding path.

In the foregoing method, a resource reservation request message is initiated by the source node, and the first intermediate node sends the resource reservation path message only when determining the first forwarding path based on the resource reservation request message sent by the source node and successfully reserving the resource for the first forwarding path locally, to notify a next hop of the first intermediate node on the first forwarding path to reserve a resource for the first forwarding path. This implements a feasible solution in which an end node in a network applies for establishing a resource reservation path.

Optionally, the source node is specifically configured to send, based on a service requirement for sending a data packet to the destination node, the first message to the first intermediate node accessed by the source node.

It can be learned that the source node sends the first message (namely, the resource reservation request message) with a trigger condition, that is, sending is triggered based on a service requirement. In other words, the first forwarding path is not preset, but is established only when there is a service requirement. In this way, power consumption of a node in the network can be reduced, and a load of the node can be reduced.

Optionally, the first message further includes a request flow label field, and the request flow label field indicates a flow label allocated by the source node to the first forwarding path.

In the implementation, the source node allocates the flow label to the first forwarding path, to identify a service flow (or referred to as a data flow) that meets the quality of service condition.

Optionally, the first message further includes a keep alive time field, and the keep alive time field indicates keepalive duration of the first forwarding path.

In the implementation, the keepalive time indicated by the keep alive time field may be used by the first intermediate node to determine, after the first forwarding path is established, whether the forwarding table corresponding to the locally generated first forwarding path is aged, which is equivalent to determining whether the first forwarding path is currently kept alive.

Optionally, the first message further includes a request source address field and a request destination address field, the request source address field indicates a network address of the source node that requests to establish the first forwarding path, and the request destination address field indicates a network address of the destination node corresponding to the first forwarding path.

In the implementation, the request source address field and the request destination address field may be used by the first intermediate node to locally generate the forwarding table corresponding to the first forwarding path when the resource is successfully reserved.

Optionally, the first message further includes at least one of the following fields:
a message length field indicating a length of the first message,
a transaction number field identifying that the source node sends the first message once; and
a link quality information type-length-value TLV field indicating a link quality requirement met by the first forwarding path.

Herein, the link quality requirement carried in the link quality information type-length-value TLV field may be used by the first intermediate node to determine the first forwarding path. Herein, that the first forwarding path meets the link quality requirement also means that the first forwarding path meets the quality of service condition.

Optionally, the second message further includes a first type-length-value TLV field, a V field of the first TLV field includes a first return code field, and the first return code field indicates that a resource reservation result of the first forwarding path on the first intermediate node is a success in reservation.

In the implementation, the second message carries the resource reservation result of the first intermediate node. In this way, a receive end of the second message may learn, based on the resource reservation result in the second message, that the first intermediate node has successfully completed resource reservation.

Optionally, the V field of the first TLV field further includes an ordered set of an identifier indicating at least one link of the first forwarding path, and an identifier of each link in the at least one link is obtained based on a neighbor system identifier corresponding to the link and identifiers of interfaces of two neighboring intermediate nodes corresponding to the link.

For example, it is assumed that the first forwarding path is B→C→D. The first forwarding path has two links: a link BC and a link CD. The link BC is used as an example. An identifier of the link BC on the first forwarding path is obtained based on a neighbor system identifier corresponding to the link BC, an identifier of an interface of a node B, and an identifier of an interface of a node C. The neighbor system identifier corresponding to the link BC identifies the node C, and may be preconfigured by a user, or may be obtained based on a device identifier of the node C. The node C is a neighboring node of the node B. Neighboring nodes are names of two directly connected nodes. For example, the neighbor system identifier corresponding to the link BC may be a layer 2 identifier (layer 2 identifier, L2ID) of the node C.

In the implementation, the receive end of the second message may determine the first forwarding path based on the ordered set of the identifier of the at least one link in the second message. Further, the receive end of the second message may obtain a layer 2 identifier and a local out interface identifier of a next hop from the identifier of the link, to locally generate a corresponding forwarding table.

Optionally, the V field of the first TLV field further includes a first path link index field, and the first path link index field indicates an index of a link on which resource reservation is currently performed and that is in the at least one link of the first forwarding path.

In the implementation, the receive end of the second message may determine, based on the index indicated by the first path link index field carried in the second message, a sequence number of the link on which the first intermediate node currently performs resource reservation.

Optionally, the second message further includes the request source location identifier field, the request location identifier field, the request flow label field, the keep alive time field, the request source address field, and the request destination address field that are in the first message.

In the implementation, the request location identifier field, the request flow label field, the request source address field, and the request destination address field may be used by the receive end of the second message to locally generate the forwarding table used to guide forwarding of the data packet on the first forwarding path. The keepalive time indicated by the keep alive time field may be used as a keep alive period of the forwarding table locally generated by the receive end of the second message. The request source location identifier field may be used to enable the receive end of the second message to determine the access location or the network location of the source node. In this way, the receive end of the second message can reversely address the source node.

Optionally, the first intermediate node is further configured to send a third message to the source node when a resource fails to be locally reserved for the first forwarding path, where a third type field in the third message indicates that a type of the third message is a resource reservation confirm message, and a second return code field in the third message indicates that the resource reservation result of the first forwarding path on the first intermediate node is a failure in reservation. The source node is further configured to determine, based on the second return code field in the third message, that an establishment result of the first forwarding path is that establishment fails.

In the implementation, when failing to reserve the resource, the first intermediate node sends, to the source node, the resource reservation confirm message that carries the reservation failure result, so that the source node can determine, based on the resource reservation confirm message, that the first forwarding path fails to be established.

Optionally, the system further includes the second intermediate node, and the second intermediate node is a last intermediate node on the first forwarding path. The second intermediate node is configured to: locally reserve a resource for the first forwarding path based on a received fourth message, and send a fifth message, where a fourth type field in the fourth message indicates that a type of the fourth message is a resource reservation path message, and a third return code field in the fourth message indicates that a resource reservation result of the first forwarding path on a target node is a success in reservation, and the target node is a previous intermediate node of the second intermediate node on the first forwarding path; and a fifth type field in the fifth message indicates that a type of the fifth message is a resource reservation confirm message, and a fourth return code field in the fifth message indicates a resource reservation result of the first forwarding path on the second intermediate node.

In the implementation, the second intermediate node (the last intermediate node on the first forwarding path) locally reserves the resource for the first forwarding path based on the received resource reservation path message, and sends the fifth message that carries the resource reservation result. In this way, the source node may determine, based on the fifth message, whether the first forwarding path is successfully established.

Optionally, the first intermediate node is further configured to: receive the fifth message, obtain the network address of the source node from a request source address field in the fifth message, and send the fifth message to the source node based on the network address of the source node. The source node is further configured to determine the establishment result of the first forwarding path based on the fourth return code field in the fifth message.

In other words, when the first intermediate node successfully reserves the resource locally, the first intermediate node may further receive a resource reservation confirm message (for example, the fifth message) that is fed back by another intermediate node on the first forwarding path and that carries a resource reservation result, and forward the resource reservation confirm message to the source node. Therefore, the source node may determine, based on the received resource reservation confirm message, whether the first forwarding path is successfully established.

Optionally, the source node is specifically configured to: when the resource reservation result indicated by the fourth return code field is a failure in reservation, determine that the establishment result of the first forwarding path is that establishment fails; or when the resource reservation result indicated by the fourth return code field is a success in reservation, determine that the establishment result of the first forwarding path is that establishment succeeds.

In the foregoing implementation, the establishment result of the first forwarding path is related to the resource reservation result carried in the resource reservation confirm message received by the source node. If the resource reservation result is a failure in reservation, the first forwarding path fails to be established. If the resource reservation result is a success in reservation, the first forwarding path is successfully established. It can be learned that, only when the last intermediate node on the first forwarding path successfully reserves the resource locally, the resource reservation result carried in the resource reservation confirm message sent by the last intermediate node is a success in reservation.

Optionally, the fifth message further includes a second type-length-value TLV field, and the fourth return code field is included in a V field of the second TLV field.

Optionally, the V field of the second TLV field further includes the ordered set of the identifier indicating the at least one link of the first forwarding path, and the identifier of each link in the at least one link is obtained based on the neighbor system identifier corresponding to the link and the identifiers of the interfaces of the two neighboring intermediate nodes corresponding to the link.

Optionally, the V field of the second TLV field further includes a second path link index field, and the second path link index field indicates that an index of a link on which resource reservation is currently performed and that is in the at least one link of the first forwarding path is an index of a last link in the at least one link.

In the implementation, the receive end of the fifth message may determine, based on the index indicated by the second path link index field, a sequence number of a link on which an intermediate node that first sends the fifth message currently performs resource reservation.

Optionally, the fifth message further includes the request source location identifier field, the request location identifier field, the request flow label field, the keep alive time field, the request source address field, and the request destination address field that are in the first message.

According to a third aspect, this application provides a method for establishing a resource reservation path, applied to a source node, where the source node is an end node that accesses a first intermediate node. The method includes: obtaining a first message, where the first message includes a first type field, a request source location identifier field, and a request location identifier field, the first type field indicates that a type of the first message is a resource reservation request message, the request source location identifier field indicates a network address of the first intermediate node, and the request location identifier field indicates a network address of a second intermediate node; and sending the first message to the first intermediate node, where the first message is used to request to establish a first forwarding path from the source node to a destination node, the first forwarding path meets a quality of service QoS condition, and the destination node is the second intermediate node or the destination node is an end node that accesses the second intermediate node.

The source node may be, for example, an electronic device having a communication capability, for example, may be an independent device like a handheld terminal, a vehicle, a vehicle-mounted device, a network side device, user equipment, an access terminal, a subscriber unit, a subscriber station, a mobile station, a mobile console, a remote station, a remote terminal, a wireless communication device, a user agent, or a user apparatus, or may be a component (for example, a chip or an integrated circuit) included in an independent device, or may be any possible intelligent terminal device (for example, a mobile phone), an intelligent transportation device (for example, a vehicle or an unmanned aerial vehicle), an intelligent manufacturing device, a smart home device (for example, a large screen or a speaker), or the like, or may be a component that is used in the electronic device and that can implement the foregoing method. The component may be, for example, an integrated circuit, a line card, or a chip.

For example, the obtaining a first message includes: generating the first message.

A network location or an access location of the source node may be determined based on the request source location identifier field, and a network location or an access location of the destination node may be determined based on the request location identifier field. The request source location identifier field and the request location identifier field are used by the first intermediate node to determine the first forwarding path.

Herein, the first forwarding path meets the quality of service condition. The quality of service condition includes, for example, one or more of a bandwidth being greater than a first preset threshold, a delay being less than a second preset threshold, a packet loss rate being less than a third preset threshold, a delay jitter being less than a fourth preset threshold, and the like. In other words, the first forwarding path is an advanced topology different from a basic topology, and quality of service of the first forwarding path is higher than quality of service of the basic topology.

In the foregoing method, the source node sends a resource reservation request message to apply for establishing a reservation path from the source node to the target node, and a request source location identifier field in the resource reservation request message indicates the access location (or the network location) of the source node, and a request location identifier field indicates the access location (or the network location) of the destination node. This helps the first intermediate node quickly determine the to-be-established first forwarding path (namely, a reservation path or a resource reservation path). Therefore, a feasible solution in which an end node in a network applies for establishing a resource reservation path is provided.

Optionally, the obtaining a first message includes: generating the first message based on a service requirement for sending a data packet to the destination node.

It can be learned that the first message is generated by the source node through triggering based on the service requirement, that is, the first forwarding path is not preset, but is established only when there is the service requirement. In this way, power consumption of a node in the network can be reduced, and a load of the node can be reduced.

Optionally, the first message further includes a request flow label field, and the request flow label field indicates a flow label allocated by the source node to the first forwarding path.

Optionally, the first message further includes a keep alive time field, and the keep alive time field indicates keepalive duration of the first forwarding path.

Optionally, the first message further includes a request source address field and a request destination address field, the request source address field indicates a network address of the source node that requests to establish the first forwarding path, and the request destination address field indicates a network address of the destination node corresponding to the first forwarding path.

Optionally, the first message further includes at least one of the following fields:
a message length field indicating a length of the first message;
a transaction number field identifying that the source node sends the first message once; and
a link quality information type-length-value TLV field indicating a link quality requirement met by the first forwarding path.

For beneficial effect of the fields in the first message (namely, the resource reservation request message), refer to the descriptions of the beneficial effect of the corresponding fields in the first message in the second aspect. Details are not described herein again.

Optionally, the method further includes: receiving a second message from the first intermediate node, where a second type field of the second message indicates that a type of the second message is a resource reservation confirm message, the second message includes a return code field, and the return code field indicates a resource reservation result of the first forwarding path; and determining an establishment result of the first forwarding path based on the return code field in the second message.

For example, the resource reservation result carried in the resource reservation confirm may indicate a resource reservation result of the first forwarding path on the first intermediate node, or may indicate a resource reservation result of the first forwarding path on another intermediate node. Herein, the another intermediate node may be, for example, the second intermediate node, or any intermediate node between the first intermediate node and the second intermediate node on the first forwarding path (when at least one intermediate node exists between the first intermediate node and the second intermediate node). This is not specifically limited herein.

In the implementation, the source node may further receive the resource reservation confirm message that carries the resource reservation result, so that the source node may determine, based on the resource reservation result in the resource reservation confirm message, whether the first forwarding path is successfully established.

Optionally, the determining an establishment result of the first forwarding path based on the return code field in the second message includes: when the resource reservation result indicated by the return code field is a failure in reservation, determining that the establishment result of the first forwarding path is that establishment fails; or when the resource reservation result indicated by the return code field is a success in reservation, determining that the establishment result of the first forwarding path is that establishment succeeds.

For example, only a last intermediate node (namely, the second intermediate node) on the first forwarding path may send, when local reservation succeeds, a resource reservation confirm message carrying a resource reservation result indicating a success in reservation. Any intermediate node on the first forwarding path may send, when local reservation fails, a resource reservation confirm message that carries a resource reservation result indicating a failure in reservation.

In the implementation, the source node may accurately determine, based on the resource reservation result carried in the received resource reservation confirm message, whether the first forwarding path is successfully established.

Optionally, the second message further includes a type-length-value TLV field, a V field of the TLV field includes an ordered set of an identifier indicating at least one link of the first forwarding path, and an identifier of each link in the at least one link is obtained based on a neighbor system identifier corresponding to the link and identifiers of interfaces of two neighboring intermediate nodes corresponding to the link.

In the implementation, the source node may determine the first forwarding path based on the ordered set of the identifier of the at least one link in the resource reservation path message.

Optionally, the V field of the TLV field further includes a path link index field, and the path link index field indicates an index of a link on which resource reservation is currently performed and that is in the at least one link of the first forwarding path.

In the implementation, the source node may determine, based on the index indicated by the path link index field in the resource reservation message, the link that is in the first forwarding path and that corresponds to the resource reservation result carried in the resource reservation message.

Optionally, when the resource reservation result indicated by the return code field is a success in reservation, the index indicated by the path link index field is an index of a last link in the at least one link of the first forwarding path.

Herein, that the index indicated by the link index field is an index of a last link on the first forwarding path meets: Only when the last intermediate node on the first forwarding path successfully reserves a resource locally, the resource reservation result carried in the resource reservation confirm message sent by the last intermediate node is a necessary condition of an application scenario of successful reservation.

Optionally, the return code field is included in the V field of the TLV field.

Optionally, the second message further includes the request source location identifier field, the request location identifier field, the request flow label field, the keep alive time field, the request source address field, and the request destination address field that are in the first message.

Optionally, after the sending the first message to the first intermediate node, the method further includes: sending the data packet, where a packet header of the data packet includes a topology identifier field, the topology identifier field indicates a type of a forwarding path corresponding to the data packet, the type includes a first type and a second type, and quality of service of the first forwarding path corresponding to the first type is higher than quality of service of a second forwarding path corresponding to the second type.

In the implementation, the topology identifier field is carried in the packet header of the data packet, so that forwarding behaviors with different quality of service on a data plane can be supported. For example, quality of service of forwarding based on the advanced topology (namely, the first forwarding path) is higher than quality of service of forwarding based on the basic topology (namely, the second forwarding path). In this way, the packet header has better extensibility, and communication quality is improved.

Optionally, when the first forwarding path is not established, the topology identifier field indicates that the type of the forwarding path corresponding to the data packet is the second type; or when the first forwarding path is successfully established, the topology identifier field indicates that the type of the forwarding path corresponding to the data packet is the first type.

In the implementation, when the first forwarding path is not established, the source node may first use a backup forwarding path used as the first forwarding path, namely, the second forwarding path, to perform forwarding, and when the first forwarding path is established, use the first forwarding path to perform forwarding. This can meet a requirement of immediate service communication and improve communication quality in a timely manner.

Optionally, when the topology identifier field indicates the first type, the packet header further includes a flow label field, the flow label field indicates a flow label of a data flow to which the data packet belongs, and the flow label is used to guide forwarding of the data packet.

For example, the flow label of the data flow may alternatively be referred to as an identifier of the data flow. In other words, the flow label of the data flow may identify the data flow.

In the implementation, the flow label carried in the flow label field in the packet header helps a node that receives the data packet identify the data flow to which the data packet belongs.

According to a fourth aspect, this application provides a method for establishing a resource reservation path, applied to a first intermediate node, where a source node is an end node that accesses the first intermediate node. The method includes: receiving a first message from the source node, where the first message is used to request to establish a first forwarding path from the source node to a destination node, and the first forwarding path meets a quality of service condition; and determining the first forwarding path based on the first message and sending a second message when a resource is successfully reserved for the first forwarding path locally, where the second message is used to notify a next hop of the first intermediate node on the first forwarding path to reserve a resource for the first forwarding path. A first type field in the first message indicates that a type of the first message is a resource reservation request message, and a second type field in the second message indicates that a type of the second message is a resource reservation path message.

The first intermediate node may be a network device having a routing and forwarding capability, for example, may be a wireless network device, or may be a router, a layer 3 switch (or referred to as a multi-layer switch), or the like, or may be a component that is used in the network device and that can implement the foregoing method. The component may be, for example, an integrated circuit, a line card, or a chip.

In the method, the first intermediate node locally calculates a reservation path (namely, the first forwarding path) based on the resource reservation request message after receiving the resource reservation request message from the source node, and sends the resource reservation path message to a next node on the reservation path only when the first intermediate node successfully reserves the resource for the reservation path locally, to notify the node to reserve a resource for the reservation path. In this way, a feasible solution of establishing a resource reservation path in response to a resource reservation request proposed by an end node in a network is provided.

Optionally, the first message further includes a request source location identifier field and a request location identifier field, the request source location identifier field indicates a network address of the first intermediate node, and the request location identifier field indicates a network address of a second intermediate node. The destination node is the second intermediate node or the destination node is an end node that accesses the second intermediate node. The determining the first forwarding path based on the first message includes: determining the first forwarding path based on the request source location identifier field and the request location identifier field.

In the implementation, the first intermediate node may quickly determine the to-be-established first forwarding path based on the request source location identifier field and the request location identifier field in the resource reservation request message. This helps improve efficiency of establishing a resource reservation path.

Optionally, the first message further includes a request flow label field, and the request flow label field indicates a flow label allocated by the source node to the first forwarding path.

Optionally, the first message further includes a keep alive time field, and the keep alive time field indicates keepalive duration of the first forwarding path.

Optionally, the first message further includes a request source address field and a request destination address field, the request source address field indicates a network address of the source node that requests to establish the first forwarding path, and the request destination address field indicates a network address of the destination node corresponding to the first forwarding path.

Optionally, the first message further includes at least one of the following fields:
a message length field indicating a length of the first message;
a transaction number field identifying that the source node sends the first message once; and
a link quality information type-length-value TLV field indicating a link quality requirement met by the first forwarding path.

For beneficial effect of the fields in the first message (namely, the resource reservation request message), refer to the descriptions of the beneficial effect of the corresponding fields in the first message in the second aspect. Details are not described herein again.

Optionally, the second message further includes a first type-length-value TLV field, a V field of the first TLV field includes a first return code field, and the first return code field indicates that a resource reservation result of the first forwarding path on the source node is a success in reservation.

Optionally, the V field of the first TLV field further includes an ordered set of an identifier indicating at least one link of the first forwarding path, and an identifier of each link in the at least one link is obtained based on a neighbor system identifier corresponding to the link and identifiers of interfaces of two neighboring intermediate nodes corresponding to the link.

Optionally, the V field of the first TLV field further includes a first path link index field, and the first path link index field indicates an index of a link on which resource reservation is currently performed and that is in the at least one link of the first forwarding path.

Optionally, the second message further includes the request source location identifier field, the request location identifier field, the request flow label field, the keep alive time field, the request source address field, and the request destination address field that are in the first message.

For beneficial effect of the fields in the second message (namely, the resource reservation path message), refer to the descriptions of the beneficial effect of the corresponding fields in the second message in the second aspect. Details are not described herein again.

Optionally, the method further includes: sending a third message to the source node when the resource fails to be locally reserved for the first forwarding path. A third type field in the third message indicates that a type of the third message is a resource reservation confirm message, and a second return code field in the third message indicates that the resource reservation result of the first forwarding path on the first intermediate node is a failure in reservation.

In the implementation, when failing to locally reserve the resource for the first forwarding path, the first intermediate node may send, to the source node, the resource reservation confirm message carrying the resource reservation result indicating a failure in reservation, so that the source node determines, based on the resource reservation confirm message, that the first forwarding path fails to be established.

Optionally, after the sending a second message, the method further includes: receiving a fourth message, where a third type field in the fourth message indicates that a type of the fourth message is a resource reservation confirm message, and a third return code field in the fourth message indicates a resource reservation result of the first forwarding path; obtaining the network address of the source node from a request source address field in the fourth message; and sending the fourth message to the source node based on the network address of the source node.

It can be learned that, when successfully reserving the resource locally, the first intermediate node may further receive a resource reservation confirm message that is sent by another intermediate node on the first forwarding path and that carries a resource reservation result. The another intermediate node on the first forwarding path may be, for example, the second intermediate node, or may be any intermediate node between the first intermediate node and the second intermediate node on the first forwarding path (when at least one intermediate node exists between the first intermediate node and the second intermediate node). This is not specifically limited herein.

In the implementation, when the first intermediate node receives the resource reservation confirm message sent by the another intermediate node on the first forwarding path, the first intermediate node forwards the resource reservation confirm message to the source node, so that the source node determines, based on the resource reservation confirm message, whether the first forwarding path is successfully established.

Optionally, the fourth message further includes a second type-length-value TLV field, a V field in the second TLV field includes the ordered set of the identifier indicating the at least one link of the first forwarding path, and the identifier of each link in the at least one link is obtained based on the neighbor system identifier corresponding to the link and the identifiers of the interfaces of the two neighboring intermediate nodes corresponding to the link.

Optionally, the V field in the second TLV field further includes a second path link index field, and the second path link index field indicates an index of a link on which resource reservation is currently performed and that is in the at least one link of the first forwarding path.

Optionally, when the resource reservation result indicated by the third return code field is a success in reservation, the index indicated by the second path link index field is an index of a last link in the at least one link of the first forwarding path.

Optionally, the third return code field is included in the V field in the second TLV field.

Optionally, the fourth message further includes the request source location identifier field, the request location identifier field, the request flow label field, the keep alive time field, the request source address field, and the request destination address field that are in the first message.

For effect of the fields in the fourth message (namely, the resource reservation confirm message), refer to the descriptions of the beneficial effect of the corresponding fields in the resource reservation confirm message in the second aspect or the third aspect. Details are not described herein again.

Optionally, the method further includes: generating a first forwarding table when the resource is successfully reserved for the first forwarding path locally. The first forwarding table includes a first forwarding entry. The first forwarding entry is a mapping relationship among the network address of the second intermediate node indicated by the request location identifier field in the first message, the network address of the source node indicated by the request source address field in the first message, the flow label indicated by the flow label field in the first message, a nexthop layer 2 identifier of the first intermediate node on the first forwarding path, an out interface identifier of the first intermediate node, a transport channel identifier TCID, and a logical channel identifier LCID.

Herein, when the first forwarding table is subsequently used, the first forwarding table is searched for a forwarding entry based on the source address field, the destination address field, and the flow label field in the packet header of the data packet, to support forwarding of the data packet on the first forwarding path.

Optionally, when the network address indicated by the request location identifier field in the first message is different from the network address indicated by the request destination address field in the first message, the first forwarding table further includes a second forwarding entry. The second forwarding entry is a mapping relationship among the network address of the destination node indicated by the request destination address field in the first message, the network address of the source node indicated by the request source address field in the first message, the flow label indicated by the flow label field in the first message, the nexthop layer 2 identifier of the first intermediate node on the first forwarding path, the out interface identifier of the first intermediate node, the transport channel identifier TCID, and the logical channel identifier LCID.

Herein, that the network address indicated by the request location identifier field in the first message is different from the network address indicated by the request destination address field in the first message indicates that the destination node is an end node in the network. In this case, the first forwarding table locally generated by the first intermediate node includes the second forwarding entry corresponding to the network address of the destination node and the first forwarding entry corresponding to the network address of the second intermediate node accessed by the destination node. In this way, when the destination address field in the packet header of the data packet indicates the network address of the destination node, the second forwarding entry may be used to guide forwarding of the data packet. When the destination address field in the packet header of the data packet indicates the network address of the second intermediate node accessed by the destination node, the first forwarding entry may be used to guide forwarding of the data packet.

Optionally, after the generating a first forwarding table, the method further includes: when time for which a forwarding entry in the first forwarding table is not accessed by a data packet reaches preset keep alive time, deleting the forwarding entry from the first forwarding table.

Herein, the preset keep alive time may be locally preset by the node, or may be obtained from the keep alive time field in the resource reservation request message sent by the source node. This is not specifically limited herein.

It can be learned that the forwarding entry in the first forwarding table is in a soft state. In other words, when traffic hits the forwarding entry (that is, a data packet accesses the forwarding entry), time to live of the forwarding entry may be refreshed, to keep the forwarding entry alive. When no traffic hits the forwarding entry within the preset keep alive time, the forwarding entry is aged. In other words, the corresponding forwarding entry is deleted from the first forwarding table. In comparison with a resource reservation protocol-traffic engineering RSVP-TE technology in which signaling needs to be periodically sent to keep a reservation path alive, in this application, a reservation path is kept alive through hitting of service traffic, and signaling does not need to be periodically sent. Therefore, network bandwidth consumption caused by frequent signaling transmission is greatly reduced.

According to a fifth aspect, this application provides a method for establishing a resource reservation path, applied to a second intermediate node. The method includes: receiving a first message, where a first type field in the first message indicates that a type of the first message is a resource reservation path message, and a first return code field in the first message indicates that a resource reservation result of a first forwarding path on a target node is a success in reservation, the target node is a previous intermediate node of the second intermediate node on the first forwarding path, the first message indicates the second intermediate node to reserve a resource for the first forwarding path, and the first forwarding path meets a quality of service QoS condition; and locally reserving the resource for the first forwarding path based on the first message.

The second intermediate node may be a network device having a routing and forwarding capability, for example, may be a wireless network device, or may be a router, a layer 3 switch (or referred to as a multi-layer switch), or the like, or may be a component that is used in the network device and that can implement the foregoing method. The component may be, for example, an integrated circuit, a line card, or a chip.

In the foregoing method, only when the previous intermediate node (namely, the target node) of the second intermediate node on the first forwarding path successfully reserves a resource for the first forwarding path locally, the second intermediate node receives the resource reservation path message sent by the target node, and locally reserves the resource for the first forwarding path based on the resource reservation path message. This helps improve efficiency of establishing the resource reservation path.

Optionally, the first message further includes a first type-length-value TLV field, a V field in the first TLV field includes an ordered set of an identifier indicating at least one link of the first forwarding path, and an identifier of each link in the at least one link is obtained based on a neighbor system identifier corresponding to the link and identifiers of interfaces of two neighboring intermediate nodes corresponding to the link.

Optionally, the V field in the first TLV field further includes a first path link index field, and the first path link index field indicates an index of a link on which resource reservation is currently performed and that is in the at least one link of the first forwarding path.

Optionally, the first message further includes a request source address field and a request destination address field, the request source address field indicates a network address of a source node that requests to establish the first forwarding path, and the request destination address field indicates a network address of a destination node corresponding to the first forwarding path.

Optionally, the first message further includes a request source location identifier field and a request location identifier field, the request source location identifier field indicates a network address of a first intermediate node accessed by the source node, and the request location identifier field indicates a network address of a last intermediate node on the first forwarding path.

Optionally, the first message further includes a request flow label field, and the request flow label field indicates a flow label allocated by the source node to the first forwarding path.

Optionally, the first message further includes a keep alive time field, and the keep alive time field indicates keepalive duration of the first forwarding path.

Optionally, the first message further includes at least one of the following fields:
a message length field indicating a length of the first message,
a transaction number field identifying that the source node sends the first message once; and
a link quality information type-length-value TLV field indicating a link quality requirement met by the first forwarding path.

For beneficial effect of the fields in the first message (namely, the resource reservation path message) received by the second intermediate node, refer to the descriptions of the beneficial effect of the corresponding fields in the resource reservation path message in the second aspect or the third aspect. Details are not described herein again.

Optionally, when the second intermediate node is not the last intermediate node on the first forwarding path, the method further includes: sending a second message when the resource is successfully reserved for the first forwarding path locally. The second message indicates a next hop of the second intermediate node on the first forwarding path to reserve a resource for the first forwarding path, and a second type field in the second message indicates that a type of the second message is the resource reservation path message, and a second return code field in the second message indicates that a resource reservation result of the first forwarding path on the second intermediate node is a success in reservation.

It can be learned that if the second intermediate node is not the last intermediate node on the first forwarding path, when successfully reserving the resource locally, the second intermediate node may send the resource reservation path message to a next intermediate node of the second intermediate node on the first forwarding path, to notify the next intermediate node to locally reserve a resource for the first forwarding path.

Optionally, when the second intermediate node is not the last intermediate node on the first forwarding path, the method further includes: sending, when the resource fails to be locally reserved for the first forwarding path, a third message to the first intermediate node accessed by the source node, where the source node is an end node that requests to establish the first forwarding path. A third type field in the third message indicates that a type of the third message is a resource reservation confirm message, and a third return code field in the third message indicates that a resource reservation result of the first forwarding path on the second intermediate node is a failure in reservation.

It can be learned that, if the second intermediate node is not the last intermediate node on the first forwarding path, when the second intermediate node fails to locally reserve the resource, the second intermediate node needs to send the resource reservation confirm message that carries the resource reservation result indicating a failure in reservation. Therefore, the source node that requests to establish the first forwarding path may determine, based on the resource reservation confirm message, that the first forwarding path fails to be established.

Optionally, when the second intermediate node is the last intermediate node on the first forwarding path, the method further includes: sending a fourth message, so that the source node that requests to establish the first forwarding path determines an establishment result of the first forwarding path based on a fourth return code field in the fourth message, where the fourth return code field indicates a resource reservation result of the first forwarding path on the second intermediate node, and a fourth type field in the fourth message indicates that a type of the fourth message is a resource reservation confirm message.

It can be learned that, if the second intermediate node is the last intermediate node on the first forwarding path, regardless of whether the second intermediate node successfully reserves the resource for the first forwarding path locally or fails to locally reserve the resource for the first forwarding path, the second intermediate node needs to send the resource reservation confirm message (namely, the fourth message) that carries the resource reservation result. Therefore, the source node that requests to establish the first forwarding path may determine, based on the resource reservation confirm message, whether the first forwarding path is successfully established.

Optionally, the fourth message further includes a second type-length-value TLV field, a V field in the second TLV field includes the ordered set of the identifier indicating the at least one link of the first forwarding path, and the identifier of each link in the at least one link is obtained based on the neighbor system identifier corresponding to the link and the identifiers of the interfaces of the two neighboring intermediate nodes corresponding to the link.

Optionally, the V field in the second TLV field further includes a second path link index field, and the second path link index field indicates that an index of a link on which resource reservation is currently performed and that is in the at least one link of the first forwarding path is an index of a last link in the at least one link.

Optionally, the fourth message further includes the request source location identifier field, the request location identifier field, the request flow label field, the keep alive time field, the request source address field, and the request destination address field that are in the first message.

For effect of the fields in the fourth message (namely, the resource reservation confirm message), refer to the descriptions of the beneficial effect of the corresponding fields in the resource reservation confirm message in the second aspect or the third aspect. Details are not described herein again.

Optionally, the method further includes: generating a first forwarding table when the resource is successfully reserved for the first forwarding path locally, where the first forwarding table includes a first forwarding entry. The first forwarding entry is a mapping relationship among the network address indicated by the request location identifier field in the first message, the network address indicated by the request source address field in the first message, the flow label indicated by the flow label field in the first message, a nexthop layer 2 identifier of the second intermediate node, an out interface identifier of the second intermediate node, a transport channel identifier TCID, and a logical channel identifier LCID.

It may be understood that, when the second intermediate node is not the last intermediate node on the first forwarding path, the nexthop layer 2 identifier of the second intermediate node is a nexthop layer 2 identifier of the second intermediate node on the first forwarding path. When the second intermediate node is the last intermediate node on the first forwarding path, the nexthop layer 2 identifier of the second intermediate node is a layer 2 identifier of the destination node.

Herein, when the first forwarding table is subsequently used, the first forwarding table is searched for a forwarding entry based on the source address field, the destination address field, and the flow label field in the packet header of the data packet, to support forwarding of the data packet on the first forwarding path.

Optionally, when the network address indicated by the request location identifier field in the first message is different from the network address indicated by the request destination address field in the first message, the first forwarding table further includes a second forwarding entry. The second forwarding entry is a mapping relationship among the network address indicated by the request destination address field in the first message, the network address indicated by the request source address field in the first message, the flow label indicated by the flow label field in the first message, the nexthop layer 2 identifier of the second intermediate node, the out interface identifier of the second intermediate node, the transport channel identifier TCID, and the logical channel identifier LCID.

Herein, that the network address indicated by the request location identifier field in the first message is different from the network address indicated by the request destination address field in the first message indicates that the destination node is an end node in a network. In this case, the network address indicated by the request location identifier field is a network address of the second intermediate node, and the network address indicated by the request destination address field is the network address of the destination node. In this way, when the destination address field in the packet header of the data packet indicates the network address of the destination node, the second forwarding entry may be used to guide forwarding of the data packet. When the destination address field in the packet header of the data packet indicates the network address of the second intermediate node accessed by the destination node, the first forwarding entry may be used to guide forwarding of the data packet.

Optionally, after the generating a first forwarding table, the method further includes: when time for which a forwarding entry in the first forwarding table is not accessed by a data packet reaches preset keep alive time, deleting the forwarding entry from the first forwarding table.

Herein, the preset keep alive time may be locally preset by the node, or may be obtained from the keep alive time field in the first message (namely, the resource reservation path message) received from a local node. This is not specifically limited herein.

It can be learned that the forwarding entry in the first forwarding table is in a soft state. In other words, when traffic hits the forwarding entry (that is, a data packet accesses the forwarding entry), time to live of the forwarding entry may be refreshed, to keep the forwarding entry alive. When no traffic hits the forwarding entry within the preset keep alive time, the forwarding entry is aged. In other words, the corresponding forwarding entry is deleted from the first forwarding table. In comparison with a resource reservation protocol-traffic engineering RSVP-TE technology in which signaling needs to be periodically sent to keep a reservation path alive, in this application, a reservation path is kept alive through hitting of service traffic, and signaling does not need to be periodically sent. Therefore, network bandwidth consumption caused by frequent signaling transmission is greatly reduced.

According to a sixth aspect, this application provides a communication apparatus. The apparatus includes: a receiving unit, configured to receive a data packet, where a packet header of the data packet includes a topology identifier field, the topology identifier field indicates a type of a forwarding path corresponding to the data packet, the type includes a first type and a second type, and quality of service of a first forwarding path corresponding to the first type is higher than quality of service of a second forwarding path corresponding to the second type; and a sending unit, configured to forward the data packet based on the topology identifier field.

Optionally, when the type indicated by the topology identifier field is the first type, the packet header further includes a flow label field, the flow label field indicates a flow label of a data flow to which the data packet belongs, and the flow label is used to guide forwarding of the data packet.

Optionally, the sending unit is specifically configured to: when the type indicated by the topology identifier field is the first type, send the data packet based on the first forwarding path.

Optionally, the sending unit is specifically configured to: when the first type corresponds to a first forwarding table, obtain a first forwarding entry from the first forwarding table based on a destination address field, a source address field, and the flow label field in the packet header; and send the data packet based on the first forwarding entry. The first forwarding entry is a mapping relationship among a network address indicated by the destination address field, a network address of a source node indicated by the source address field, the flow label indicated by the flow label field, a nexthop layer 2 identifier of a local node on the first forwarding path, an out interface identifier of the local node, a transport channel identifier TCID, and a logical channel identifier LCID.

Optionally, the sending unit is specifically configured to: when the topology identifier field indicates the first type, and it is detected that a next node of a local node on the first forwarding path is faulty or a link from the local node to the next node is faulty, change the type indicated by the topology identifier field in the packet header from the first type to the second type, and send a changed data packet based on the second forwarding path.

Optionally, the sending unit is specifically configured to: when the second type corresponds to a second forwarding table, obtain a second forwarding entry from the second forwarding table based on a destination address field in the packet header; and send the changed data packet based on the second forwarding entry. The second forwarding entry is a mapping relationship among a network address indicated by the destination address field, a nexthop layer 2 identifier of the local node on the second forwarding path, an out interface identifier of the local node, a transport channel identifier TCID, and a logical channel identifier LCID.

Optionally, the first forwarding path is established based on the method performed by a system in any one of the second aspect or the possible implementations of the second aspect.

According to a seventh aspect, this application provides a communication apparatus, where the apparatus is a source node or the communication apparatus is included in a source node, and the source node is an end node that accesses a first intermediate node. The apparatus includes: an obtaining unit, configured to obtain a first message, where the first message includes a first type field, a source location identifier field, and a location identifier field, the first type field indicates that a type of the first message is a resource reservation request message, the source location identifier field indicates a network address of the first intermediate node, and the location identifier field indicates a network address of a second intermediate node; and a sending unit, configured to send the first message to the first intermediate node, where the first message is used to request to establish a first forwarding path from the source node to a destination node, the first forwarding path meets a quality of service QoS condition, and the destination node is the second intermediate node or the destination node is an end node that accesses the second intermediate node.

Optionally, the obtaining unit is specifically configured to generate the first message based on a service requirement for sending a data packet to the destination node.

Optionally, the first message further includes a request flow label field, and the request flow label field indicates a flow label allocated by the source node to the first forwarding path.

Optionally, the first message further includes a keep alive time field, and the keep alive time field indicates keepalive duration of the first forwarding path.

Optionally, the first message further includes a request source address field and a request destination address field, the request source address field indicates a network address of the source node that requests to establish the first forwarding path, and the request destination address field indicates a network address of the destination node corresponding to the first forwarding path.

Optionally, the first message further includes at least one of the following fields:
a message length field indicating a length of the first message;
a transaction number field identifying that the source node sends the first message once; and
a link quality information type-length-value TLV field indicating a link quality requirement met by the first forwarding path.

Optionally, the obtaining unit is further configured to receive a second message from the first intermediate node, where a second type field of the second message indicates that a type of the second message is a resource reservation confirm message, the second message includes a return code field, and the return code field indicates a resource reservation result of the first forwarding path. The apparatus further includes a processing unit, configured to determine an establishment result of the first forwarding path based on the return code field in the second message.

Optionally, the processing unit is specifically configured to: when the resource reservation result indicated by the return code field is a failure in reservation, determine that the establishment result of the first forwarding path is that establishment fails; or when the resource reservation result indicated by the return code field is a success in reservation, determine that the establishment result of the first forwarding path is that establishment succeeds.

Optionally, the second message further includes a type-length-value TLV field, a V field of the TLV field includes an ordered set of an identifier indicating at least one link of the first forwarding path, and an identifier of each link in the at least one link is obtained based on a neighbor system identifier corresponding to the link and identifiers of interfaces of two neighboring intermediate nodes corresponding to the link.

Optionally, the V field of the TLV field further includes a path link index field, and the path link index field indicates an index of a link on which resource reservation is currently performed and that is in the at least one link of the first forwarding path.

Optionally, when the resource reservation result indicated by the return code field is a success in reservation, the index indicated by the path link index field is an index of a last link in the at least one link of the first forwarding path.

Optionally, the return code field is included in the V field of the TLV field.

Optionally, the second message further includes the request source location identifier field, the request location identifier field, the request flow label field, the keep alive time field, the request source address field, and the request destination address field that are in the first message.

Optionally, the sending unit is further configured to send the data packet, where a packet header of the data packet includes a topology identifier field, the topology identifier field indicates a type of a forwarding path corresponding to the data packet, the type includes a first type and a second type, and quality of service of the first forwarding path corresponding to the first type is higher than quality of service of a second forwarding path corresponding to the second type.

Optionally, when the first forwarding path is not established, the topology identifier field indicates that the type of the forwarding path corresponding to the data packet is the second type; or when the first forwarding path is successfully established, the topology identifier field indicates that the type of the forwarding path corresponding to the data packet is the first type.

Optionally, when the topology identifier field indicates the first type, the packet header further includes a flow label field, the flow label field indicates a flow label of a data flow to which the data packet belongs, and the flow label is used to guide forwarding of the data packet.

According to an eighth aspect, this application provides a communication apparatus, where the apparatus is a first intermediate node or the apparatus is included in a first intermediate node, and a source node is an end node that accesses the first intermediate node. The apparatus includes:
a receiving unit, configured to receive a first message from the source node, where the first message is used to request to establish a first forwarding path from the source node to a destination node, and the first forwarding path meets a quality of service condition;
a processing unit, configured to determine the first forwarding path based on the first message; and
a sending unit, configured to send a second message when a resource is successfully reserved for the first forwarding path locally, where the second message is used to notify a next hop of the first intermediate node on the first forwarding path to reserve a resource for the first forwarding path, a first type field in the first message indicates that a type of the first message is a resource reservation request message, and a second type field in the second message indicates that a type of the second message is a resource reservation path message.

Optionally, the first message further includes a request source location identifier field and a request location identifier field, the request source location identifier field indicates a network address of the first intermediate node, and the request location identifier field indicates a network address of a second intermediate node; and the destination node is the second intermediate node or the destination node is an end node that accesses the second intermediate node. The processing unit is specifically configured to determine the first forwarding path based on the request source location identifier field and the request location identifier field.

Optionally, the first message further includes a request flow label field, and the request flow label field indicates a flow label allocated by the source node to the first forwarding path.

Optionally, the first message further includes a keep alive time field, and the keep alive time field indicates keepalive duration of the first forwarding path.

Optionally, the first message further includes a request source address field and a request destination address field, the request source address field indicates a network address of the source node that requests to establish the first forwarding path, and the request destination address field indicates a network address of the destination node corresponding to the first forwarding path.

Optionally, the first message further includes at least one of the following fields:
a message length field indicating a length of the first message,
a transaction number field identifying that the source node sends the first message once; and
a link quality information type-length-value TLV field indicating a link quality requirement met by the first forwarding path.

Optionally, the second message further includes a first type-length-value TLV field, a V field of the first TLV field includes a first return code field, and the first return code field indicates that a resource reservation result of the first forwarding path on the source node is a success in reservation.

Optionally, the V field of the first TLV field further includes an ordered set of an identifier indicating at least one link of the first forwarding path, and an identifier of each link in the at least one link is obtained based on a neighbor system identifier corresponding to the link and identifiers of interfaces of two neighboring intermediate nodes corresponding to the link.

Optionally, the V field of the first TLV field further includes a first path link index field, and the first path link index field indicates an index of a link on which resource reservation is currently performed and that is in the at least one link of the first forwarding path.

Optionally, the second message further includes the request source location identifier field, the request location identifier field, the request flow label field, the keep alive time field, the request source address field, and the request destination address field that are in the first message.

Optionally, the sending unit is further configured to send a third message to the source node when the resource fails to be locally reserved for the first forwarding path. A third type field in the third message indicates that a type of the third message is a resource reservation confirm message, and a second return code field in the third message indicates that the resource reservation result of the first forwarding path on the first intermediate node is a failure in reservation.

Optionally, the receiving unit is further configured to receive a fourth message, where a third type field in the fourth message indicates that a type of the fourth message is a resource reservation confirm message, and a third return code field in the fourth message indicates a resource reservation result of the first forwarding path. The processing unit is further configured to obtain the network address of the source node from a request source address field in the fourth message. The sending unit is further configured to send the fourth message to the source node based on the network address of the source node.

Optionally, the fourth message further includes a second type-length-value TLV field, a V field in the second TLV field includes the ordered set of the identifier indicating the at least one link of the first forwarding path, and the identifier of each link in the at least one link is obtained based on the neighbor system identifier corresponding to the link and the identifiers of the interfaces of the two neighboring intermediate nodes corresponding to the link.

Optionally, the V field in the second TLV field further includes a second path link index field, and the second path link index field indicates an index of a link on which resource reservation is currently performed and that is in the at least one link of the first forwarding path.

Optionally, when the resource reservation result indicated by the third return code field is a success in reservation, the index indicated by the second path link index field is an index of a last link in the at least one link of the first forwarding path.

Optionally, the third return code field is included in the V field in the second TLV field.

Optionally, the fourth message further includes the request source location identifier field, the request location identifier field, the request flow label field, the keep alive time field, the request source address field, and the request destination address field that are in the first message.

Optionally, the processing unit is further configured to generate a first forwarding table when the resource is successfully reserved for the first forwarding path locally. The first forwarding table includes a first forwarding entry. The first forwarding entry is a mapping relationship among the network address of the second intermediate node indicated by the request location identifier field in the first message, the network address of the source node indicated by the request source address field in the first message, the flow label indicated by the flow label field in the first message, a nexthop layer 2 identifier of the first intermediate node on the first forwarding path, an out interface identifier of the first intermediate node, a transport channel identifier TCID, and a logical channel identifier LCID.

Optionally, when the network address indicated by the request location identifier field in the first message is different from the network address indicated by the request destination address field in the first message, the first forwarding table further includes a second forwarding entry. The second forwarding entry is a mapping relationship among the network address of the destination node indicated by the request destination address field in the first message, the network address of the source node indicated by the request source address field in the first message, the flow label indicated by the flow label field in the first message, the nexthop layer 2 identifier of the first intermediate node on the first forwarding path, the out interface identifier of the first intermediate node, the transport channel identifier TCID, and the logical channel identifier LCID.

Optionally, the processing unit is further configured to: when time for which a forwarding entry in the first forwarding table is not accessed by a data packet reaches preset keep alive time, delete the forwarding entry from the first forwarding table.

According to a ninth aspect, this application provides a communication apparatus, where the apparatus is a second intermediate node or the apparatus is included in a second intermediate node. The apparatus includes:
a receiving unit, configured to receive a first message, where a first type field in the first message indicates that a type of the first message is a resource reservation path message, and a first return code field in the first message indicates that a resource reservation result of a first forwarding path on a target node is a success in reservation, the target node is a previous intermediate node of the second intermediate node on the first forwarding path, the first message indicates the second intermediate node to reserve a resource for the first forwarding path, and the first forwarding path meets a quality of service QoS condition; and
a processing unit, configured to locally reserve the resource for the first forwarding path based on the first message.

Optionally, the first message further includes a first type-length-value TLV field, a V field in the first TLV field includes an ordered set of an identifier indicating at least one link of the first forwarding path, and an identifier of each link in the at least one link is obtained based on a neighbor system identifier corresponding to the link and identifiers of interfaces of two neighboring intermediate nodes corresponding to the link.

Optionally, the V field in the first TLV field further includes a first path link index field, and the first path link index field indicates an index of a link on which resource reservation is currently performed and that is in the at least one link of the first forwarding path.

Optionally, the first message further includes a request source address field and a request destination address field, the request source address field indicates a network address of a source node that requests to establish the first forwarding path, and the request destination address field indicates a network address of a destination node corresponding to the first forwarding path.

Optionally, the first message further includes a request source location identifier field and a request location identifier field, the request source location identifier field indicates a network address of a first intermediate node accessed by the source node, and the request location identifier field indicates a network address of a last intermediate node on the first forwarding path.

Optionally, the first message further includes a request flow label field, and the request flow label field indicates a flow label allocated by the source node to the first forwarding path.

Optionally, the first message further includes a keep alive time field, and the keep alive time field indicates keepalive duration of the first forwarding path.

Optionally, the first message further includes at least one of the following fields:
a message length field indicating a length of the first message,
a transaction number field identifying that the source node sends the first message once; and
a link quality information type-length-value TLV field indicating a link quality requirement met by the first forwarding path.

Optionally, the apparatus further includes a sending unit. When the second intermediate node is not the last intermediate node on the first forwarding path, the sending unit is configured to send a second message when the resource is successfully reserved for the first forwarding path locally. The second message indicates a next hop of the second intermediate node on the first forwarding path to reserve a resource for the first forwarding path, and a second type field in the second message indicates that a type of the second message is the resource reservation path message, and a second return code field in the second message indicates that a resource reservation result of the first forwarding path on the second intermediate node is a success in reservation.

Optionally, the sending unit is further configured to: when the second intermediate node is not the last intermediate node on the first forwarding path, and the resource fails to be locally reserved for the first forwarding path, send a third message to the first intermediate node accessed by the source node, where the source node is an end node that requests to establish the first forwarding path. A third type field in the third message indicates that a type of the third message is a resource reservation confirm message, and a third return code field in the third message indicates that a resource reservation result of the first forwarding path on the second intermediate node is a failure in reservation.

Optionally, the sending unit is further configured to: when the second intermediate node is the last intermediate node on the first forwarding path, send a fourth message, so that the source node that requests to establish the first forwarding path determines an establishment result of the first forwarding path based on a fourth return code field in the fourth message, where the fourth return code field indicates a resource reservation result of the first forwarding path on the second intermediate node, and a fourth type field in the fourth message indicates that a type of the fourth message is a resource reservation confirm message.

Optionally, the fourth message further includes a second type-length-value TLV field, a V field in the second TLV field includes the ordered set of the identifier indicating the at least one link of the first forwarding path, and the identifier of each link in the at least one link is obtained based on the neighbor system identifier corresponding to the link and the identifiers of the interfaces of the two neighboring intermediate nodes corresponding to the link.

Optionally, the V field in the second TLV field further includes a second path link index field, and the second path link index field indicates that an index of a link on which resource reservation is currently performed and that is in the at least one link of the first forwarding path is an index of a last link in the at least one link.

Optionally, the fourth message further includes the request source location identifier field, the request location identifier field, the request flow label field, the keep alive time field, the request source address field, and the request destination address field that are in the first message.

Optionally, the processing unit is further configured to generate a first forwarding table when the resource is successfully reserved for the first forwarding path locally, where the first forwarding table includes a first forwarding entry. The first forwarding entry is a mapping relationship among the network address indicated by the request location identifier field in the first message, the network address indicated by the request source address field in the first message, the flow label indicated by the flow label field in the first message, a nexthop layer 2 identifier of the second intermediate node, an out interface identifier of the second intermediate node, a transport channel identifier TCID, and a logical channel identifier LCID.

Optionally, when the network address indicated by the request location identifier field in the first message is different from the network address indicated by the request destination address field in the first message, the first forwarding table further includes a second forwarding entry. The second forwarding entry is a mapping relationship among the network address indicated by the request destination address field in the first message, the network address indicated by the request source address field in the first message, the flow label indicated by the flow label field in the first message, the nexthop layer 2 identifier of the second intermediate node, the out interface identifier of the second intermediate node, the transport channel identifier TCID, and the logical channel identifier LCID.

Optionally, the processing unit is further configured to: when time for which a forwarding entry in the first forwarding table is not accessed by a data packet reaches preset keep alive time, delete the forwarding entry from the first forwarding table.

According to a tenth aspect, this application provides a communication apparatus. The apparatus includes a processor and a memory. The memory is configured to store program instructions. The processor invokes the program instructions in the memory, so that the apparatus performs the method according to any one of the first aspect or the possible implementations of the first aspect, or performs the method according to any one of the third aspect or the possible implementations of the third aspect, or performs the method according to any one of the fourth aspect or the possible implementations of the fourth aspect, or performs the method according to any one of the fifth aspect or the possible implementations of the fifth aspect.

According to an eleventh aspect, this application provides a computer-readable storage medium, including computer instructions. When the computer instructions are run by a processor, the method according to any one of the first aspect or the possible implementations of the first aspect is implemented, or the method according to any one of the third aspect or the possible implementations of the third aspect is performed, or the method according to any one of the fourth aspect or the possible implementations of the fourth aspect is performed, or the method according to any one of the fifth aspect or the possible implementations of the fifth aspect is performed.

According to a twelfth aspect, this application provides a computer program product. When the computer program product is executed by a processor, the method according to any one of the first aspect or the possible embodiments of the first aspect is implemented, or the method according to any one of the third aspect or the possible embodiments of the third aspect is performed, or the method according to any one of the fourth aspect or the possible embodiments of the fourth aspect is performed, or the method according to any one of the fifth aspect or the possible embodiments of the fifth aspect is performed.

For example, the computer program product may be a software installation package.

According to a thirteenth aspect, this application provides a vehicle. The vehicle includes the apparatus according to any one of the seventh aspect or the possible implementations of the seventh aspect, or includes the apparatus according to any one of the tenth aspect or the possible implementations of the tenth aspect.

According to a fourteenth aspect, this application provides a terminal. The terminal includes the apparatus according to any one of the seventh aspect or the possible implementations of the seventh aspect, or includes the apparatus according to any one of the tenth aspect or the possible implementations of the tenth aspect.

Examples of the terminal include but are not limited to: a smart home device (for example, a television, a robotic vacuum cleaner, a smart desk lamp, a speaker system, an intelligent lighting system, an electrical control system, home background music, a home theater system, an intercom system, and video surveillance), a smart transportation device (for example, an automobile, a ship, an unmanned aerial vehicle, a train, a van, and a truck), a smart manufacturing device (for example, a robot, an industrial device, smart logistics, and a smart factory), and a smart terminal (a mobile phone, a computer, a tablet, a palmtop computer, a desktop computer, a headset, a speaker, a wearable device, a vehicle-mounted device, a virtual reality device, an augmented reality device, and the like).

### BRIEF DESCRIPTION OF DRAWINGS

FIG. 1 is a diagram of a system architecture according to an embodiment of this application;
FIG. 2 is a diagram of a format of a resource reservation message according to an embodiment of this application;
FIG. 3 is a diagram of a format of a resource reservation path TLV according to an embodiment of this application;
FIG. 4 is a schematic flowchart of a method for establishing a resource reservation path according to an embodiment of this application;
FIG. 5 is a diagram of a network topology according to an embodiment of this application;
FIG. 6A is a diagram of a format of a resource reservation request message according to an embodiment of this application;
FIG. 6B is a diagram of a format of a resource reservation path message according to an embodiment of this application;
FIG. 6C is a diagram of a format of a resource reservation request acknowledgment message according to an embodiment of this application;
FIG. 6D is a diagram of a format of a resource reservation confirm message according to an embodiment of this application;
FIG. 6E is a diagram of a format of a resource reservation path message according to an embodiment of this application;
FIG. 6F is a diagram of a format of a resource reservation path confirm message according to an embodiment of this application;
FIG. 6G is a diagram of a format of a resource reservation confirm message according to an embodiment of this application;
FIG. 6H is a diagram of a format of a resource reservation confirm message according to an embodiment of this application;
FIG. 6I is a diagram of a format of a resource reservation confirm message according to an embodiment of this application;
FIG. 6J is a diagram of a format of a resource reservation confirm acknowledgment message according to an embodiment of this application;
FIG. 7 is a diagram of a format of a packet header according to an embodiment of this application;
FIG. 8 is a schematic flowchart of a packet sending method according to an embodiment of this application;
FIG. 9 is a diagram of a network topology according to an embodiment of this application;
FIG. 10A is a diagram of a structure of a communication apparatus according to an embodiment of this application;
FIG. 10B is a diagram of a structure of a communication apparatus according to an embodiment of this application;
FIG. 10C is a diagram of a structure of a communication apparatus according to an embodiment of this application; and
FIG. 11 is a diagram of a structure of a communication device according to an embodiment of this application.

### DESCRIPTION OF EMBODIMENTS

It should be noted that prefix words such as "first" and "second" are used in this application only to distinguish between different described objects, and have no limitation on locations, an order, priorities, a quantity, content, or the like of the described objects. For example, if the described objects are "fields", ordinal numbers before "field" in a "first field" and a "second field" do not limit locations or an order of the "fields", and "first" and "second" do not limit whether "field" modified by "first" and "field" modified by "second" are in a same message, and do not limit an order of the "first field" and the "second field". For another example, if the described objects are "levels", ordinal numbers before "level" in a "first level" and a "second level" do not limit priorities of "levels". For another example, a quantity of described objects is not limited by a prefix word, and may be one or more. A "first device" is used as an example. A quantity of "devices" may be one or more. In addition, objects modified by different prefix words may be the same or different. For example, if a described object is a "device", a "first device" and a "second device" may be a same device, devices of a same type, or devices of different types. For another example, if a described object is "information", "first information" and "second information" may be information of same content or information of different content. In a word, a use of the prefix word used to distinguish described objects in embodiments of this application does not constitute a limitation on the described objects. For descriptions of the described objects, refer to the context descriptions in claims or embodiments, and a use of such a prefix word should not constitute a redundant limitation.

It should be noted that, in embodiments of this application, a description manner like "at least one (or at least one piece) of a1, a2, ..., and an" is used, including a case in which any one of a1, a2, ..., and an exists alone, and also including a case of any combination of a1, a2, ..., and an. Each case may exist alone. For example, a description manner of "at least one of a, b, and c" includes a case of a single a, a single b, a single c, a combination of a and b, a combination of a and c, a combination of b and c, or a combination of a, b, and c.

The following describes technical solutions of embodiments in this application with reference to accompanying drawings.

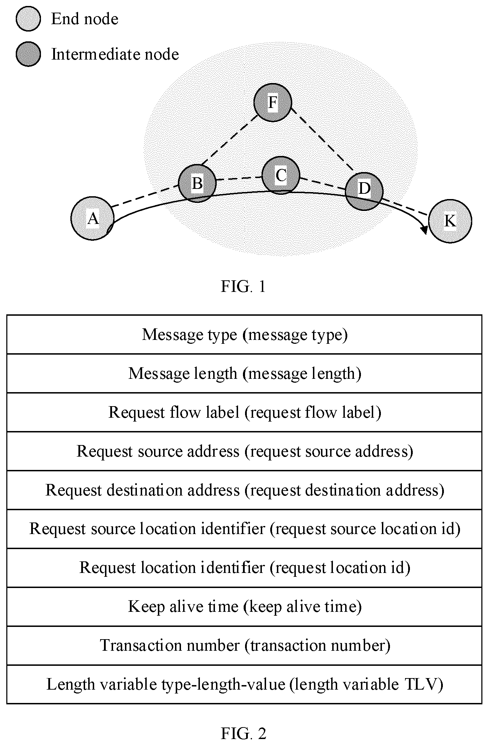

Refer to FIG. 1. FIG. 1 is a diagram of an architecture of a communication system according to an embodiment of this application. The communication system is configured to establish a resource reservation path and forward a data packet (or referred to as traffic) in network communication. The communication system includes at least one end node and at least one intermediate node, where the at least one intermediate node forms a backbone network, and each end node in the at least one end node accesses the network through one intermediate node in the at least one intermediate node.

For example, the end node may alternatively be referred to as a wireless end system (wireless end system, WES), and the intermediate node may be referred to as a wireless intermediate system (wireless intermediate system, WIS). In some possible embodiments, an intermediate node connected to an end node may alternatively be referred to as an access point of the end node, or a WIS directly connected to the end node. The WES is movable. For example, the WES is migrated from one WIS to another WIS in the network, and the WIS is generally not moved.

In FIG. 1, the at least one end node includes, for example, a node A and a node K. The at least one intermediate node includes, for example, a node B, a node C, a node D, and a node F. The node A accesses the network through the node B, and the node K accesses the network through the node D.

For example, in FIG. 1, before the node A sends a data packet to the node K, the node A initiates a resource reservation request message to the node B, the node B calculates a to-be-established first reservation path as B→C→D based on the resource reservation request message, and the first reservation path meets a quality of service condition. If the node B successfully reserves a resource for the first reservation path locally, the node B sends a resource reservation path message to the node C, so that the node C locally reserves a resource for the first reservation path, where the resource reservation path message carries the first reservation path. In this way, an intermediate node on the first reservation path may notify, based on a resource reservation path message, a next intermediate node of the intermediate node on the first reservation path to locally reserve a resource for the first reservation path, and when a last intermediate node (for example, the node D) on the first reservation path successfully reserves a resource locally, the node D replies with a resource reservation result confirm message to the node A through the node B, to notify that the first reservation path is successfully established. For a specific resource reservation process of the first reservation path, refer to descriptions in the following method embodiments. Details are not described herein.

After the first reservation path is established, data exchange between the end node and the backbone network or data exchange between the end node and end nodes may be implemented through forwarding operations between a plurality of intermediate nodes. For example, in FIG. 1, each intermediate node may be configured to forward a packet. For example, the node A sends a data packet to the node K, and the data packet of the node A may be forwarded to the node K through the first reservation path B→C→D. It may be understood that the node A is used as a start sending node of the data packet, and may be referred to as a source node; and the node K is used as a final receiving node of the data packet, and may be referred to as a destination node.

The intermediate node is a network device having a routing and forwarding capability, for example, may be a router, a layer 3 switch (or referred to as a multi-layer switch), or the like. The intermediate node may alternatively be a component in a router or a component in a layer 3 switch. The component may be, for example, a board, a line card, or a chip. In some possible embodiments, the network device may be a wireless network device.

The end node is an electronic device having a communication capability. The end node may be, for example, an independent device like a handheld terminal, a vehicle, a vehicle-mounted device, a network side device, user equipment, an access terminal, a subscriber unit, a subscriber station, a mobile station, a mobile console, a remote station, a remote terminal, a wireless communication device, a user agent, or a user apparatus, or may be a component (for example, a chip or an integrated circuit) included in an independent device. The end node may be any possible intelligent terminal device (for example, a mobile phone), an intelligent transportation device (for example, a vehicle or an unmanned aerial vehicle), an intelligent manufacturing device, a smart home device (for example, a large screen or a speaker), or the like.

For example, when the end node is a vehicle-mounted device, the end node may be a vehicle cockpit domain (cockpit domain) device or a module in a vehicle cockpit domain device, for example, one or more of modules such as a cockpit domain controller (cockpit domain controller, CDC), a camera, a screen, a microphone, a speaker, an electronic key, and a keyless access and startup system controller. In a vehicle, the end node may alternatively be a battery management system (battery management system, BMS), a battery control unit (battery control unit, BCU) in a BMS, a battery monitoring unit (battery monitoring unit, BMU) in a BMS, or a battery in a battery pack.

For example, when the end node is a handheld terminal, the end node may be a mobile phone (mobile phone), a wearable device, a tablet computer (pad), a computer (for example, a notebook computer or a palmtop computer) with a data receiving and sending function, or the like.

The communication system shown in FIG. 1 may be applied to a plurality of application scenarios, for example, the following application scenarios: mobile internet (mobile internet, MI), industrial control (industrial control), self driving (self driving), transportation safety (transportation safety), internet of things (internet of things, IoT), a smart city (smart city), a smart home (smart home), and the like.

The communication system shown in FIG. 1 may be used in a plurality of types of networks, for example, used in one or more of the following types of networks: SparkLink (SparkLink), a long term evolution (long term evolution, LTE) network, a 5th generation mobile communication technology (5th generation mobile communication technology, 5G), a wireless local area network (for example, Wi-Fi), Bluetooth (Bluetooth, BT), Zigbee (Zigbee), a vehicle-mounted short-range wireless communication network, or the like.

Herein, a network address of an end node and a network address of an intermediate node each are a network layer short address, a length of a network address may be 2 bytes (namely, 16 bits), and the network address may be used for addressing in a corresponding communication system. For example, in the SparkLink communication system, the address type of the network address of the end node and the address type of the network address of the intermediate node may be SparkLink network addresses. It may be understood that the SparkLink network address is another address type different from an IP address.

It may be understood that the end node and the intermediate node each are a node, and the node is a name of an electronic device having a communication capability. In some application scenarios or some network types, a name of a device having a similar communication capability may not be referred to as a node, for example, may be referred to as a network device. This is not specifically limited herein.

It should be noted that FIG. 1 is merely an example of an architectural diagram, but a quantity of network elements included in the system shown in FIG. 1 is not limited. Although not shown in FIG. 1, another functional entity may further be included in FIG. 1 in addition to the function entities shown in FIG. 1. In addition, a method provided in embodiments of this application may be applied to the communication system shown in FIG. 1. Certainly, the method provided in embodiments of this application may also be applied to another communication system. This is not limited in embodiments of this application.

Based on the diagram of the architecture shown in FIG. 1, an embodiment of this application provides a resource reservation method, to establish a resource reservation path in a network, and effectively reduce signaling consumption in the process of establishing the resource reservation path, thereby reducing bandwidth consumption, and helping improve network communication quality. The method for establishing a resource reservation path provided in embodiments of this application is implemented based on a predefined resource reservation message.

The following specifically describes, based on FIG. 2, a resource reservation message defined in embodiments of this application. FIG. 2 is a diagram of a format of a resource reservation message according to an embodiment of this application.

In this embodiment of this application, the resource reservation message includes a message type (message type) field, and the message type field indicates a type of the resource reservation message. The following six types of resource reservation messages are mainly defined herein:
(1) When the message type field is set to a first value (for example, 1), it indicates that the type of the resource reservation message is a resource reservation request (resource reserved request, RR) message.

Generally, a source node having a service requirement sets a message type field in a resource reservation message to a first value.

Herein, the resource reservation request message is used to request a receive end of the resource reservation request message to establish a reservation path from the source node to a destination node, where the reservation path meets a quality of service QoS condition. The quality of service QoS condition includes one or more of a bandwidth being greater than a first preset threshold, a delay being less than a second preset threshold, a packet loss rate being less than a third preset threshold, a delay jitter being less than a fourth preset threshold, and the like.

(2) When the message type field is set to a second value (for example, 2), it indicates that the type of the resource reservation message is a resource reservation request acknowledgment (resource reserved request ACK, RRA) message.

The RRA message is a response to an RR message, and the RRA message is used by a receive end of the RR message to notify a sending end of the RR message that the RR message has been received, to ensure reliability of the message.

(3) When the message type field is set to a third value (for example, 3), it indicates that the type of the resource reservation message is a resource reservation path (resource reserved path, RP) message.

Herein, when a receive end of the resource reservation request message successfully reserves a resource for a reservation path locally, the receive end sends the resource reservation path message to a next intermediate node on the reservation path. The resource reservation path message carries an ordered set of an identifier indicating at least one link of the reservation path. The reservation path is calculated by the receive end of the resource reservation request message based on the quality of service condition.

(4) When the message type field is set to a fourth value (for example, 4), it indicates that the type of the resource reservation message is a resource reservation path acknowledgment (resource reserved path ACK, RPA) message.

The RPA message is a response to an RP message, and the RPA message is used by a receive end of the RP message to notify a sending end of the RP message that the RP message has been received, to ensure reliability of the message.

(5) When the message type field is a fifth value (for example, 5), it indicates that the type of the resource reservation message is a resource reservation confirm (resource reserved confirm, RC) message.

Herein, a source node may determine an establishment result of a reservation path based on the resource reservation confirm message.

For example, when any intermediate node on the reservation path fails to locally reserve a resource for the reservation path, the intermediate node may feed back, to the source node, a resource reservation confirm message that carries a resource reservation result, and the resource reservation result indicates that reservation fails. Therefore, the source node may determine, based on the resource reservation confirm message, that the reservation path fails to be established.

For another example, when each intermediate node on the reservation path successfully reserves a resource for the reservation path locally, a last intermediate node on the reservation path may feed back, to the source node, a resource reservation confirm message that carries a resource reservation result, and the resource reservation result indicates that reservation succeeds. Therefore, the source node may determine, based on the resource reservation confirm message, that the reservation path is successfully established.

(6) When the message type field is set to a sixth value (for example, 6), it indicates that the type of the resource reservation message is a resource reservation confirm acknowledgment (resource reserved confirm ACK, RCA) message.

The RCA message is a response to an RC message, and the RCA message is used by a receive end of the RC message to notify a sending end of the RC message that the RC message has been received, to ensure reliability of the message.

In embodiments of this application, the resource reservation message further includes a request source location identifier (request source location id) field, and the request source location identifier field indicates a network location identifier of a source node that applies to establish a reservation path. In some possible embodiments, the network location identifier may alternatively be understood as an access location identifier.

For example, when the source node is an end node in a network, the network location identifier of the source node is a network address of a first intermediate node connected to the source node. When the source node is an intermediate node in the network, the network location identifier of the source node is a network address of the source node.

In embodiments of this application, the resource reservation message further includes a request location identifier (request location id) field, and the request location identifier field indicates a network location identifier of the destination node corresponding to the reservation path.

For example, when the destination node is an end node in the network, the network location identifier of the destination node is a network address of a second intermediate node connected to the destination node. When the destination node is an intermediate node in the network, the network location identifier of the destination node is a network address of the destination node.

In embodiments of this application, the resource reservation message further includes a request source address (request source address) field and a request destination address (request destination address) field. The request source address field indicates a network address of the source node that applies to establish the reservation path, and the request destination address field indicates a network address of the destination node corresponding to the reservation path.

In some possible embodiments, the resource reservation message further includes at least one of the following fields:
Request flow label (request flow label): This field indicates a flow label allocated to the reservation path, namely, an identifier of a data flow to which the reservation path belongs.

Keep alive time (keep alive time): This field indicates keep alive time of the reservation path.

Message length (message length): This field indicates a length of the current resource reservation message.

Transaction number (transaction number): This field identifies that the source node sends the resource reservation message once.

Length variable type-length-value TLV: This field may be used to carry other information, for example, at least one of a link quality requirement, a quality of service QoS condition, link information of the reservation path, and the like. When the length variable TLV field carries the quality of service condition or the link quality requirement, the field may be referred to as a link quality information TLV field. When the length variable TLV field carries the link information of the reservation path, the field may be referred to as a resource reservation path TLV field.

A quantity of length variable TLV fields in the resource reservation message is not limited in embodiments of this application. For example, the quantity of length variable TLV fields may be 0, or the quantity of length variable TLV fields may be 1, that is, the link quality information TLV field or the resource reservation path TLV field is included. The quantity of length variable TLV fields may alternatively be 2, that is, the link quality information TLV field and the resource reservation path TLV field are included.

Whether the length variable TLV field exists is related to a value of the message type field.

For example, when the value of the message type field is the second value (corresponding to the RRA message), the fourth value (corresponding to the RPA message), or the sixth value (corresponding to the RCA message), the length variable TLV field may be a default value.

For another example, when the value of the message type field is the first value (corresponding to the RR message), the resource reservation message may include the link quality information TLV field, and the field indicates the quality of service condition proposed by the source node, but the resource reservation message does not include the resource reservation path TLV field.

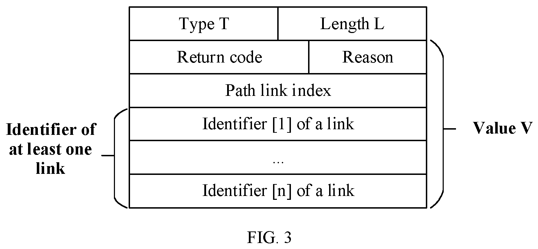

For another example, the resource reservation message includes the resource reservation path TLV field only when the value of the message type field is the third value (corresponding to the RP message) or the fifth value (corresponding to the RC message). For specific descriptions of the resource reservation path TLV field, refer to the following descriptions of an embodiment in FIG. 3. Details are not described herein.

Refer to FIG. 3. FIG. 3 is a diagram of a format of a resource reservation path TLV field according to an embodiment of this application. The resource reservation path TLV field includes a type (type) field, a length (length) field, and a value V field. The type T field indicates a type of the resource reservation path TLV, the length L field indicates a length of the resource reservation path TLV, and the V field indicates content of the resource reservation path TLV.

In FIG. 3, the V field includes an ordered set of an identifier (link ID) of at least one link of a reservation path. An identifier of each link in the at least one link is obtained based on a neighbor system identifier corresponding to the link and identifiers of interfaces of two neighboring intermediate nodes corresponding to the link.

For example, it is assumed that the reservation path is B→C→D in FIG. 1. The reservation path has two links, where a link 1 is a link BC, "1" is an index of the link BC, a link 2 is a link CD, and "2" is an index of the link CD.

The link BC is used as an example. An identifier of the link BC is obtained based on a neighbor system identifier corresponding to the link BC, an identifier of an interface of a node B, and an identifier of an interface of a node C. The neighbor system identifier corresponding to the link BC identifies the node C, and may be preconfigured by a user, or may be obtained based on a device identifier of the node C. The node C is a neighboring node of the node B. Neighboring nodes are names of two directly connected nodes. For example, the neighbor system identifier corresponding to the link BC may be a layer 2 identifier (layer 2 identifier, L2ID) of the node C.

For example, a format of the identifier of the link BC is XXXX.XXXX.XXXX.YYZZ, where XXXX.XXXX.XXXX represents the layer 2 identifier of the node C, YY represents the identifier of the interface of the node B, and ZZ represents the identifier of the interface of the node C.

In FIG. 3, the V field further includes a path node index (path node index) field. The path node index field indicates an index of a link on which resource reservation is currently performed and that is in the at least one link of the reservation path.

In FIG. 3, the V field further includes a return code (return code) field. The return code field indicates a resource reservation result of the reservation path on a transmit end of an RC message.

For example, a length of the return code field may be 1 bit. When a value of the return code field is "0", the resource reservation result is a success in reservation. When the value of the return code field is "1", the resource reservation result is a failure in reservation.

For another example, when a length of the return code field is 2 bits, and a value of the return code field is "00", the resource reservation result is unallocated; or when a value of the return code field is "01", the resource reservation result is a success in reservation; or when a value of the return code field is "10", the resource reservation result is a failure in reservation; or when a value of the return code field is "11", the resource reservation result is reserved.

Optionally, in FIG. 3, the V field may further include a reason (reason) field, and the reason field indicates a reason why a resource fails to be locally reserved on the transmit end of the RC message for the reservation path.

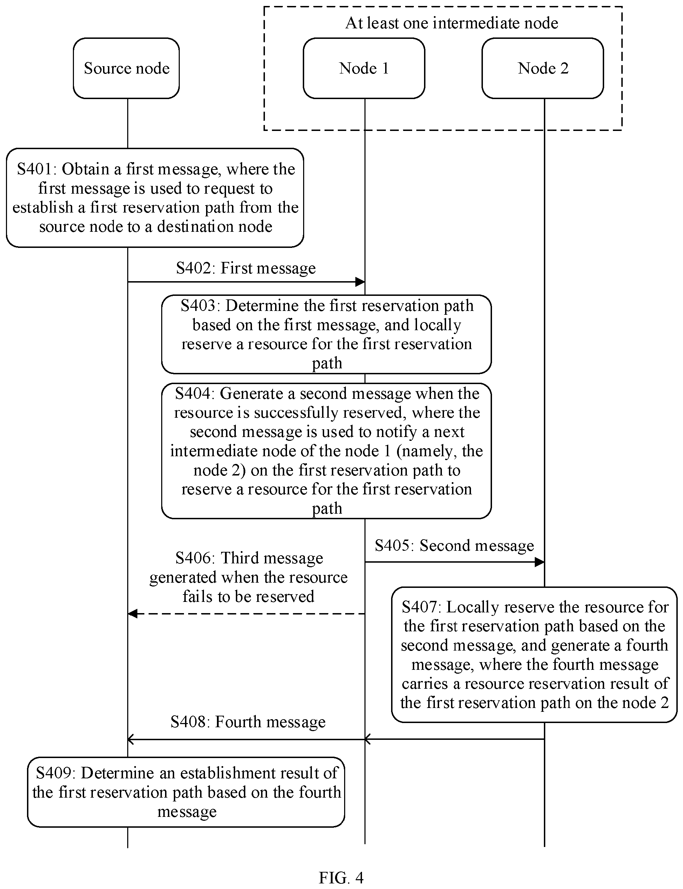

According to the message format of the resource reservation message shown in FIG. 1, the following describes a method for establishing a resource reservation path. Refer to FIG. 4. FIG. 4 shows a method for establishing a resource reservation path according to an embodiment of this application.

The method may be applied to a communication system including a source node and at least one intermediate node on a first reservation path, where the source node is a node that applies to establish the first reservation path from the source node to a destination node, and the at least one intermediate node includes a node 1 and a node 2. Herein, an example in which the first reservation path includes two intermediate nodes is used. However, a quantity of intermediate nodes on the first reservation path is not limited to only 2 in this embodiment of this application. The source node is an end node that accesses the node 1, and the node 2 is a last intermediate node on the first reservation path. It may be understood that, when the destination node is an intermediate node in a network, the destination node is the node 2. When the destination node is an end node in the network, the destination node is an end node that accesses the network through the node 2.

The method includes but is not limited to the following steps.

S401: The source node obtains a first message, where the first message is used to request to establish the first reservation path from the source node to the destination node.

In an implementation, that the source node obtains a first message may be: The source node generates the first message.

In another implementation, that the source node obtains a first message may be: The source node generates the first message based on a service requirement of sending a data packet to the destination node. In other words, there is a corresponding trigger condition for the source node to generate the first message, that is, when there is the service requirement, generation of the first message is triggered.

In embodiments of this application, the first message includes a first type field, a request source location identifier field, and a request location identifier field. The first type field indicates that a type of the first message is a resource reservation request message (namely, the RR message in embodiments in FIG. 2), the request source location identifier field indicates a network address of the node 1, and the request location identifier field indicates a network address of the node 2. The source node is an end node that accesses the node 1, and the destination node is the node 2 or the destination node is an end node that accesses the node 2.

It can be learned that a network location or an access location of the source node may be determined based on the request source location identifier field, and a network location or an access location of the destination node may be determined based on the request location identifier field.

In embodiments of this application, the first message further includes a request source address field and a request destination address field. The request source address field indicates the network address of the source node, and the request destination address field indicates the network address of the destination node. Herein, the request source address field and the request destination address field may be used to generate a forwarding entry of a subsequent node.

In some possible embodiments, the first message further includes a request flow label field. The request flow label field indicates a flow label allocated by the source node to the first reservation path, and may also be understood as a flow label (or referred to as an identifier) of a data flow to which a data packet for which traffic is forwarded based on the first reservation path belongs.

In some possible embodiments, the first message further includes one or more of the following fields:
a keep alive time field (namely, the keepalive time field shown in FIG. 2) indicating keepalive duration of the first reservation path;
a message length field (namely, the message length field shown in FIG. 2) indicating a length of the first message,
a transaction number field (namely, the transaction number field shown in FIG. 2) identifying that the source node sends the first message once; and
a link quality information type-length-value TLV field (namely, the length variable TLV field shown in FIG. 2) used to carry a link quality requirement met by the first reservation path.

Herein, that the first reservation path meets the link quality requirement means that the first reservation path meets a quality of service condition. In some possible embodiments, the link quality requirement may alternatively be the quality of service condition. For example, the link quality requirement includes but is not limited to one or more of a bandwidth being greater than a first preset threshold, a delay being less than a second preset threshold, a packet loss rate being less than a third preset threshold, a delay jitter being less than a fourth preset threshold, and the like.

S402: The source node sends the first message to the node 1.

Correspondingly, the node 1 receives the first message from the source node.

In an implementation, the first message may be carried in a packet header of a packet 1. A source address field in the packet header indicates the network address of the source node, and a destination address field in the packet header indicates the network address of the node 1.

For example, that the first message is carried in a packet header of a packet 1 may be: The first message is carried in a wireless connectionless-mode transport protocol (connectionless-mode transport protocol, CLTP) header of the packet 1, where the CLTP header is a type of a next extension header indicated by a next header field in the packet header of the packet 1. The CLTP header further includes a source port field and a destination port field. The source port field indicates an out interface identifier of the source node, and the destination port field indicates an out interface identifier of the node 1.

S403: The node 1 determines the first reservation path based on the first message, and locally reserves a resource for the first reservation path.

In an implementation, that the node 1 determines the first reservation path based on the first message is specifically: The node 1 determines the first reservation path based on the request source location identifier field and the request location identifier field in the first message.

For example, that the node 1 determines the first reservation path based on the request source location identifier field and the request location identifier field in the first message includes: The node 1 calculates, according to a constrained shortest path first (constrained shortest path first, CSPF) algorithm based on the network address of the node 1 indicated by the request source location identifier field in the first message and the network address of the node 2 indicated by the request location identifier field in the first message, the first reservation path that meets the quality of service condition.

Herein, the quality of service condition may be the link quality requirement carried in the first message, that is, the quality of service condition is indicated by the source node. In some possible embodiments, the quality of service condition may alternatively be locally set by the node 1 by default. This is not specifically limited herein.

Herein, the first reservation path includes at least one link formed by a plurality of intermediate nodes in the network. Two neighboring intermediate nodes in the plurality of intermediate nodes form one link, and the plurality of intermediate nodes include at least the node 1 and the node 2. The node 1 is the first intermediate node on the first reservation path, and the node 2 is the last intermediate node on the first reservation path.

For ease of describing a subsequent interaction procedure between intermediate nodes on the first reservation path, an example in which the first reservation path includes one link is used. To be specific, the first reservation path is the node 1→the node 2, that is, the node 1 is connected to the node 2.

It should be noted that, in embodiments of this application, a quantity of links on the first reservation path is not limited to only 1, and the quantity of intermediate nodes on the first reservation path is not limited to only 2. In some possible embodiments, there is further at least one intermediate node between the node 1 and the node 2. For example, the first reservation path obtained through local computation by the node 1 is the node 1→a node 3→the node 2. In this case, the first reservation path includes two links: a link 1 corresponding to the node 1→the node 3 and a link 2 corresponding to the node 3→the node 2.

In embodiments of this application, after the node 1 determines the first reservation path, the node 1 locally reserves the resource for the first reservation path. For example, it is assumed that the link quality requirement corresponding to the first reservation path is a bandwidth of 20 mega M. If a local idle bandwidth of the node 1 is 30 M, the node 1 locally reserves 20 M for the first reservation path. In this case, a resource reservation result of the first reservation path on the node 1 is a success in reservation, and S404 and S405 are further performed. If the local idle bandwidth of the node 1 is only 10 M, which is less than 20 M indicated by the link quality requirement, the node 1 cannot locally reserve the resource for the first reservation path. Therefore, the resource reservation result of the first reservation path on the node 1 is a failure in reservation, and S406 is further performed.

Herein, the bandwidth of 20 M is merely an example of the link quality requirement. When the link quality requirement includes a plurality of preset requirements, and the node 1 meets each preset requirement in the link quality requirement when the node 1 locally reserves the resource for the first reservation path, the resource reservation result of the first reservation path on the node 1 is a success in reservation.

In some possible embodiments, after the node 1 receives the first message, the node 1 may further send a response message of the first message to the source node, to ensure message reliability, so that the source node 1 may determine, based on the response message 1, that the node 1 has received the first message, where the response message is referred to as a response message 1. A type field in the response message 1 indicates that a type of the response message 1 is a resource reservation request confirm message (namely, the RRA message in embodiments in FIG. 2).

In an implementation, the response message 1 may be carried in a packet header of a packet 2. A source address field in the packet header indicates the network address of the node 1. A destination address field in the packet header indicates the network address of the source node. A difference between the response message 1 and the first message lies in that only a value of a type field indicating a message type changes, and values of other remaining fields remain unchanged.

S404: The node 1 generates a second message when the reservation succeeds, where the second message is used to notify a next intermediate node of the node 1 (namely, the node 2) on the first reservation path to reserve a resource for the first reservation path.

In embodiments of this application, a second type field in the second message indicates that a type of the second message is a resource reservation path message (namely, the RP message in embodiments in FIG. 2).

In embodiments of this application, the second message further includes a first TLV field, a V field of the first TLV field includes an ordered set of an identifier of at least one link of the first reservation path, and an identifier of each link in the at least one link is obtained based on a neighbor system identifier corresponding to the link and identifiers of interfaces of two neighboring intermediate nodes corresponding to the link. It should be noted that the first TLV is equivalent to the resource reservation path TLV field in FIG. 2.

For example, if the first reservation path is the node 1→the node 2, the first reservation path includes only one link, namely, a link 1 corresponding to the node 1→the node 2. Therefore, the V field in the first TLV field includes an identifier of the link 1. For a specific representation manner of the identifier of the link, refer to descriptions of corresponding content in embodiments in FIG. 3. Details are not described herein again.

In embodiments of this application, the V field of the first TLV field further includes a first return code field, and the first return code field indicates that the resource reservation result of the first reservation path on the node 1 is a success in reservation.

In some possible embodiments, the V field of the first TLV field further includes a first path link index field, and the first path link index field indicates an index of a link on which resource reservation is currently performed and that is in the at least one link of the first reservation path, that is, the index indicated by the first path link index field is an index of the link 1.

In embodiments of this application, in addition to the first TLV field, the second message further includes fields in the first message. A difference lies in that a value (the first value in FIG. 2) of the first type field in the first message is different from a value (the third value in FIG. 2) of the second type field in the second message. Values of other remaining fields remain unchanged. Herein, the other remaining fields include the request source location identifier field, the request location identifier field, the request source address field, the request destination address field, the request flow label field, the keep alive time field indicating the keepalive time of the first reservation path, the message length field indicating the length of the first message, the transaction number field identifying that the source node sends the first message once, and the link quality information TLV field used to carry the link quality requirement met by the first reservation path.

For example, the second message may be generated by the node 1 based on the first message. For example, the value of the first type field in the first message is changed from the first value to the third value, and then the first TLV field is additionally added.

S405: The node 1 sends the second message to the node 2.

Correspondingly, the node 2 receives the second message from the node 1.

In an implementation, the second message may be carried in a packet header of a packet 3. A source address field in the packet header indicates the network address of the node 1, and a destination address field in the packet header indicates the network address of the node 2.

For example, that the first message is carried in a packet header of a packet 3 may be: The first message is carried in a wireless CLTP header of the packet 3, where the CLTP header is a type of a next extension header indicated by a next header field in the packet header of the packet 3. The CLTP header further includes a source port field and a destination port field. The source port field indicates the out interface identifier of the node 1, and the destination port field indicates an out interface identifier of the node 2.

In some possible embodiments, after the node 2 receives the second message, the node 2 may further send a response message of the second message to the node 1, to ensure message reliability, so that the node 1 may determine, based on the response message 2, that the node 2 has received the second message, where the response message is referred to as a response message 2. A type field in the response message 2 indicates that a type of the response message 2 is a resource reservation path acknowledge message (namely, the RPA message in embodiments in FIG. 2).

In an implementation, the response message 2 may be carried in a packet header of a packet 4. A source address field in the packet header indicates the network address of the node 2, and a destination address field in the packet header indicates the network address of the node 1. A difference between the response message 2 and the first message lies in that only a value of a type field indicating a message type changes, and values of other remaining fields remain unchanged.

S406: The node 1 generates a third message when the reservation fails, and sends the third message to the source node.

In embodiments of this application, a third type field of the third message indicates that a type of the third message is a resource reservation confirm message (namely, the RC message in FIG. 2). The third message includes a second return code field, and the second return code field indicates that the resource reservation result of the first reservation path on the node 1 is a failure in reservation.

In some possible embodiments, the second return code field is included in a V field of a second TLV field of the third message.

In some possible embodiments, the V field of the second TLV field further includes the ordered set of the identifier of the at least one link on the first reservation path. For example, if the first reservation path is the node 1→the node 2, the V field of the second TLV field includes the identifier of the link 1 corresponding to the node 1→the node 2.

In some possible embodiments, the V field of the second TLV field further includes a second path link index field, and the second path link index field indicates an index of a link on which resource reservation is currently performed and that is in the at least one link of the first reservation path, that is, the index indicated by the second path link index field is an index of the link 1.

In some possible embodiments, the V field of the second TLV field further includes a reason field, and the reason field indicates a reason why the resource fails to be reserved on the node 1 for the first reservation path.

In embodiments of this application, in addition to the second TLV field, the third message further includes fields in the first message. A difference lies in that the value (the first value in FIG. 2) of the first type field in the first message is different from a value (the fifth value in FIG. 2) of the third type field in the third message. Values of other remaining fields remain unchanged. Herein, the other remaining fields include the request source location identifier field, the request location identifier field, the request source address field, the request destination address field, the request flow label field, the field indicating the keepalive time of the first reservation path, the message length field indicating the length of the first message, the transaction number field identifying that the source node sends the first message once, and the link quality information TLV field used to carry the link quality requirement met by the first reservation path.

For example, the third message may be generated by the node 1 based on the first message. For example, the value of the first type field in the first message is changed from the first value to the fifth value, and then the second TLV field is additionally added.

In an implementation, the third message may be carried in a packet header of a packet 5. A source address field in the packet header indicates the network address of the node 1, and a destination address field in the packet header indicates the network address of the source node.

For example, that the third message is carried in a packet header of a packet 5 may be: The third message is carried in a wireless CLTP header of the packet 5, where the CLTP header is a type of a next extension header indicated by a next header field in the packet header of the packet 5. The CLTP header further includes a source port field and a destination port field. The source port field indicates the out interface identifier of the node 1, and the destination port field indicates an out interface identifier of the source node.

Correspondingly, the source node receives the third message from the node 1, and determines, based on the second return field in the third message, that the first reservation path fails to be established.

In some possible embodiments, after the source node receives the third message, the source node may further send a response message of the third message to the node 1, to ensure message reliability, so that the node 1 may determine, based on the response message 3, that the source node has received the third message, where the response message is referred to as a response message 3. A type field in the response message 3 indicates that a type of the response message 3 is a resource reservation confirm acknowledge message (namely, the RCA message in embodiments in FIG. 2).

In an implementation, the response message 3 may be carried in a packet header of a packet 6. A source address field in the packet header indicates the network address of the source node, and a destination address field in the packet header indicates the network address of the node 1. A difference between the response message 3 and the first message lies in that only a value of a type field indicating a message type changes, and values of other remaining fields remain unchanged.

S407: The node 2 locally reserves the resource for the first reservation path based on the second message, and generates a fourth message, where the fourth message carries a resource reservation result of the first reservation path on the node 2.

Specifically, after the node 2 receives the second message, the node 2 locally reserves the resource for the first reservation path. For a process of reserving the resource for the first reservation path locally, refer to the descriptions of corresponding content of locally reserving the resource for the first reservation path by the node 1 in S403. Details are not described herein again.

A fourth type field in the fourth message indicates that a type of the fourth message is a resource reservation confirm message (namely, the RC message in FIG. 2).

In embodiments of this application, the resource reservation result of the first reservation path on the node 2 may be indicated by using a third return code field in the fourth message. The third return code field is included in a V field of a third TLV field in the fourth message.

In some possible embodiments, the V field of the third TLV field further includes the ordered set of the identifier of the at least one link on the first reservation path. For example, if the first reservation path is the node 1→the node 2, the V field of the third TLV field includes the identifier of the link 1 corresponding to the node 1→the node 2.

In some possible embodiments, the V field of the third TLV field further includes a third path link index field, and the third path link index field indicates an index of a link on which resource reservation is currently performed and that is in the at least one link of the first reservation path, that is, the index indicated by the third path link index field is an index of the link 1.

In some possible embodiments, when the resource reservation result indicated by the third return code field is a failure in reservation, the V field of the third TLV field further includes a reason field, and the reason field indicates a reason why the resource fails to be reserved on the node 2 for the first reservation path.

In embodiments of this application, in addition to the third TLV field, the fourth message further includes fields in the first message. A difference lies in that the value (the first value in FIG. 2) of the first type field in the first message is different from a value (the fifth value in FIG. 2) of the fourth type field in the fourth message. Values of other remaining fields remain unchanged. Herein, the other remaining fields include the request source location identifier field, the request location identifier field, the request source address field, the request destination address field, the request flow label field, the keep alive field indicating the keepalive time of the first reservation path, the message length field indicating the length of the first message, the transaction number field identifying that the source node sends the first message once, and the link quality information TLV field used to carry the link quality requirement that the first reservation path needs to meet.

For example, the fourth message may be generated by the node 2 based on the second message. For example, a value of a first type field in the second message is changed from the first value to the fifth value. In addition, at least one of a second return code field and a second path link index field in a second TLV field in the second message may be further updated.

S408: The node 2 sends the fourth message to the source node through the node 1.

In an implementation, the fourth message may be carried in a packet header of a packet 7. A source address field in the packet header indicates the network address of the node 2. A destination address field in the packet header may indicate the network address of the node 1, or may indicate the network address of the source node. This is not specifically limited herein.

For example, when the destination address field in the packet header of the packet 7 indicates the network address of the node 1, the node 1 determines, when receiving the packet 7, that the destination address field in the packet header of the packet 7 indicates the network address of the node 1. In this case, it is further obtained that the network address indicated by the request source address field in the fourth message is the network address of the source node. The network address indicated by the source address in the packet header of the packet 7 is changed to the network address of the node 1, the network address indicated by the destination address field is changed to the network address of the source node, and a changed packet 7 is sent to the source node. In some possible embodiments, after the node 1 receives the packet 7, the node 1 replies with a response message of the fourth message to the node 2, to ensure message reliability, so that the node 2 may determine, based on the response message 4, that the node 1 has received the fourth message, where the response message is referred to as a response message 4. Correspondingly, after the source node receives the fourth message from the node 1, the source node also replies with the response message 4 to the node 1, so that the node 1 may determine, based on the response message 4, that the source node has received the fourth message. A type field in the response message 4 indicates that a type of the response message 4 is a resource reservation confirm acknowledgement message (namely, the RCA message in embodiments in FIG. 2). A difference between the response message 4 and the first message lies in that a value of only a type field indicating a message type changes, and values of other fields remain unchanged.

For another example, when the destination address field in the packet header of the packet 7 indicates the network address of the source node, the node 1 determines, after receiving the packet 7, that the network address indicated by the destination address field in the packet header of the packet 7 is not the network address of the node 1, and directly forwards the packet 7 to the source node. In some possible embodiments, after the source node receives the packet 7, the source node also replies with the response message 4 to the node 2, to ensure message reliability, so that the node 2 may determine, based on the response message 4, that the source node has received the fourth message. The response message 4 may be carried in a packet header of a packet 8. A source address field in the packet header indicates the network address of the source node, and a destination address field in the packet header may indicate the network address of the node 2.

S409: The source node determines an establishment result of the first reservation path based on the fourth message.

In an implementation, that the source node determines an establishment result of the first reservation path based on the fourth message includes: When a resource reservation result that is of the first reservation path on the node 2 and that is carried in the fourth message is a failure in reservation, determining that the establishment result of the first reservation path is that establishment fails.

In an implementation, that the source node determines an establishment result of the first reservation path based on the fourth message includes: When a resource reservation result that is of the first reservation path on the node 2 and that is carried in the fourth message is a success in reservation, determining that the establishment result of the first reservation path is that establishment succeeds.

It may be understood that, when the resource reservation result that is of the first reservation path on the node 2 and that is carried in the fourth message is a success in reservation, the index indicated by the third path link index field in the fourth message is an index of a last link in the at least one link of the first reservation path.

It can be learned that, during implementation of embodiments of this application, a simplified mechanism for establishing a resource reservation path based on at least three types of resource reservation messages is provided. A resource reservation request message is initiated by a source node to an intermediate node accessed by a source node, the intermediate node that receives the resource reservation request message or a resource reservation path message sends a resource reservation path to a next intermediate node on a reservation path only when the intermediate node successfully reserves a resource for the reservation path locally, to notify the next intermediate node to reserve a resource for the reservation path. When any intermediate node in the reservation path fails to locally reserve a resource for the reservation path, the intermediate node accessed by the source node sends, to the source node, a resource reservation confirm message that carries a reservation failure result, and only when a last intermediate node on the reservation path successfully reserves a resource for the reservation path locally, the intermediate node accessed by the source node sends, to the source node, a resource reservation confirm message that carries a reservation success result. In this way, the source node may determine the establishment result of the reservation path based on the resource reservation confirm message.

In addition, different from a reservation path that is kept alive through periodic signaling in the conventional technology of RCVP-TE, the established reservation path is kept alive through service traffic access hit. This effectively reduces network bandwidth consumption caused by signaling transmission in a reservation path establishment process. Especially, when applied to a wireless network, this further helps save electric energy of a node in a network.

In embodiments of this application, when any intermediate node on a first reservation path successfully reserves a resource for the first reservation path locally, the intermediate node further locally generates a forwarding table corresponding to the first reservation path. The forwarding table may be used by the intermediate node to forward a data packet indicating that the first reservation path is selected as a forwarding path.

Any intermediate node i on the first reservation path is used as an example. When a destination node is an intermediate node in the network, namely, a node 2, a forwarding table that corresponds to the first reservation path and that is locally generated by the intermediate node i includes a forwarding entry corresponding to a network address of the destination node. When the destination node is an end node that accesses a node 2, a forwarding table that corresponds to the first reservation path and that is locally generated by the intermediate node i includes a forwarding entry corresponding to a network address of the destination node and a forwarding entry corresponding to a network address of the intermediate node (namely, the node 2) accessed by the destination node.

Herein, the forwarding entry in the forwarding table that corresponds to the first reservation path and that is locally generated by the intermediate node i is specifically a mapping relationship among the following seven items: a destination address (destination address), a source address (source address), a flow label (flow label), a nexthop layer 2 identifier (nexthop layer 2 identifier, nexthop L2ID), an out interface identifier (out interface ID) of the intermediate node i, a transport channel identifier (transport channel identifier, TCID), and a logical channel identifier (logical channel identifier, LCID). It may be understood that the intermediate node i may search the forwarding table for the corresponding forwarding entry based on the destination address, the source address, and the flow label. For example, the TCID and the LCID are predefined in a SparkLink communication system, and are used to encapsulate and send a packet at a bottom layer (for example, a wireless basic service layer in a SparkLink network).

For example, a node 1 on the first reservation path generates a forwarding table 1 corresponding to the first reservation path.

A flow label in the forwarding table 1 is obtained by the node 1 from a request flow label field in a first message.

A source address in the forwarding table 1 is obtained by the node 1 from a request source address field in the first message.

A destination address in the forwarding table 1 includes at least one of a network address of the destination node obtained by the node 1 from a request destination address field in the first message and a network address of the node 2 obtained by the node 1 from a request location identifier field in the first message.

Herein, when the network address indicated by the request destination address field in the first message is the same as the network address indicated by the request location identifier field in the first message, it indicates that the destination node is an intermediate node in the network (the destination node is the node 2). In this case, the destination address in the forwarding table 1 includes the network address of the destination node. When the network address indicated by the request destination address field in the first message is different from the network address indicated by the request location identifier field in the first message, it indicates that the destination node is an end node that accesses the node 2. The destination address in the forwarding table 1 includes the network address of the destination node and the network address of the node 2.

The out interface identifier in the forwarding table 1 is obtained by the node 1 from a local routing table based on the destination address in the forwarding table 1.

In addition, the node 1 may further obtain a nexthop network address from the local routing table based on the destination address in the forwarding table 1. Further, the nexthop layer 2 identifier, the TCID, and the LCID in the forwarding table 1 are all obtained by the node 1 from a local neighbor forwarding table based on the obtained out interface identifier and the obtained nexthop network address.

When the node 2 on the first reservation path locally generates a forwarding table 2 corresponding to the first reservation path, a flow label in the forwarding table 2 is obtained by the node 2 from a request flow label field in a received second message (a type is a resource reservation path message). A source address in the forwarding table 2 is obtained by the node 2 from a request source address field in the second message. A destination address in the forwarding table 2 is obtained by the node 2 from at least one of a request destination address field and a request location identifier field in the second message. An out interface identifier and a nexthop layer 2 identifier in the forwarding table 2 may be obtained by the node 2 by parsing an identifier that is of a link on the first reservation path and that is carried in the second message.

It may be understood that, when a quantity of intermediate nodes on the first reservation path is greater than 2, for a process in which the intermediate node after the node 1 on the first reservation path locally generates a forwarding entry corresponding to the first reservation path, refer to related descriptions of locally generating, by the node 2, the forwarding table corresponding to the first reservation path. Details are not described herein again.

In embodiments of this application, the forwarding entry in the forwarding table corresponding to the first reservation path has a keep alive time limitation. For example, keep alive time may be indicated by the node 1 by using a keep alive time field that is in the first message and that indicates keepalive duration of the first reservation path, or may be locally set by each node. This is not specifically limited herein.

For example, when time for which a target forwarding entry in the forwarding table corresponding to the first reservation path locally stored on the node i is not accessed by a data packet reaches preset storage time, the node i may delete the target forwarding entry from the forwarding table. The target forwarding entry is a forwarding entry corresponding to the network address of the destination node or a forwarding entry corresponding to the network address of the node 2.

It can be learned that, in embodiments of this application, the forwarding entry in the forwarding table corresponding to the first reservation path is in a soft state. When traffic hits the forwarding entry (that is, a data packet accesses the forwarding entry), time to live of the forwarding entry may be refreshed, to keep the forwarding entry alive. When no traffic hits the forwarding entry within preset keep alive time, the forwarding entry is aged. In comparison with a conventional technology of a resource reservation protocol-traffic engineering RSVP-TE technology in which signaling needs to be periodically sent to keep a reservation path alive, embodiments of this application help reduce network bandwidth consumption caused by frequent signaling transmission.

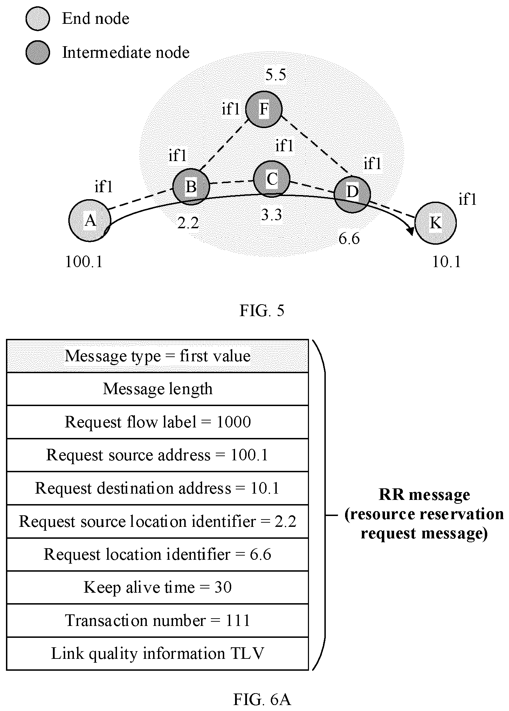

Refer to FIG. 5. In comparison with the diagram of the architecture shown in FIG. 1, FIG. 5 shows a network address and an out interface identifier of each node in a network. For example, a network address of a node A is 100.1, and an out interface identifier of the node A is if1. A network address of a node B is 2.2, and an out interface identifier of the node B is if1. Network addresses and out interface identifiers of remaining other nodes in FIG. 5 may be obtained from FIG. 5, and are not listed one by one herein. It can be learned that each node shown in FIG. 5 has one network address. In some possible embodiments, a plurality of network addresses may be configured on a same node. This is not specifically limited herein.

In FIG. 5, it is assumed that the node A is the source node in the foregoing descriptions, the node B is the node 1 in the foregoing descriptions, the destination node is the node K, and a first reservation path determined by the node B is B→C→D. The node D is equivalent to the node 2 in the foregoing descriptions. A forwarding table corresponding to the first reservation path generated by the node B may be represented as a mapping relationship table shown in Table 1. As shown in Table 1, Table 1 includes two forwarding entries: a forwarding entry corresponding to a destination address 6.6 (namely, the node D) and a forwarding entry corresponding to a destination address 10.1 (namely, the node K).

The forwarding entry 6.6-100.1-1000- if1-3333.3333.3333-33-3 corresponding to the destination address 6.6 in Table 1 is used as an example. In the forwarding entry, 6.6 corresponds to a destination address field in a packet header of a data packet, 100.1 corresponds to a source address field in the packet header of the data packet, if1 represents a local out interface of the node B, 3333.3333.3333 represents a next-hop (namely, the node C) layer 2 identifier of the node B obtained when the data packet needs to be forwarded to the destination address 6.6, 33 represents a local transport channel identifier of the node B, and 3 represents a local logical channel identifier of the node B. When the node B finds, based on the destination address field, the source address field, and a flow label field in the packet header of the data packet, the forwarding entry corresponding to the destination address 6.6, the node B performs layer 2 encapsulation on the data packet based on the TCID and the LCID in the forwarding entry, and sends the data packet to the node C whose layer 2 identifier is 3333.3333.3333 through the local out interface if1.

**Table 1**

| Destination address (destination address) | Source address (source address) | Flow label (flow label) | Out interface identifier (out interface ID) | Nexthop layer 2 identifier (nexthop L2ID) | Transport channel identifier (TCID) | Logical channel identifier (LCID) |
|---|---|---|---|---|---|---|
| 6.6 | 100.1 | 1000 | if1 | 3333.3333.3333 | 33 | 3 |
| 10.1 | 100.1 | 1000 | if1 | 3333.3333.3333 | 33 | 3 |

It may be understood that Table 1 is merely used as an example to show a correspondence among the following seven items: a destination address, a source address, a flow label, an out interface identifier of a node, a nexthop layer 2 identifier of the node, a transport channel identifier of the node, and a logical channel identifier of the node. In actual application, text content and a storage manner of the correspondence may alternatively be in another form. This is not specifically limited herein.

In addition, in embodiments of this application, after the source node sends a first message, the source node also locally generates a corresponding forwarding table. When the destination node is an intermediate node in a network, the forwarding table includes a forwarding entry corresponding to a network address of the destination node. When the destination node is an endpoint that accesses an intermediate node, the forwarding table includes a forwarding entry corresponding to a network address of the destination node and a forwarding entry corresponding to a network address of the intermediate node accessed by the destination node. It may be understood that the forwarding entry in the forwarding table is specifically a mapping relationship among the following seven items: the destination address, the source address, the flow label, the nexthop layer 2 identifier, the out interface identifier of the source node, the TCID, and the LCID.

The following specifically describes the foregoing method for establishing a resource reservation path based on FIG. 5. In comparison with embodiments shown in FIG. 4, in this figure, a difference lies in that a quantity of intermediate nodes on the first reservation path in FIG. 5 is 3, and the first reservation path includes two links. In FIG. 5, it is assumed that a node A is the source node, and a node K is the destination node. In this case, a node 1 in the foregoing descriptions is equivalent to the node B, and a node 2 is equivalent to the node D. The method for establishing a resource reservation path shown in FIG. 5 includes but is not limited to the following steps.

S11: The node A sends an RR message to the node B based on a service requirement, where the RR message is used to request the node B to establish a reservation path from the node A to the node B.

In an implementation, the RR message may be in a format shown in FIG. 6A, specifically, including a message type field, a message length field, a request flow label field, a request source address field, a request destination address field, a request source location identifier field, a request location identifier field, a keep alive time field, a transaction number field, and a link quality information TLV field. For specific descriptions of the fields, refer to the related descriptions of the first message or FIG. 2. Details are not described herein again.

In the RR message shown in FIG. 6A, the node A sets the message type field to a first value, sets the request flow label field to 1000, fills 100.1 (namely, a network address of the node A) in the request source address field, fills 10.1 (namely, a network address of the node K) in the request destination address field, fills 2.2 (namely, a network address of the node B accessed by the node A) in the request source location identifier field, fills 6.6 (namely, a network address of the node D accessed by the node K) in the request location identifier field, sets the keep alive time field to 30, and sets the transaction number field to 111. The link quality information TLV is used to carry a link quality requirement met by the reservation path.

It may be understood that the RR message is equivalent to the first message in the foregoing descriptions. For encapsulation of the RR message in a packet, refer to the encapsulation of the first message. Details are not described herein again.

S12: The node B determines the first reservation path based on the received RR message, and locally reserves a resource for the first reservation path, and when reservation succeeds, the node B sends an RP message 1 to the node C.

For example, the node B calculates, based on the RR message, that the first reservation path is B→C→D in FIG. 5.

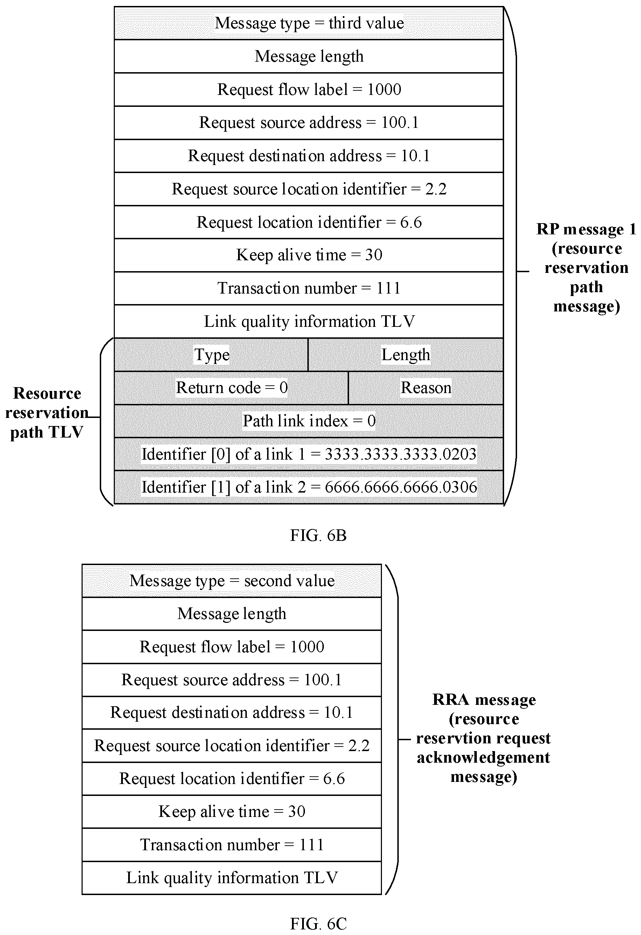

In an implementation, the RP message 1 may be in a format shown in FIG. 6B, and a value of a message type field is a third value. For a request flow label field, a request source address field, a request destination address field, a request source location identifier field, a request location identifier field, a keep alive time field, a transaction number field, and a link quality information TLV field, refer to descriptions of corresponding fields in the RR message in S11. In addition, the RP message 1 includes a resource reservation path TLV field, where a value of a return code field is 0 indicating that a resource reservation result of the first reservation path on the node B is a success in reservation. A value of a path link index field is 0 indicating that an index of a link on which resource reservation is currently performed on the first reservation path is 0, namely, a link 1, and there are two links on the first reservation path: the link 1 is B→C, and a link 2 is C→D. A value of an identifier [0] of the link 1 is 3333.3333.3333.0203, and a value of an identifier [1] of the link 2 is 6666.6666.6666.0306. 3333.3333.3333.0203 is used as an example, where 3333.3333.3333 represents a layer 2 identifier of the node C, 02 represents an identifier of an interface of the node B, and 03 represents an identifier of an interface of the node C.

In embodiments of this application, when the node B successfully reserves the resource for the first reservation path locally, the node B locally generates a forwarding table corresponding to the first reservation path. For a specific generation process, refer to the foregoing corresponding descriptions of the method for generating a forwarding table. Details are not described herein again.

In some possible embodiments, after the node B receives the RR message from the node A, the node B may send an RRA message to the node A, so that the node A determines, based on the RRA message, that the node B has received the RR message.

For example, the RRA message may be in a format shown in FIG. 6C. In comparison with the RR message shown in FIG. 6A, a difference lies in that a value of a message type field in the RRA message shown in FIG. 6C is a second value, and the value of the message type field in the RR message shown in FIG. 6A is the first value. For remaining fields in the RRA message shown in FIG. 6C, refer to the descriptions of corresponding fields in FIG. 6A. Details are not described herein again.

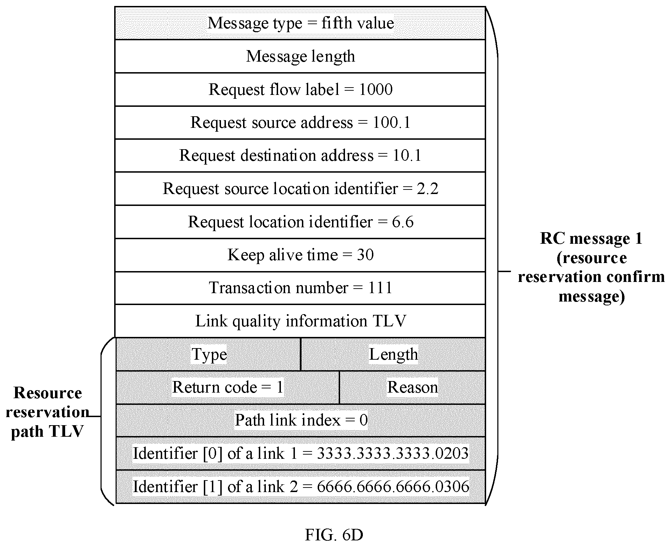

In some possible embodiments, when the node B fails to reserve the resource for the first reservation path, the node B sends an RC message 1 to the node A. In this way, the node A may determine, based on the RC message 1, that an establishment result of the first reservation paths is that establishment fails. For example, the RC message 1 may be in a format shown in FIG. 6D. In comparison with the RP message 1 shown in FIG. 6B, a difference lies in that a value of a message type field in the RC message 1 shown in FIG. 6D is a fifth value, and a value of a return code field in a resource reservation path TLV field shown in FIG. 6D is 1 indicating that a reservation result of the first reservation path on the node B is a failure in reservation. For remaining fields in the RC message 1 shown in FIG. 6D, refer to the descriptions of corresponding fields in FIG. 6B.

S13: The node C locally reserves a resource for the first reservation path based on the received RP message 1, and sends an RP message 2 to the node D when the reservation succeeds.

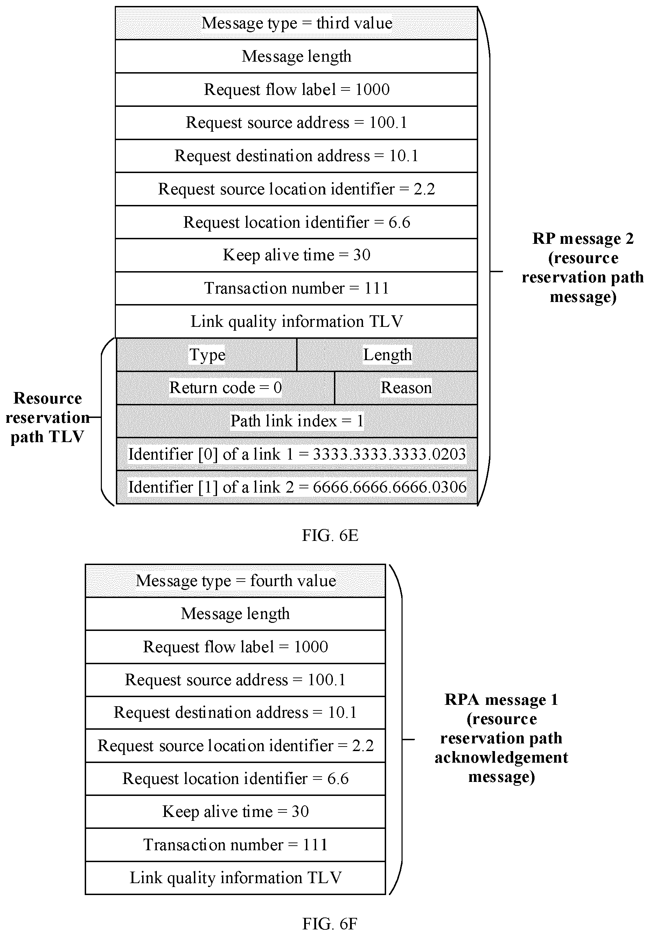

For example, the RP message 2 may be in a format shown in FIG. 6E. In comparison with the RP message 1 shown in FIG. 6B, a difference lies in that a value of a path link index field in a resource reservation path TLV field in the RP message 2 shown in FIG. 6E is "1" indicating that an index of a link on which resource reservation is currently performed is an index of the link 2, and a value of a return code field is still "0", but the RP message 2 indicates that a resource reservation result of the first reservation path on the node C is a success in reservation. For remaining fields in the RP message 2 shown in FIG. 6E, refer to the descriptions of corresponding fields in FIG. 6B. Details are not described herein again.

In embodiments of this application, when successfully reserving the resource for the first reservation path locally, the node C also locally generates a corresponding forwarding table. A specific process is not described herein again.

In some possible embodiments, after the node C receives the RP message 1, the node C may further send an RPA message 1, so that the node B determines, based on the RPA message 1, that the node C has received the RP message 1.

For example, the RPA message 1 may be in a format shown in FIG. 6F. In comparison with the RRA message shown in FIG. 6C, a difference lies in that a value of a message type field in the RPA message 1 shown in FIG. 6F is a fourth value. For remaining fields in the RPA message 1 shown in FIG. 6F, refer to the descriptions of corresponding fields in FIG. 6C. Details are not described herein again.

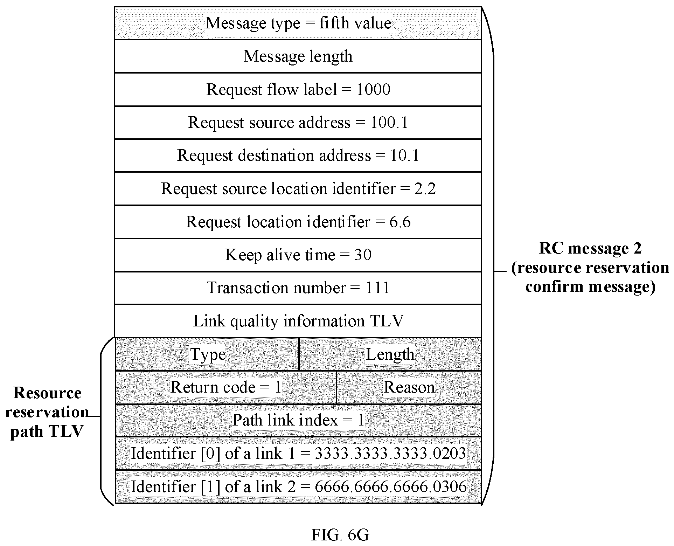

In some possible embodiments, when the node C fails to reserve the resource for the first reservation path, the node C sends an RC message 2 to the node A through the node B. In this way, the node A may determine, based on the RC message 2, that an establishment result of the first reservation paths is that establishment fails. For example, the RC message 2 may be in a format shown in FIG. 6G. In comparison with the RC message 1 shown in FIG. 6D, a difference lies in that a value of a path link index field in a resource reservation path TLV field in the RC message 2 shown in FIG. 6G is "1" indicating that an index of a link on which resource reservation is currently performed is the index of the link 2, and a value of a return code field is still "1", but the RC message 2 indicates that the resource reservation result of the first reservation path on the node C is a failure in reservation. For remaining fields in the RC message 2 shown in FIG. 6G, refer to the descriptions of corresponding fields in FIG. 6D. Details are not described herein again.

S14: The node D locally reserves a resource for the first reservation path based on the received RP message 2, and sends an RC message 3 to the node A through the node B when the reservation succeeds, or sends an RC message 4 to the node A through the node B when the reservation fails.

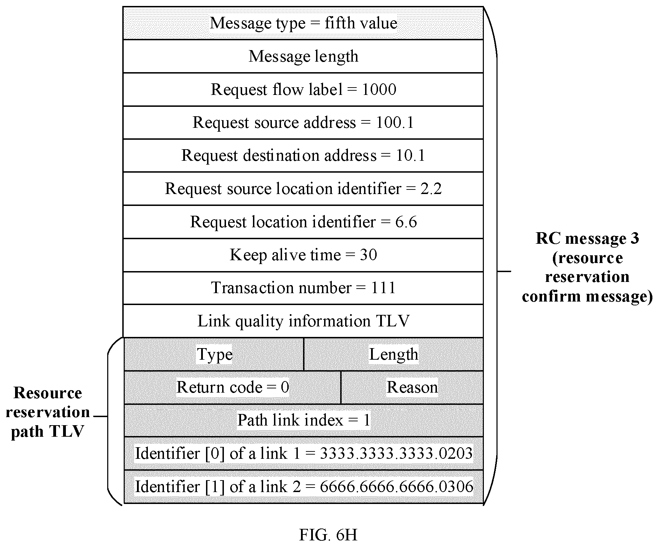

Herein, the node A may determine, based on the received RC message 3, that the establishment result of the first reservation path is that the establishment succeeds. For example, the RC message 3 may be in a format shown in FIG. 6H. In comparison with the RC message 2 shown in FIG. 6G, a difference lies in that a value of a return code field in a resource reservation path TLV field in the RC message 2 shown in FIG. 6H is "0", and the RC message 3 indicates that a resource reservation result of the first reservation path on the node D is a success in reservation. For remaining fields in the RC message 3 shown in FIG. 6H, refer to the descriptions of corresponding fields in FIG. 6G. Details are not described herein again.

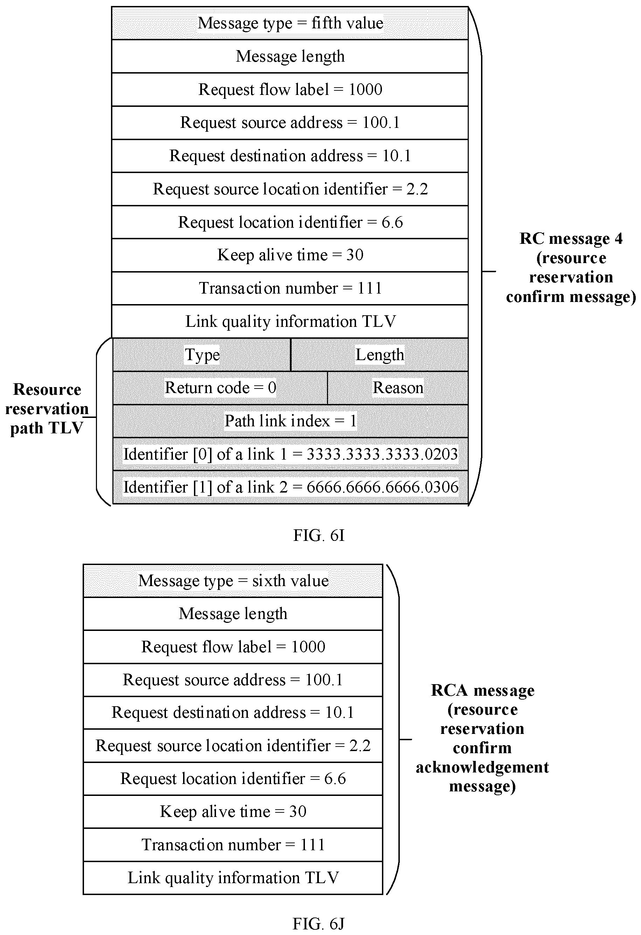

Herein, the node A may determine, based on the received RC message 4, that the establishment result of the first reservation path is that the establishment fails. For example, the RC message 4 may be in a format shown in FIG. 6I. It can be learned that the RC message 4 is totally the same as the RC message 2 shown in FIG. 6G. Details are not described herein again.

In embodiments of this application, when successfully reserving the resource for the first reservation path locally, the node D also locally generates a corresponding forwarding table. A specific process is not described herein again.

In some possible embodiments, after the node D receives the RP message 2, the node D may further send an RPA message 2, so that the node C determines, based on the RPA message 2, that the node D has received the RP message 2. For example, the RPA message 2 may be in a format shown in FIG. 6F. Details are not described herein again.

In some possible embodiments, after the node A receives the RC message 1, or after the node A receives the RC message 2, or after the node A receives the RC message 3, or after the node A receives the RC message 4, the node A may further reply with an RCA message to a corresponding node, to ensure reliable message transmission. For example, the RCA message may be in a format shown in FIG. 6J. In comparison with the RRA message shown in FIG. 6C, a difference lies in that a value of a message type field in the RCA message shown in FIG. 6J is a sixth value, and the value of the message type field in the RRA message shown in FIG. 6C is the first value. For remaining fields in the RCA message shown in FIG. 6J, refer to the descriptions of corresponding fields in FIG. 6C.

It may be understood that, when the node A determines, based on the received RC message, that the first reservation path is successfully established, each node on the first reservation path has locally generated a forwarding table corresponding to the first reservation path, and the forwarding table may be used to guide forwarding of a subsequent data packet.

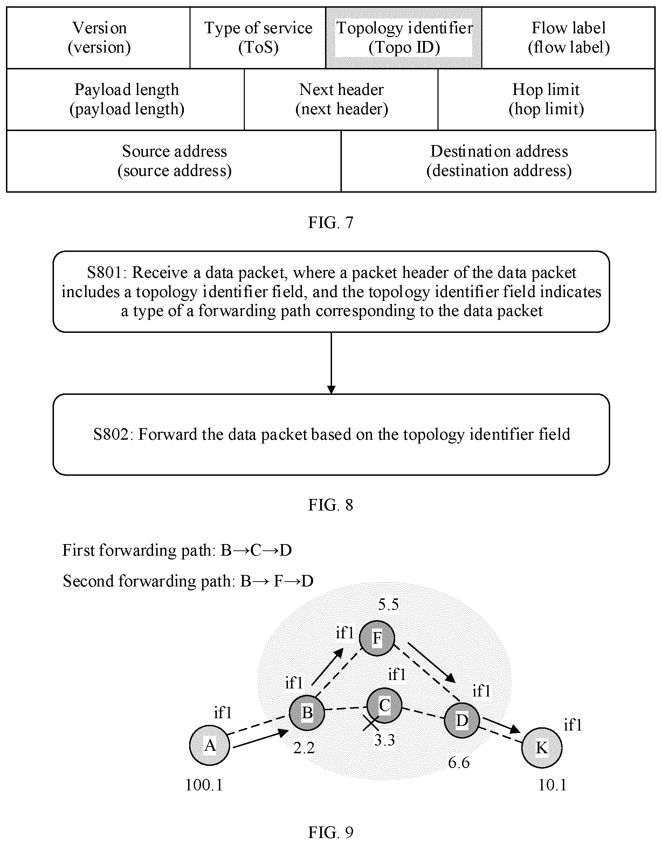

A packet header is further defined in embodiments of this application, to support a behavior that the data packet may be forwarded through the first reservation path. The packet header can support a plurality of forwarding behaviors, and overheads of the packet header are low. In addition, a proportion of data carried in the data packet can be increased. Refer to FIG. 7. FIG. 7 is a diagram of a format of a packet header according to an embodiment of this application.

The following specifically describes fields in the packet header shown in FIG. 7.

In this embodiment of this application, the packet header includes a topology identifier (Topo ID) field. The topology identifier field indicates a type of a forwarding path corresponding to a data packet, and the type includes a first type and a second type. Quality of service of a first forwarding path corresponding to the first type is higher than quality of service of a second forwarding path corresponding to the second type.

Herein, that quality of service of a first forwarding path is higher than quality of service of a second forwarding path may be, for example, that the first forwarding path has one or more of features such as a larger bandwidth, a lower latency, a higher transmission priority, and a lower packet loss rate compared with the second forwarding path.

Herein, the first forwarding path is the first reservation path in the foregoing embodiments. In some possible embodiments, the first forwarding path may alternatively be referred to as an advanced topology, and the second forwarding path may be referred to as a basic topology. The advanced topology may be a topology that meets a quality of service requirement and that is provided for an application. Further, the basic topology may be used by a network protocol and a control protocol of the network protocol, or may be used as a backup topology of the advanced topology. In other words, when the advanced topology is not established, a temporary topology (or referred to as a temporary forwarding path) may be provided for traffic forwarding of an application.

The first forwarding path and the second forwarding path are briefly described based on FIG. 5. In FIG. 5, it is assumed that the first forwarding path with high quality of service is B→C→D, and the second forwarding path with low quality of service is B→F→D. When a node A wants to send a data packet to a node K, the node A may indicate, based on a topology identifier field in the packet header of the data packet, a type of a forwarding path corresponding to the data packet. For example, a value of the topology identifier field is "1" indicating that the type of the forwarding path corresponding to the data packet is the first type. This indicates that the packet is sent based on the first forwarding path. The value of the topology identifier field is "0" indicating that the type of the forwarding path corresponding to the data packet is the second type. This indicates that the packet is sent through the second forwarding path.

It can be learned that the topology identifier field in the packet header may provide a plurality of forwarding behaviors that support different quality of service for data packet forwarding, so that the packet header has good scalability.

In embodiments of this application, when the topology identifier field indicates that the type of the forwarding path corresponding to the data packet is the first type, the packet header further includes a flow label (flow label) field. The flow label field indicates a flow label (or an identifier) of a data flow to which the data packet belongs. It may be understood that the flow label of the data flow to which the data packet belongs is a flow label to which the first forwarding path belongs.

For example, when the topology identifier field indicates that the type of the forwarding path corresponding to the data packet is the second type, the flow label field in the packet header may be a default value, for example, set to 0. This is not specifically limited herein.

The flow label indicated by the flow label field is generally allocated by a source node (namely, a start sending node of the data packet), and the flow label may assist a receive end of the data packet in identifying traffic.

In embodiments of this application, the packet header further includes a source address (source address) field and a destination address (destination address) field. The source address field indicates a source address of the data packet, namely, a network address of the source node that applies to establish the first reservation path (or the first forwarding path). The destination address field indicates a destination address of the data packet.

For example, when a destination node is an intermediate node in a network, the destination address field in the packet header may be filled with a network address of the destination node, and the network address carried in the destination address field remains unchanged in a data packet forwarding process. When the destination node is an end node in the network, and a feature that an end node is easy to move is considered, the destination address field may be filled with a network address of an intermediate node connected to the destination node. However, when the data packet is forwarded to the intermediate node connected to the destination node, the network address carried in the destination address field may be updated based on a destination address carried in a routing header. In some possible embodiments, when the destination node is an end node in the network, the destination address field in the packet header may alternatively be filled with the network address of the destination node. This is not specifically limited herein.

Herein, both a length of the source address field and a length of the destination address field may be 16 bits.

It can be learned that, in embodiments of this application, the network address carried in the packet header is a network layer short address different from an IP address, and a length of the network address is usually 16 bits, namely, 2 bytes, and may be used for addressing in a corresponding communication system. For example, in a SparkLink communication system, a type of a network address of a node may be a SparkLink network address. In addition, in comparison with an IPv4 address with a length of 32 bits and an IPv6 address with a length of 128 bits, for a network address used in embodiments of this application, a network address carried in the packet header has a much smaller length. This greatly reduces overheads of the packet header, and helps increase a proportion of data carried in the data packet.

In embodiments of this application, the packet header further includes at least one of the following fields:
Version (version): This field indicates a version number of a network protocol.
Type of service (type of service, ToS): This field indicates a type of service, and is related to quality of service.
Next header (next header): The field indicates a type of a next packet extension header of a wireless network packet header.
Hop limit (hop limit): This field indicates a maximum hop count of a packet.
Payload length (payload length): This field indicates a length of a payload of a packet.

For example, a length of each field in the packet header shown in FIG. 7 may be: a topology identifier (2 bits), a flow label (19 bits), a source address (16 bits), a destination address (16 bits), a version number (3 bits), a type of service (8 bits), a payload length (16 bits), a next header (8 bits), and a hop limit (8 bits).

It should be noted that the format of the packet header shown in FIG. 7 is merely an example. In embodiments of this application, a format of the packet header is not limited to the form shown in FIG. 7. In some possible embodiments, a quantity of fields in the packet header may be less than a quantity of fields shown in FIG. 7. For example, one or more of a type of service field, a hop limit field, and the like in the packet header may be a default value, and one or more of a flow label field, a payload length field, a hop limit field, and the like in the packet header may be a default value. In some possible embodiments, the quantity of fields in the packet header may be greater than the quantity of fields shown in FIG. 7. This is not specifically limited herein.

In view of the foregoing defined packet header, an embodiment of this application further provides a packet sending method.

Refer to FIG. 8. FIG. 8 is a schematic flowchart of a packet sending method according to an embodiment of this application. The method may be used for a target intermediate node, and the target intermediate node is an intermediate node in a network.

For example, the target intermediate node may be the node 1 in embodiments in FIG. 4. For another example, when there is at least one intermediate node between a node 1 and a node 2 in embodiments in FIG. 4, the target intermediate node may be the node 1 or any intermediate node between the node 1 and the node 2.

The method includes but is not limited to the following steps.

S801: Receive a data packet, where a packet header of the data packet includes a topology identifier field, and the topology identifier field indicates a type of a forwarding path corresponding to the data packet.

The type of the forwarding path corresponding to the data packet includes a first type and a second type. Quality of service of a first forwarding path corresponding to the first type is higher than quality of service of a second forwarding path corresponding to the second type.

Herein, the first forwarding path is the first reservation path in the foregoing embodiments. For specific descriptions of the first forwarding path and the second forwarding path, refer to the descriptions of corresponding content in embodiments in FIG. 7. Details are not described herein again.

For example, in FIG. 5, it is assumed that the first forwarding path with high quality of service is B→C→D, and the second forwarding path with low quality of service is B→F→D. If a value of the topology identifier field is "1", the first type is indicated, and the first forwarding path corresponding to the first type is B→C→D. If the value of the topology identifier field is "0", the second type is indicated, and the second forwarding path corresponding to the second type is B→F→D.

In an implementation, the receiving a data packet includes: receiving the data packet from a source node. In this case, the target intermediate node is the node 1 in FIG. 4.

Herein, when determining that the first forwarding path is not established, the source node sets the topology identifier field in the packet header of the data packet to indicate that the type of the forwarding path corresponding to the data packet is the second type. When determining that the first forwarding path is successfully established, the source node sets the topology identifier field in the packet header of the data packet to indicate that the type of the forwarding path corresponding to the data packet is the first type.

This embodiment may be applied to the following scenario: In a process in which the source node triggers establishment of the first forwarding path (refer to the descriptions of embodiments in FIG. 4), and in a process in which each node on the first forwarding path locally generates a forwarding entry corresponding to the first forwarding path, because the first forwarding path is not established, the first forwarding path cannot provide forwarding, but the source node needs to perform immediate communication. The source node may first set the type indicated by the topology identifier field in the packet header of the data packet to the second type, that is, perform forwarding through the second forwarding path (equivalent to a basic topology). When the source node perceives that the first forwarding path is established, the source node sets the type indicated by the topology identifier field in the packet header of the data packet to the first type, that is, performs forwarding based on the first forwarding path (equivalent to an advanced topology).

In other words, when the first forwarding path is not established, the source node may first use a backup forwarding path used as the first forwarding path, namely, the second forwarding path, to perform forwarding, and when the first forwarding path is established, use the first forwarding path to perform forwarding. This can meet a requirement of immediate service communication and improve communication quality in a timely manner.

In an implementation, the receiving a data packet includes: receiving the data packet from an intermediate node. In this case, if there is at least one intermediate node between the node 1 and the node 2 in FIG. 4, the target intermediate node may be any intermediate node between the node 1 and the node 2.

For example, in FIG. 1, if the source node is a node A, the destination node is a node K, the node 1 is a node B, and the node 2 is a node D. Correspondingly, that the target intermediate node receives the data packet from the source node means that the node B receives the data packet from the node A. That the target intermediate node receives the data packet from an intermediate node may be that the node C receives the data packet from the node B, or may be that a node F receives the data packet from the node B.

In embodiments of this application, when the type indicated by the topology identifier field in the packet header is the first type, the packet header further includes a flow label field. The flow label field indicates a flow label of a data flow to which the data packet belongs, and the flow label is used to guide forwarding of the data packet.

In embodiments of this application, the packet header further includes a source address field and a destination address field. The source address field indicates a source address of the data packet, namely, a network address of the source node. The destination address field indicates a destination address of the data packet.

For example, when the destination node is the intermediate node in the network, namely, the node 2, the destination address field indicates that the destination address of the data packet is a network address of the destination node. When the destination node is an end node that accesses the node 2, the destination address field indicates that the destination address of the data packet may be the network address of the destination node (namely, flat hop-by-hop forwarding), or may be a network address of the node 2 accessed by the destination node (when an address and a location are separately represented).

S802: Forward the data packet based on the topology identifier field.

In an implementation, the forwarding the data packet based on the topology identifier field includes: when the type indicated by the topology identifier field is the first type, sending the data packet based on the first forwarding path.

Specifically, the sending the data packet based on the first forwarding path means: when the first type corresponds to a first forwarding table, obtaining a first forwarding entry from the first forwarding table based on the destination address field, the source address field, and the flow label field in the packet header; and sending the data packet based on the first forwarding entry. The first forwarding entry is a mapping relationship between the network address indicated by the destination address field in the packet header, the network address of the source node indicated by the source address field in the packet header, the flow label indicated by the flow label field in the packet header, and a nexthop layer 2 identifier of the target intermediate node on the first forwarding path, an out interface identifier of the target intermediate node, a transport channel identifier TCID, and a logical channel identifier LCID.

Herein, the first forwarding table is locally generated by the target intermediate node. For a specific generation process, refer to the related descriptions of the forwarding table corresponding to the first reservation path in the foregoing embodiments. Details are not described herein again.

For example, in FIG. 5, the node B receives the data packet from the node A, and determines that the type indicated by the topology identifier field in the packet header of the data packet is the first type, and the first forwarding path corresponding to the first type is B→C→D. The node B locally searches for a corresponding forwarding entry based on the destination address field, the source address field, and the flow label field in the packet header of the data packet, determines that a next hop is the node C, and sends the data packet to the node C.

For another example, in FIG. 5, the node C receives the data packet from the node B, and determines that the type indicated by the topology identifier field in the packet header of the data packet is the first type, and the first forwarding path corresponding to the first type is B→C→D. The node C locally searches for a corresponding forwarding entry based on the destination address field, the source address field, and the flow label field in the packet header of the data packet, determines that the next hop is the node D, and sends the data packet to the node D.

In an implementation, the forwarding the data packet based on the topology identifier field includes: when the type indicated by the topology identifier field is the first type, and it is detected that a next node of the target intermediate node on the first forwarding path is faulty or a link from the target intermediate node to the next node is faulty, changing the type indicated by the topology identifier field in the packet header from the first type to the second type, and sending a changed data packet based on the second forwarding path. In other words, when the topology identifier field indicates the type of the first forwarding path with high quality of service, if the target intermediate node perceives that the next hop of the target intermediate node on the first forwarding path is faulty, the target intermediate node may switch service traffic from the first forwarding path with high quality of service to the second forwarding path with low quality of service. In this way, fast rerouting is implemented, and a service traffic loss is reduced.

Specifically, the sending a changed data packet based on the second forwarding path includes: when the second type corresponds to a second forwarding table, obtaining the second forwarding entry from a second forwarding table based on the destination address field in the packet header; and sending the changed data packet based on the second forwarding entry. The second forwarding entry is a mapping relationship among the network address indicated by the destination address field in the packet header, a nexthop layer 2 identifier of the target intermediate node on the second forwarding path, the out interface identifier of the target intermediate node, the transport channel identifier TCID, and the logical channel identifier LCID.

It can be learned that different types of forwarding paths indicate different forwarding tables that need to be searched for by a node. For example, the node locally stores at least the first forwarding table and the second forwarding table, where the first type corresponds to the first forwarding table, and the second type corresponds to the second forwarding table. A forwarding entry in the first forwarding table is a mapping relationship among the following seven items: a destination address, a source address, a flow label, a nexthop layer 2 identifier, an out interface identifier of a node, a TCID, and an LCID, and a forwarding entry in the second forwarding table is a mapping relationship among the following five items: the destination address, the nexthop layer 2 identifier, the out interface identifier of the node, the TCID, and the LCID.

For example, the node B in FIG. 9 is used as an example of the target intermediate node to describe application of the node B in a scenario in which a faulty node or a faulty link exists in an advanced topology. In FIG. 9, it is assumed that the first forwarding path (namely, the advanced topology) is B→C→D, the second forwarding path (namely, the basic topology) is B→F→D, and the node B receives a data packet from the node A. A topology identifier field in the data packet indicates that a type corresponding to a forwarding path is a first type. However, when the node B perceives that the nexthop node C of the node B on the first forwarding path is faulty or perceives that a link from the node B to the node C is faulty, the node B changes the type indicated by the topology identifier field in the data packet from the first type to a second type, and sends the data packet based on the second forwarding path, that is, searches, based on a destination address field in a packet header of the data packet, a second forwarding table for a forwarding entry corresponding to a network address indicated by the destination address field, and determines, based on the forwarding entry, that a next hop is the node F. Therefore, the node B sends the data packet to the node F.

It can be learned that, in embodiments of this application, the topology identifier field is carried in the packet header of the data packet, so that forwarding behaviors with different quality of service on a data plane can be supported. For example, quality of service of forwarding based on the advanced topology is higher than quality of service of forwarding based on the basic topology. In this way, the packet header has better extensibility, and communication quality is improved. In addition, when a fault occurs in the advanced topology, service traffic is switched from the advanced topology to the basic topology, to implement fast rerouting and reduce service traffic loss. In addition, before the advanced topology is established, the basic topology is used for forwarding, so that a requirement for immediate service communication is met.

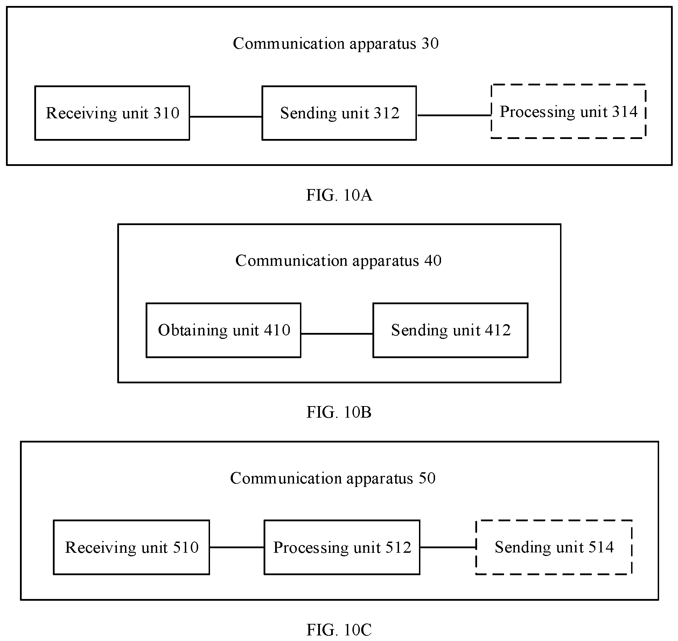

Refer to FIG. 10A. FIG. 10A is a diagram of a functional structure of a communication apparatus according to an embodiment of this application. The communication apparatus 30 includes a receiving unit 310 and a sending unit 312. The communication apparatus 30 may be implemented by hardware, software, or a combination of software and hardware.

In an implementation, the receiving unit 310 is configured to receive a data packet, where a packet header of the data packet includes a topology identifier field, the topology identifier field indicates a type of a forwarding path corresponding to the data packet, the type includes a first type and a second type, and quality of service of a first forwarding path corresponding to the first type is higher than quality of service of a second forwarding path corresponding to the second type. The sending unit 312 is configured to forward the data packet based on the topology identifier field. In this case, the communication apparatus 30 may be configured to implement the method described in embodiments in FIG. 8. In embodiments in FIG. 8, the receiving unit 310 may be configured to perform S801, and the sending unit 312 may be configured to perform S802.

In another implementation, the communication apparatus 30 further includes a processing unit 314. The receiving unit 310 is configured to receive a first message from a source node, where the first message is used to request to establish a first forwarding path from the source node to a destination node, and the first forwarding path meets a quality of service condition. The processing unit 314 is configured to determine the first forwarding path based on the first message. The sending unit 312 is configured to send a second message when a resource is successfully reserved for the first forwarding path locally. The second message is used to notify a next hop of a first intermediate node on the first forwarding path to reserve a resource for the first forwarding path. A first type field in the first message indicates that a type of the first message is a resource reservation request message, and a second type field in the second message indicates that a type of the second message is a resource reservation path message. In this case, the communication apparatus 30 may be configured to implement the method on the node 1 side described in embodiments in FIG. 4. In embodiments in FIG. 4, the receiving unit 310 may be configured to perform S402, the processing unit 314 may be configured to perform S403 and S404, and the sending unit 312 may be configured to perform S405, S406, or S408.

Refer to FIG. 10B. FIG. 10B is a diagram of a functional structure of a communication apparatus according to an embodiment of this application. The communication apparatus 40 includes an obtaining unit 410 and a sending unit 412. The communication apparatus 40 may be implemented by hardware, software, or a combination of software and hardware.

The obtaining unit 410 is configured to obtain a first message, where the first message includes a first type field, a source location identifier field, and a location identifier field, the first type field indicates that a type of the first message is a resource reservation request message, the source location identifier field indicates a network address of a first intermediate node, and the location identifier field indicates a network address of a second intermediate node. The sending unit 412 is configured to send the first message to the first intermediate node, where the first message is used to request to establish a first forwarding path from a source node to a destination node, the first forwarding path meets a quality of service condition, and the destination node is the second intermediate node or the destination node is an end node that accesses the second intermediate node.

The communication apparatus 40 may be configured to implement the method on the source node side described in embodiments in FIG. 4. In embodiments in FIG. 4, the obtaining unit 410 may be configured to perform S401, and the sending unit 412 may be configured to perform S402. In some possible embodiments, the obtaining unit 410 may be configured to perform S406 or S408.

In some possible embodiments, the communication apparatus 40 further includes a processing unit (not shown in the figure), and the processing unit may be configured to perform S409 in FIG. 4.

Refer to FIG. 10C. FIG. 10C is a diagram of a functional structure of a communication apparatus according to an embodiment of this application. The communication apparatus 50 includes a receiving unit 510 and a processing unit 512. The communication apparatus 50 may be implemented by hardware, software, or a combination of software and hardware.

The receiving unit 510 is configured to receive a first message, where a first type field in the first message indicates that a type of the first message is a resource reservation path message, and a first return code field in the first message indicates that a resource reservation result of a first forwarding path on a target node is a success in reservation, the target node is a previous intermediate node of a second intermediate node on the first forwarding path, the first message indicates the second intermediate node to reserve a resource for the first forwarding path, and the first forwarding path meets a quality of service QoS condition. The processing unit 512 is configured to locally reserve a resource for the first forwarding path based on the first message.

The communication apparatus 50 may be configured to implement the method on the node 2 side described in embodiments in FIG. 4. In embodiments in FIG. 4, the receiving unit 510 may be configured to perform S405, and the processing unit 512 may be configured to perform S407. In some possible embodiments, the communication apparatus 50 further includes a sending unit 514 that may be configured to perform S408.

Division into units in embodiments shown in FIG. 10A, FIG. 10B, or FIG. 10C is merely logical function division. In actual implementation, all or some of the units may be integrated into one physical entity, or may be physically separated. In addition, a unit in the apparatus may be implemented in a form of software invoked by a processor. For example, the apparatus includes the processor, the processor is connected to a memory, the memory stores instructions, and the processor invokes the instructions stored in the memory, to implement any one of the foregoing methods or to implement functions of the units in the apparatus. The processor is, for example, a general-purpose processor, for example, a central processing unit (central processing unit, CPU) or a microprocessor, and the memory is a memory in the apparatus or a memory outside the apparatus. Alternatively, a unit in the apparatus may be implemented in a form of a hardware circuit, and the hardware circuit may be designed to implement functions of some or all of the units. The hardware circuit may be understood as one or more processors. For example, in an implementation, the hardware circuit is an application-specific integrated circuit (application-specific integrated circuit, ASIC), and a logical relationship between elements in the circuit is designed to implement the functions of some or all of the units. For another example, in another implementation, the hardware circuit may be implemented by using a programmable logic device (programmable logic device, PLD). A field programmable gate array (field programmable gate array, FPGA) is used as an example. The field programmable gate array may include a large quantity of logic gate circuits, and a connection relationship between the logic gate circuits is configured by using a configuration file, to implement the functions of some or all of the units. All units of the apparatus may be implemented in a form of software invoked by a processor, or all units may be implemented in a form of a hardware circuit, or some units may be implemented in a form of software invoked by a processor, and a remaining part may be implemented in a form of a hardware circuit.

In embodiments of this application, the processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function through a logical relationship of a hardware circuit. The logical relationship of the hardware circuit is fixed or may be reconfigurable. For example, the processor is a hardware circuit implemented by an application-specific integrated circuit (application-specific integrated circuit, ASIC) or a programmable logic device (programmable logic device, PLD), for example, an FPGA. In the reconfigurable hardware circuit, a process in which the processor loads a configuration document to implement hardware circuit configuration may be understood as a process in which the processor loads instructions to implement functions of some or all of the foregoing units. In addition, the hardware circuit may be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU).

It can be learned that each unit of the foregoing apparatus may be one or more processors (or processing circuits) configured to implement the foregoing method, for example, a CPU, a GPU, an NPU, a TPU, a DPU, a microprocessor, a DSP, an ASIC, an FPGA, or a combination of at least two of these processor forms.

In addition, all or some of the units of the apparatus may be integrated, or may be implemented independently. In an implementation, the units may be integrated together and implemented in a form of a system-on-a-chip (system-on-a-chip, SOC). The SOC may include at least one processor, configured to implement any one of the foregoing methods or implement functions of the units of the apparatus. Types of the at least one processor may be different. For example, the at least one processor includes a CPU and an FPGA, or includes a CPU and an NPU.

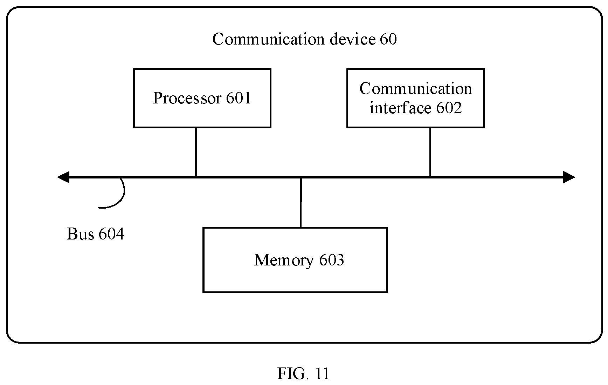

Refer to FIG. 11. FIG. 11 is a diagram of a structure of a communication device according to an embodiment of this application. As shown in FIG. 11, the communication device 60 includes a processor 601, a communication interface 602, a memory 603, and a bus 604. The processor 601, the memory 603, and the communication interface 602 communicate with each other through the bus 604.

It should be understood that quantities of processors and memories in the communication device 60 are not limited in this application.

In an implementation, the communication device 60 may be a network device having a routing and forwarding capability, for example, may be a wireless network device, or may be a router, a layer 3 switch (or referred to as a multi-layer switch), or the like, or may be a component that is used in the network device and that can implement the foregoing method. The component may be, for example, an integrated circuit, a line card, or a chip.

In another implementation, the communication device 60 may be, for example, an electronic device having a communication capability, for example, may be an independent device like a handheld terminal, a vehicle, a vehicle-mounted device, a network side device, user equipment, an access terminal, a subscriber unit, a subscriber station, a mobile station, a mobile console, a remote station, a remote terminal, a wireless communication device, a user agent, or a user apparatus, or may be a component (for example, a chip or an integrated circuit) included in an independent device, or may be any possible intelligent terminal device (for example, a mobile phone), an intelligent transportation device (for example, a vehicle or an unmanned aerial vehicle), an intelligent manufacturing device, a smart home device (for example, a large screen or a speaker), or the like, or may be a component that is used in the electronic device and that can implement the foregoing method. The component may be, for example, an integrated circuit, a line card, or a chip. In this case, for details of the communication device 60, refer to the corresponding descriptions of the end node in embodiments in FIG. 1. Details are not described herein again.

The bus 604 may be a peripheral component interconnect (peripheral component interconnect, PCI) bus, an extended industry standard architecture (extended industry standard architecture, EISA) bus, or the like. The bus may be classified as an address bus, a data bus, a control bus, and the like. For ease of representation, the bus is represented by using only one line in FIG. 11. However, this does not indicate that there is only one bus or only one type of bus. The bus 604 may include a path for information transmission between various components (for example, the memory 603, the processor 601, and the communication interface 602) of the communication device 60.

For details of the processor 601, refer to the related descriptions of the processor in the foregoing embodiments. Details are not described herein again.

The memory 603 is configured to provide storage space, and the storage space may store data such as an operating system and a computer program. The memory 603 may be one or a combination of a random access memory (random access memory, RAM), an erasable programmable read only memory (erasable programmable read only memory, EPROM), a read-only memory (read-only memory, ROM), a compact disc read-only memory (compact disc read-only memory, CD-ROM), or the like. The memory 603 may exist independently, or may be integrated into the processor 601.

The communication interface 602 may be configured to provide information input or output for the processor 601. Alternatively, the communication interface 602 may be configured to receive data sent from the outside and/or send data to the outside. The communication interface 602 may be a wireless link interface, for example, an air interface, a cellular network interface, or a wireless local area network interface, or may be a wired link interface including an Ethernet cable or the like, or may include a transmitter (for example, a radio frequency transmitter or an antenna) coupled to the interface, a receiver, or the like. For example, when the communication interface 602 is a wireless link interface, the communication interface 602 may be configured to receive and send information based on one or more other types of wireless communication (for example, protocols). The wireless communication is, for example, Bluetooth, an IEEE 802.11 communication protocol, a cellular technology, worldwide interoperability for microwave access (worldwide interoperability for microwave access, WiMAX), or Long Term Evolution (Long Term Evolution, LTE), a ZigBee protocol, dedicated short-range communication (dedicated short-range communication, DSRC), radio frequency identification (radio frequency identification, RFID) communication, and the like.

The processor 601 in the communication device 60 is configured to read the computer program stored in the memory 603, and is configured to perform the foregoing method, for example, the method described in FIG. 4.

In a possible design, the communication device 60 may be one or more modules in an execution body (a node 1) for performing the method shown in FIG. 4, and the processor 601 may be configured to read one or more computer programs stored in the memory, to perform the following operations:
receiving a first message from a source node through the receiving unit 310, where the first message is used to request to establish a first forwarding path from the source node to a destination node, and the first forwarding path meets a quality of service condition; and the processing unit 314 is configured to determine the first forwarding path based on the first message; and
sending a second message through the sending unit 312 when a resource is successfully reserved for the first forwarding path locally, where the second message is used to notify a next hop of a first intermediate node on the first forwarding path to reserve a resource for the first forwarding path, a first type field in the first message indicates that a type of the first message is a resource reservation request message, and a second type field in the second message indicates that a type of the second message is a resource reservation path message.

In a possible design, the communication device 60 may be one or more modules in an execution body (the source node) for performing the method shown in FIG. 4, and the processor 601 may be configured to read one or more computer programs stored in the memory, to perform the following operations:
obtaining a first message through the obtaining unit 410, where the first message includes a first type field, a request source location identifier field, and a request location identifier field, the first type field indicates that a type of the first message is a resource reservation request message, the request source location identifier field indicates a network address of a first intermediate node, and the request location identifier field indicates a network address of a second intermediate node; and
sending the first message to the first intermediate node through the sending unit 412, where the first message is used to request to establish a first forwarding path from the source node to a destination node, the first forwarding path meets a quality of service condition, and the destination node is the second intermediate node or the destination node is an end node that accesses the second intermediate node.

In a possible design, the communication device 60 may be one or more modules in an execution body (a node 2) for performing the method shown in FIG. 4, and the processor 601 may be configured to read one or more computer programs stored in the memory, to perform the following operations:
receiving a first message through the receiving unit 510, where a first type field in the first message indicates that a type of the first message is a resource reservation path message, and a first return code field in the first message indicates that a resource reservation result of a first forwarding path on a target node is a success in reservation, the target node is a previous intermediate node of a second intermediate node on the first forwarding path, the first message indicates the second intermediate node to reserve a resource for the first forwarding path, and the first forwarding path meets a quality of service condition; and
locally reserving the resource for the first forwarding path based on the first message.

In a possible design, the communication device 60 may be one or more modules in an execution body for performing the method shown in FIG. 8, and the processor 601 may be configured to read one or more computer programs stored in the memory, to perform the following operations:
receiving a data packet through the receiving unit 310, where a packet header of the data packet includes a topology identifier field, the topology identifier field indicates a type of a forwarding path corresponding to the data packet, the type includes a first type and a second type, and quality of service of a first forwarding path corresponding to the first type is higher than quality of service of a second forwarding path corresponding to the second type; and
forwarding the data packet through the sending unit 312 based on the topology identifier field.

In the foregoing embodiments in this specification, the descriptions of each embodiment have respective focuses. For a part that is not described in detail in an embodiment, refer to related descriptions in another embodiment.

It should be noted that, a person of ordinary skill in the art may understand that, all or some of the steps of the methods in the foregoing embodiments may be implemented by a program instructing related hardware. The program may be stored in a computer-readable storage medium. The storage medium includes a read-only memory (read-only memory, ROM), a random access memory (random access memory, RAM), a programmable read-only memory (programmable read-only memory, PROM), an erasable programmable read-only memory (erasable programmable read-only memory, EPROM), a one-time programmable read-only memory (one-time programmable read-only memory, OTPROM), an electrically-erasable programmable read-only memory (electrically-erasable programmable read-only memory, EEPROM), a compact disc read-only memory (compact disc read-only memory, CD-ROM), or another optical disk memory, a magnetic disk memory, a magnetic tape memory, or any other computer-readable medium that can be configured to carry or store data.

The technical solutions of this application essentially, or the contributing part, or all or some of the technical solutions may be implemented in a form of a software product. The computer program product is stored in a storage medium and includes several instructions for instructing a device (which may be a personal computer, a server, or a network device, a robot, a single-chip microcomputer, a chip, a robot, or the like) to perform all or some of the steps of the methods described in embodiments of this application.

## Claims

1. A communication method, wherein the method comprises:
receiving a data packet, wherein a packet header of the data packet comprises a topology identifier field, the topology identifier field indicates a type of a forwarding path corresponding to the data packet, the type comprises a first type and a second type, and quality of service of a first forwarding path corresponding to the first type is higher than quality of service of a second forwarding path corresponding to the second type; and
forwarding the data packet based on the topology identifier field.

2. The method according to claim 1, wherein when the type indicated by the topology identifier field is the first type, the packet header further comprises a flow label field, the flow label field indicates a flow label of a data flow to which the data packet belongs, and the flow label is used to guide forwarding of the data packet.

3. The method according to claim 1 or 2, wherein
the forwarding the data packet based on the topology identifier field comprises:
when the type indicated by the topology identifier field is the first type, sending the data packet based on the first forwarding path.

4. The method according to claim 3, wherein the first type corresponds to a first forwarding table, and the sending the data packet based on the first forwarding path comprises:
obtaining a first forwarding entry from the first forwarding table based on a destination address field, a source address field, and the flow label field in the packet header; and
sending the data packet based on the first forwarding entry, wherein
the first forwarding entry is a mapping relationship among a network address indicated by the destination address field, a network address of a source node indicated by the source address field, the flow label indicated by the flow label field, a nexthop layer 2 identifier of a local node on the first forwarding path, an out interface identifier of the local node, a transport channel identifier TCID, and a logical channel identifier LCID.

5. The method according to claim 1 or 2, wherein
the forwarding the data packet based on the topology identifier field comprises:
when the topology identifier field indicates the first type, and it is detected that a next node of a local node on the first forwarding path is faulty or a link from the local node to the next node is faulty, changing the type indicated by the topology identifier field in the packet header from the first type to the second type, and sending a changed data packet based on the second forwarding path.

6. The method according to claim 5, wherein the second type corresponds to a second forwarding table, and the sending a changed data packet based on the second forwarding path comprises:
obtaining a second forwarding entry from the second forwarding table based on a destination address field in the packet header; and
sending the changed data packet based on the second forwarding entry, wherein
the second forwarding entry is a mapping relationship among a network address indicated by the destination address field, a nexthop layer 2 identifier of the local node on the second forwarding path, an out interface identifier of the local node, a transport channel identifier TCID, and a logical channel identifier LCID.

7. A system for establishing a resource reservation path, wherein the system comprises:
a source node, configured to send a first message to a first intermediate node accessed by the source node, wherein the first message is used to request to establish a first forwarding path from the source node to a destination node, and the first forwarding path meets a quality of service condition; and
the first intermediate node, configured to: determine the first forwarding path based on the first message, and send a second message when a resource is successfully reserved for the first forwarding path locally, wherein the second message is used to notify a next hop of the first intermediate node on the first forwarding path to reserve a resource for the first forwarding path, wherein
the first message comprises a first type field, a request source location identifier field, and a request location identifier field, wherein the first type field indicates that a type of the first message is a resource reservation request message, the request source location identifier field indicates a network address of the first intermediate node, and the request location identifier field indicates a network address of a second intermediate node; and the destination node is the second intermediate node or the destination node is an end node that accesses the second intermediate node; and
a second type field in the second message indicates that a type of the second message is a resource reservation path message.

8. The system according to claim 7, wherein the source node is specifically configured to send, based on a service requirement for sending a data packet to the destination node, the first message to the first intermediate node accessed by the source node.

9. The system according to claim 7 or 8, wherein the first message further comprises a request flow label field, and the request flow label field indicates a flow label allocated by the source node to the first forwarding path.

10. The system according to any one of claims 7 to 9, wherein the first message further comprises a keep alive time field, and the keep alive time field indicates keepalive duration of the first forwarding path.

11. The system according to any one of claims 7 to 10, wherein the first message further comprises a request source address field and a request destination address field, the request source address field indicates a network address of the source node that requests to establish the first forwarding path, and the request destination address field indicates a network address of the destination node corresponding to the first forwarding path.

12. The system according to any one of claims 7 to 11, wherein the first message further comprises at least one of the following fields:
a message length field indicating a length of the first message;
a transaction number field identifying that the source node sends the first message once; and
a link quality information type-length-value TLV field indicating a link quality requirement met by the first forwarding path.

13. The system according to any one of claims 7 to 12, wherein the second message further comprises a first type-length-value TLV field, a V field of the first TLV field comprises a first return code field, and the first return code field indicates that a resource reservation result of the first forwarding path on the first intermediate node is a success in reservation.

14. The system according to claim 13, wherein the V field of the first TLV field further comprises an ordered set of an identifier indicating at least one link of the first forwarding path, and an identifier of each link in the at least one link is obtained based on a neighbor system identifier corresponding to the link and identifiers of interfaces of two neighboring intermediate nodes corresponding to the link.

15. The system according to claim 13 or 14, wherein the V field of the first TLV field further comprises a first path link index field, and the first path link index field indicates an index of a link on which resource reservation is currently performed and that is in the at least one link of the first forwarding path.

16. The system according to any one of claims 13 to 15, wherein the second message further comprises the request source location identifier field, the request location identifier field, the request flow label field, the keep alive time field, the request source address field, and the request destination address field that are in the first message.

17. The system according to any one of claims 7 to 16, wherein
the first intermediate node is further configured to send a third message to the source node when a resource fails to be locally reserved for the first forwarding path, wherein a third type field in the third message indicates that a type of the third message is a resource reservation confirm message, and a second return code field in the third message indicates that the resource reservation result of the first forwarding path on the first intermediate node is a failure in reservation; and
the source node is further configured to determine, based on the second return code field in the third message, that an establishment result of the first forwarding path is that establishment fails.

18. The system according to any one of claims 7 to 16, wherein the system further comprises the second intermediate node, and the second intermediate node is a last intermediate node on the first forwarding path; and
the second intermediate node is configured to: locally reserve a resource for the first forwarding path based on a received fourth message, and send a fifth message, wherein
a fourth type field in the fourth message indicates that a type of the fourth message is a resource reservation path message, and a third return code field in the fourth message indicates that a resource reservation result of the first forwarding path on a target node is a success in reservation, and the target node is a previous intermediate node of the second intermediate node on the first forwarding path; and
a fifth type field in the fifth message indicates that a type of the fifth message is a resource reservation confirm message, and a fourth return code field in the fifth message indicates a resource reservation result of the first forwarding path on the second intermediate node.

19. The system according to claim 18, wherein
the first intermediate node is further configured to: receive the fifth message, obtain the network address of the source node from a request source address field in the fifth message, and send the fifth message to the source node based on the network address of the source node; and
the source node is further configured to determine the establishment result of the first forwarding path based on the fourth return code field in the fifth message.

20. The system according to claim 19, wherein the source node is specifically configured to:
when the resource reservation result indicated by the fourth return code field is a failure in reservation, determine that the establishment result of the first forwarding path is that establishment fails; or
when the resource reservation result indicated by the fourth return code field is a success in reservation, determine that the establishment result of the first forwarding path is that establishment succeeds.

21. The system according to any one of claims 18 to 20, wherein the fifth message further comprises a second type-length-value TLV field, and the fourth return code field is comprised in a V field of the second TLV field.

22. The system according to claim 21, wherein the V field of the second TLV field further comprises the ordered set of the identifier indicating the at least one link of the first forwarding path, and the identifier of each link in the at least one link is obtained based on the neighbor system identifier corresponding to the link and the identifiers of the interfaces of the two neighboring intermediate nodes corresponding to the link.

23. The system according to claim 21 or 22, wherein the V field of the second TLV field further comprises a second path link index field, and the second path link index field indicates that an index of a link on which resource reservation is currently performed and that is in the at least one link of the first forwarding path is an index of a last link in the at least one link.

24. The system according to any one of claims 18 to 23, wherein the fifth message further comprises the request source location identifier field, the request location identifier field, the request flow label field, the keep alive time field, the request source address field, and the request destination address field that are in the first message.

25. A method for establishing a resource reservation path, applied to a source node, wherein the source node is an end node that accesses a first intermediate node, and the method comprises:
obtaining a first message, wherein the first message comprises a first type field, a request source location identifier field, and a request location identifier field, the first type field indicates that a type of the first message is a resource reservation request message, the request source location identifier field indicates a network address of the first intermediate node, and the request location identifier field indicates a network address of a second intermediate node; and
sending the first message to the first intermediate node, wherein the first message is used to request to establish a first forwarding path from the source node to a destination node, the first forwarding path meets a quality of service QoS condition, and the destination node is the second intermediate node or the destination node is an end node that accesses the second intermediate node.

26. The method according to claim 25, wherein the obtaining a first message comprises:
generating the first message based on a service requirement for sending a data packet to the destination node.

27. The method according to claim 25 or 26, wherein the first message further comprises a request flow label field, and the request flow label field indicates a flow label allocated by the source node to the first forwarding path.

28. The method according to any one of claims 25 to 27, wherein the first message further comprises a keep alive time field, and the keep alive time field indicates keepalive duration of the first forwarding path.

29. The method according to any one of claims 25 to 28, wherein the first message further comprises a request source address field and a request destination address field, the request source address field indicates a network address of the source node that requests to establish the first forwarding path, and the request destination address field indicates a network address of the destination node corresponding to the first forwarding path.

30. The method according to any one of claims 25 to 29, wherein the first message further comprises at least one of the following fields:
a message length field indicating a length of the first message;
a transaction number field identifying that the source node sends the first message once; and
a link quality information type-length-value TLV field indicating a link quality requirement met by the first forwarding path.

31. The method according to any one of claims 25 to 30, wherein the method further comprises:
receiving a second message from the first intermediate node, wherein a second type field of the second message indicates that a type of the second message is a resource reservation confirm message, the second message comprises a return code field, and the return code field indicates a resource reservation result of the first forwarding path; and
determining an establishment result of the first forwarding path based on the return code field in the second message.

32. The method according to claim 31, wherein the determining an establishment result of the first forwarding path based on the return code field in the second message comprises:
when the resource reservation result indicated by the return code field is a failure in reservation, determining that the establishment result of the first forwarding path is that establishment fails; or
when the resource reservation result indicated by the return code field is a success in reservation, determining that the establishment result of the first forwarding path is that establishment succeeds.

33. The method according to claim 31 or 32, wherein the second message further comprises a type-length-value TLV field, a V field of the TLV field comprises an ordered set of an identifier indicating at least one link of the first forwarding path, and an identifier of each link in the at least one link is obtained based on a neighbor system identifier corresponding to the link and identifiers of interfaces of two neighboring intermediate nodes corresponding to the link.

34. The method according to claim 33, wherein the V field of the TLV field further comprises a path link index field, and the path link index field indicates an index of a link on which resource reservation is currently performed and that is in the at least one link of the first forwarding path.

35. The method according to claim 34, wherein when the resource reservation result indicated by the return code field is a success in reservation, the index indicated by the path link index field is an index of a last link in the at least one link of the first forwarding path.

36. The method according to any one of claims 33 to 35, wherein the return code field is comprised in the V field of the TLV field.

37. The method according to any one of claims 31 to 36, wherein the second message further comprises the request source location identifier field, the request location identifier field, the request flow label field, the keep alive time field, the request source address field, and the request destination address field that are in the first message.

38. The method according to any one of claims 25 to 37, wherein after the sending the first message to the first intermediate node, the method further comprises:
sending the data packet, wherein a packet header of the data packet comprises a topology identifier field, the topology identifier field indicates a type of a forwarding path corresponding to the data packet, the type comprises a first type and a second type, and quality of service of the first forwarding path corresponding to the first type is higher than quality of service of a second forwarding path corresponding to the second type.

39. The method according to claim 38, wherein
when the first forwarding path is not established, the topology identifier field indicates that the type of the forwarding path corresponding to the data packet is the second type; or
when the first forwarding path is successfully established, the topology identifier field indicates that the type of the forwarding path corresponding to the data packet is the first type.

40. The method according to claim 38 or 39, wherein when the topology identifier field indicates the first type, the packet header further comprises a flow label field, the flow label field indicates a flow label of a data flow to which the data packet belongs, and the flow label is used to guide forwarding of the data packet.

41. A method for establishing a resource reservation path, applied to a first intermediate node, wherein a source node is an end node that accesses the first intermediate node, and the method comprises:
receiving a first message from the source node, wherein the first message is used to request to establish a first forwarding path from the source node to a destination node, and the first forwarding path meets a quality of service condition; and
determining the first forwarding path based on the first message and sending a second message when a resource is successfully reserved for the first forwarding path locally, wherein the second message is used to notify a next hop of the first intermediate node on the first forwarding path to reserve a resource for the first forwarding path, wherein
a first type field in the first message indicates that a type of the first message is a resource reservation request message, and a second type field in the second message indicates that a type of the second message is a resource reservation path message.

42. The method according to claim 41, wherein the first message further comprises a request source location identifier field and a request location identifier field, the request source location identifier field indicates a network address of the first intermediate node, and the request location identifier field indicates a network address of a second intermediate node; and the destination node is the second intermediate node or the destination node is an end node that accesses the second intermediate node; and
the determining the first forwarding path based on the first message comprises:
determining the first forwarding path based on the request source location identifier field and the request location identifier field.

43. The method according to claim 41 or 42, wherein the first message further comprises a request flow label field, and the request flow label field indicates a flow label allocated by the source node to the first forwarding path.

44. The method according to any one of claims 41 to 43, wherein the first message further comprises a keep alive time field, and the keep alive time field indicates keepalive duration of the first forwarding path.

45. The method according to any one of claims 41 to 44, wherein the first message further comprises a request source address field and a request destination address field, the request source address field indicates a network address of the source node that requests to establish the first forwarding path, and the request destination address field indicates a network address of the destination node corresponding to the first forwarding path.

46. The method according to any one of claims 41 to 45, wherein the first message further comprises at least one of the following fields:
a message length field indicating a length of the first message;
a transaction number field identifying that the source node sends the first message once; and
a link quality information type-length-value TLV field indicating a link quality requirement met by the first forwarding path.

47. The method according to any one of claims 41 to 46, wherein the second message further comprises a first type-length-value TLV field, a V field of the first TLV field comprises a first return code field, and the first return code field indicates that a resource reservation result of the first forwarding path on the source node is a success in reservation.

48. The method according to claim 47, wherein the V field of the first TLV field further comprises an ordered set of an identifier indicating at least one link of the first forwarding path, and an identifier of each link in the at least one link is obtained based on a neighbor system identifier corresponding to the link and identifiers of interfaces of two neighboring intermediate nodes corresponding to the link.

49. The method according to claim 47 or 48, wherein the V field of the first TLV field further comprises a first path link index field, and the first path link index field indicates an index of a link on which resource reservation is currently performed and that is in the at least one link of the first forwarding path.

50. The method according to any one of claims 47 to 49, wherein the second message further comprises the request source location identifier field, the request location identifier field, the request flow label field, the keep alive time field, the request source address field, and the request destination address field that are in the first message.

51. The method according to any one of claims 41 to 50, wherein the method further comprises:
sending a third message to the source node when the resource fails to be locally reserved for the first forwarding path, wherein
a third type field in the third message indicates that a type of the third message is a resource reservation confirm message, and a second return code field in the third message indicates that the resource reservation result of the first forwarding path on the first intermediate node is a failure in reservation.

52. The method according to any one of claims 41 to 50, wherein after the sending a second message, the method further comprises:
receiving a fourth message, wherein a third type field in the fourth message indicates that a type of the fourth message is a resource reservation confirm message, and a third return code field in the fourth message indicates a resource reservation result of the first forwarding path;
obtaining the network address of the source node from a request source address field in the fourth message; and
sending the fourth message to the source node based on the network address of the source node.

53. The method according to claim 52, wherein the fourth message further comprises a second type-length-value TLV field, a V field in the second TLV field comprises the ordered set of the identifier indicating the at least one link of the first forwarding path, and the identifier of each link in the at least one link is obtained based on the neighbor system identifier corresponding to the link and the identifiers of the interfaces of the two neighboring intermediate nodes corresponding to the link.

54. The method according to claim 53, wherein the V field in the second TLV field further comprises a second path link index field, and the second path link index field indicates an index of a link on which resource reservation is currently performed and that is in the at least one link of the first forwarding path.

55. The method according to claim 54, wherein when the resource reservation result indicated by the third return code field is a success in reservation, the index indicated by the second path link index field is an index of a last link in the at least one link of the first forwarding path.

56. The method according to any one of claims 52 to 55, wherein the third return code field is comprised in the V field in the second TLV field.

57. The method according to any one of claims 52 to 56, wherein the fourth message further comprises the request source location identifier field, the request location identifier field, the request flow label field, the keep alive time field, the request source address field, and the request destination address field that are in the first message.

58. The method according to any one of claims 42 to 57, wherein the method further comprises:
generating a first forwarding table when the resource is successfully reserved for the first forwarding path locally, wherein the first forwarding table comprises a first forwarding entry, wherein
the first forwarding entry is a mapping relationship among the network address of the second intermediate node indicated by the request location identifier field in the first message, the network address of the source node indicated by the request source address field in the first message, the flow label indicated by the flow label field in the first message, a nexthop layer 2 identifier of the first intermediate node on the first forwarding path, an out interface identifier of the first intermediate node, a transport channel identifier TCID, and a logical channel identifier LCID.

59. The method according to claim 58, wherein when the network address indicated by the request location identifier field in the first message is different from the network address indicated by the request destination address field in the first message, the first forwarding table further comprises a second forwarding entry, wherein
the second forwarding entry is a mapping relationship among the network address of the destination node indicated by the request destination address field in the first message, the network address of the source node indicated by the request source address field in the first message, the flow label indicated by the flow label field in the first message, the nexthop layer 2 identifier of the first intermediate node on the first forwarding path, the out interface identifier of the first intermediate node, the transport channel identifier TCID, and the logical channel identifier LCID.

60. The method according to claim 58 or 59, wherein after the generating a first forwarding table, the method further comprises:
when time for which a forwarding entry in the first forwarding table is not accessed by a data packet reaches preset keep alive time, deleting the forwarding entry from the first forwarding table.

61. A method for establishing a resource reservation path, applied to a second intermediate node, wherein the method comprises:
receiving a first message, wherein a first type field in the first message indicates that a type of the first message is a resource reservation path message, and a first return code field in the first message indicates that a resource reservation result of a first forwarding path on a target node is a success in reservation, the target node is a previous intermediate node of the second intermediate node on the first forwarding path, the first message indicates the second intermediate node to reserve a resource for the first forwarding path, and the first forwarding path meets a quality of service QoS condition; and
locally reserving the resource for the first forwarding path based on the first message.

62. The method according to claim 61, wherein the first message further comprises a first type-length-value TLV field, a V field in the first TLV field comprises an ordered set of an identifier indicating at least one link of the first forwarding path, and an identifier of each link in the at least one link is obtained based on a neighbor system identifier corresponding to the link and identifiers of interfaces of two neighboring intermediate nodes corresponding to the link.

63. The method according to claim 62, wherein the V field in the first TLV field further comprises a first path link index field, and the first path link index field indicates an index of a link on which resource reservation is currently performed and that is in the at least one link of the first forwarding path.

64. The method according to claim to 62 or 63, wherein the first message further comprises a request source address field and a request destination address field, the request source address field indicates a network address of a source node that requests to establish the first forwarding path, and the request destination address field indicates a network address of a destination node corresponding to the first forwarding path.

65. The method according to claim 64, wherein the first message further comprises a request source location identifier field and a request location identifier field, the request source location identifier field indicates a network address of a first intermediate node accessed by the source node, and the request location identifier field indicates a network address of a last intermediate node on the first forwarding path.

66. The method according to claim 64 or 65, wherein the first message further comprises a request flow label field, and the request flow label field indicates a flow label allocated by the source node to the first forwarding path.

67. The method according to any one of claims 61 to 66, wherein the first message further comprises a keep alive time field, and the keep alive time field indicates keepalive duration of the first forwarding path.

68. The method according to any one of claims 61 to 67, wherein the first message further comprises at least one of the following fields:
a message length field indicating a length of the first message,
a transaction number field identifying that the source node sends the first message once; and
a link quality information type-length-value TLV field indicating a link quality requirement met by the first forwarding path.

69. The method according to any one of claims 61 to 68, wherein when the second intermediate node is not the last intermediate node on the first forwarding path, the method further comprises:
sending a second message when the resource is successfully reserved for the first forwarding path locally, wherein
the second message indicates a next hop of the second intermediate node on the first forwarding path to reserve a resource for the first forwarding path, and a second type field in the second message indicates that a type of the second message is the resource reservation path message, and a second return code field in the second message indicates that a resource reservation result of the first forwarding path on the second intermediate node is a success in reservation.

70. The method according to any one of claims 61 to 68, wherein when the second intermediate node is not the last intermediate node on the first forwarding path, the method further comprises:
sending, when the resource fails to be locally reserved for the first forwarding path, a third message to the first intermediate node accessed by the source node, wherein the source node is an end node that requests to establish the first forwarding path, wherein
a third type field in the third message indicates that a type of the third message is a resource reservation confirm message, and a third return code field in the third message indicates that a resource reservation result of the first forwarding path on the second intermediate node is a failure in reservation.

71. The method according to any one of claims 61 to 68, wherein when the second intermediate node is the last intermediate node on the first forwarding path, the method further comprises:
sending a fourth message, so that the source node that requests to establish the first forwarding path determines an establishment result of the first forwarding path based on a fourth return code field in the fourth message, wherein
the fourth return code field indicates a resource reservation result of the first forwarding path on the second intermediate node, and a fourth type field in the fourth message indicates that a type of the fourth message is a resource reservation confirm message.

72. The method according to claim 71, wherein the fourth message further comprises a second type-length-value TLV field, a V field in the second TLV field comprises the ordered set of the identifier indicating the at least one link of the first forwarding path, and the identifier of each link in the at least one link is obtained based on the neighbor system identifier corresponding to the link and the identifiers of the interfaces of the two neighboring intermediate nodes corresponding to the link.

73. The method according to claim 72, wherein the V field in the second TLV field further comprises a second path link index field, and the second path link index field indicates that an index of a link on which resource reservation is currently performed and that is in the at least one link of the first forwarding path is an index of a last link in the at least one link.

74. The method according to claim 72 or 73, wherein the fourth message further comprises the request source location identifier field, the request location identifier field, the request flow label field, the keep alive time field, the request source address field, and the request destination address field that are in the first message.

75. The method according to any one of claims 61 to 74, wherein the method further comprises:
generating a first forwarding table when the resource is successfully reserved for the first forwarding path locally, wherein the first forwarding table comprises a first forwarding entry, wherein
the first forwarding entry is a mapping relationship among the network address indicated by the request location identifier field in the first message, the network address indicated by the request source address field in the first message, the flow label indicated by the flow label field in the first message, a nexthop layer 2 identifier of the second intermediate node, an out interface identifier of the second intermediate node, a transport channel identifier TCID, and a logical channel identifier LCID.

76. The method according to claim 75, wherein when the network address indicated by the request location identifier field in the first message is different from the network address indicated by the request destination address field in the first message, the first forwarding table further comprises a second forwarding entry, wherein
the second forwarding entry is a mapping relationship among the network address indicated by the request destination address field in the first message, the network address indicated by the request source address field in the first message, the flow label indicated by the flow label field in the first message, the nexthop layer 2 identifier of the second intermediate node, the out interface identifier of the second intermediate node, the transport channel identifier TCID, and the logical channel identifier LCID.

77. The method according to claim 75 or 76, wherein after the generating a first forwarding table, the method further comprises:
when time for which a forwarding entry in the first forwarding table is not accessed by a data packet reaches preset keep alive time, deleting the forwarding entry from the first forwarding table.

78. A communication apparatus, wherein the apparatus comprises:
a receiving unit, configured to receive a data packet, wherein a packet header of the data packet comprises a topology identifier field, the topology identifier field indicates a type of a forwarding path corresponding to the data packet, the type comprises a first type and a second type, and quality of service of a first forwarding path corresponding to the first type is higher than quality of service of a second forwarding path corresponding to the second type; and
a sending unit, configured to forward the data packet based on the topology identifier field.

79. The apparatus according to claim 78, wherein when the type indicated by the topology identifier field is the first type, the packet header further comprises a flow label field, the flow label field indicates a flow label of a data flow to which the data packet belongs, and the flow label is used to guide forwarding of the data packet.

80. The apparatus according to claim 78 or 79, wherein the sending unit is specifically configured to:
when the type indicated by the topology identifier field is the first type, send the data packet based on the first forwarding path.

81. The apparatus according to claim 80, wherein the first type corresponds to a first forwarding table, and the sending unit is specifically configured to:
obtain a first forwarding entry from the first forwarding table based on a destination address field, a source address field, and the flow label field in the packet header; and
send the data packet based on the first forwarding entry, wherein
the first forwarding entry is a mapping relationship among a network address indicated by the destination address field, a network address of a source node indicated by the source address field, the flow label indicated by the flow label field, a nexthop layer 2 identifier of a local node on the first forwarding path, an out interface identifier of the local node, a transport channel identifier TCID, and a logical channel identifier LCID.

82. The apparatus according to claim 78 or 79, wherein the sending unit is specifically configured to:
when the topology identifier field indicates the first type, and it is detected that a next node of a local node on the first forwarding path is faulty or a link from the local node to the next node is faulty, change the type indicated by the topology identifier field in the packet header from the first type to the second type, and send a changed data packet based on the second forwarding path.

83. The apparatus according to claim 82, wherein the sending unit is specifically configured to: when the second type corresponds to a second forwarding table, obtain a second forwarding entry from the second forwarding table based on a destination address field in the packet header; and
send the changed data packet based on the second forwarding entry, wherein
the second forwarding entry is a mapping relationship among a network address indicated by the destination address field, a nexthop layer 2 identifier of the local node on the second forwarding path, an out interface identifier of the local node, a transport channel identifier TCID, and a logical channel identifier LCID.

84. A communication apparatus, wherein the apparatus is a source node or the apparatus is comprised in a source node, the source node is an end node that accesses a first intermediate node, and the apparatus comprises:
an obtaining unit, configured to obtain a first message, wherein the first message comprises a first type field, a request source location identifier field, and a request location identifier field, the first type field indicates that a type of the first message is a resource reservation request message, the request source location identifier field indicates a network address of the first intermediate node, and the request location identifier field indicates a network address of a second intermediate node; and
a sending unit, configured to send the first message to the first intermediate node, wherein the first message is used to request to establish a first forwarding path from the source node to a destination node, the first forwarding path meets a quality of service QoS condition, and the destination node is the second intermediate node or the destination node is an end node that accesses the second intermediate node.

85. The apparatus according to claim 84, wherein the obtaining unit is specifically configured to:
generate the first message based on a service requirement for sending a data packet to the destination node.

86. The apparatus according to claim 84 or 85, wherein the first message further comprises a request flow label field, and the request flow label field indicates a flow label allocated by the source node to the first forwarding path.

87. The apparatus according to any one of claims 84 to 86, wherein the first message further comprises a keep alive time field, and the keep alive time field indicates keepalive duration of the first forwarding path.

88. The apparatus according to any one of claims 84 to 87, wherein the first message further comprises a request source address field and a request destination address field, the request source address field indicates a network address of the source node that requests to establish the first forwarding path, and the request destination address field indicates a network address of the destination node corresponding to the first forwarding path.

89. The apparatus according to any one of claims 84 to 88, wherein the first message further comprises at least one of the following fields:
a message length field indicating a length of the first message;
a transaction number field identifying that the source node sends the first message once; and
a link quality information type-length-value TLV field indicating a link quality requirement met by the first forwarding path.

90. The apparatus according to any one of claims 84 to 89, wherein
the obtaining unit is further configured to receive a second message from the first intermediate node, wherein a second type field of the second message indicates that a type of the second message is a resource reservation confirm message, the second message comprises a return code field, and the return code field indicates a resource reservation result of the first forwarding path; and
the apparatus further comprises a processing unit, configured to determine an establishment result of the first forwarding path based on the return code field in the second message.

91. The apparatus according to claim 90, wherein the processing unit is specifically configured to:
when the resource reservation result indicated by the return code field is a failure in reservation, determine that the establishment result of the first forwarding path is that establishment fails; or
when the resource reservation result indicated by the return code field is a success in reservation, determine that the establishment result of the first forwarding path is that establishment succeeds.

92. The apparatus according to claim 90 or 91, wherein the second message further comprises a type-length-value TLV field, a V field of the TLV field comprises an ordered set of an identifier indicating at least one link of the first forwarding path, and an identifier of each link in the at least one link is obtained based on a neighbor system identifier corresponding to the link and identifiers of interfaces of two neighboring intermediate nodes corresponding to the link.

93. The apparatus according to claim 92, wherein the V field of the TLV field further comprises a path link index field, and the path link index field indicates an index of a link on which resource reservation is currently performed and that is in the at least one link of the first forwarding path.

94. The apparatus according to claim 93, wherein when the resource reservation result indicated by the return code field is a success in reservation, the index indicated by the path link index field is an index of a last link in the at least one link of the first forwarding path.

95. The apparatus according to any one of claims 92 to 94, wherein the return code field is comprised in the V field of the TLV field.

96. The apparatus according to any one of claims 93 to 95, wherein the second message further comprises the request source location identifier field, the request location identifier field, the request flow label field, the keep alive time field, the request source address field, and the request destination address field that are in the first message.

97. The apparatus according to any one of claims 84 to 96, wherein the sending unit is further configured to:
send the data packet, wherein a packet header of the data packet comprises a topology identifier field, the topology identifier field indicates a type of a forwarding path corresponding to the data packet, the type comprises a first type and a second type, and quality of service of the first forwarding path corresponding to the first type is higher than quality of service of a second forwarding path corresponding to the second type.

98. The apparatus according to claim 97, wherein
when the first forwarding path is not established, the topology identifier field indicates that the type of the forwarding path corresponding to the data packet is the second type; or
when the first forwarding path is successfully established, the topology identifier field indicates that the type of the forwarding path corresponding to the data packet is the first type.

99. The apparatus according to claim 97 or 98, wherein when the topology identifier field indicates the first type, the packet header further comprises a flow label field, the flow label field indicates a flow label of a data flow to which the data packet belongs, and the flow label is used to guide forwarding of the data packet.

100. A communication apparatus, wherein the apparatus is a first intermediate node or the apparatus is comprised in a first intermediate node, a source node is an end node that accesses the first intermediate node, and the apparatus comprises:
a receiving unit, configured to receive a first message from the source node, wherein the first message is used to request to establish a first forwarding path from the source node to a destination node, and the first forwarding path meets a quality of service condition;
a processing unit, configured to determine the first forwarding path based on the first message, and
a sending unit, configured to send a second message when a resource is successfully reserved for the first forwarding path locally, wherein the second message is used to notify a next hop of the first intermediate node on the first forwarding path to reserve a resource for the first forwarding path, a first type field in the first message indicates that a type of the first message is a resource reservation request message, and a second type field in the second message indicates that a type of the second message is a resource reservation path message.

101. The apparatus according to claim 100, wherein the first message further comprises a request source location identifier field and a request location identifier field, the request source location identifier field indicates a network address of the first intermediate node, and the request location identifier field indicates a network address of a second intermediate node; and the destination node is the second intermediate node or the destination node is an end node that accesses the second intermediate node; and
the processing unit is specifically configured to determine the first forwarding path based on the request source location identifier field and the request location identifier field.

102. The apparatus according to claim 100 or 101, wherein the first message further comprises a request flow label field, and the request flow label field indicates a flow label allocated by the source node to the first forwarding path.

103. The apparatus according to any one of claims 100 to 102, wherein the first message further comprises a keep alive time field, and the keep alive time field indicates keepalive duration of the first forwarding path.

104. The apparatus according to any one of claims 100 to 103, wherein the first message further comprises a request source address field and a request destination address field, the request source address field indicates a network address of the source node that requests to establish the first forwarding path, and the request destination address field indicates a network address of the destination node corresponding to the first forwarding path.

105. The apparatus according to any one of claims 100 to 104, wherein the first message further comprises at least one of the following fields:
a message length field indicating a length of the first message;
a transaction number field identifying that the source node sends the first message once; and
a link quality information type-length-value TLV field indicating a link quality requirement met by the first forwarding path.

106. The apparatus according to any one of claims 100 to 105, wherein the second message further comprises a first type-length-value TLV field, a V field of the first TLV field comprises a first return code field, and the first return code field indicates that a resource reservation result of the first forwarding path on the source node is a success in reservation.

107. The apparatus according to claim 106, wherein the V field of the first TLV field further comprises an ordered set of an identifier indicating at least one link of the first forwarding path, and an identifier of each link in the at least one link is obtained based on a neighbor system identifier corresponding to the link and identifiers of interfaces of two neighboring intermediate nodes corresponding to the link.

108. The apparatus according to claim 106 or 107, wherein the V field of the first TLV field further comprises a first path link index field, and the first path link index field indicates an index of a link on which resource reservation is currently performed and that is in the at least one link of the first forwarding path.

109. The apparatus according to any one of claims 106 to 108, wherein the second message further comprises the request source location identifier field, the request location identifier field, the request flow label field, the keep alive time field, the request source address field, and the request destination address field that are in the first message.

110. The apparatus according to any one of claims 100 to 109, wherein the sending unit is further configured to:
send a third message to the source node when the resource fails to be locally reserved for the first forwarding path, wherein
a third type field in the third message indicates that a type of the third message is a resource reservation confirm message, and a second return code field in the third message indicates that the resource reservation result of the first forwarding path on the first intermediate node is a failure in reservation.

111. The apparatus according to any one of claims 100 to 109, wherein the sending unit is further configured to:
receive a fourth message, wherein a third type field in the fourth message indicates that a type of the fourth message is a resource reservation confirm message, and a third return code field in the fourth message indicates a resource reservation result of the first forwarding path;
obtain the network address of the source node from a request source address field in the fourth message; and
send the fourth message to the source node based on the network address of the source node.

112. The apparatus according to claim 111, wherein the fourth message further comprises a second type-length-value TLV field, a V field in the second TLV field comprises the ordered set of the identifier indicating the at least one link of the first forwarding path, and the identifier of each link in the at least one link is obtained based on the neighbor system identifier corresponding to the link and the identifiers of the interfaces of the two neighboring intermediate nodes corresponding to the link.

113. The apparatus according to claim 112, wherein the V field in the second TLV field further comprises a second path link index field, and the second path link index field indicates an index of a link on which resource reservation is currently performed and that is in the at least one link of the first forwarding path.

114. The apparatus according to claim 113, wherein when the resource reservation result indicated by the third return code field is a success in reservation, the index indicated by the second path link index field is an index of a last link in the at least one link of the first forwarding path.

115. The apparatus according to any one of claims 111 to 114, wherein the third return code field is comprised in the V field in the second TLV field.

116. The apparatus according to any one of claims 111 to 115, wherein the fourth message further comprises the request source location identifier field, the request location identifier field, the request flow label field, the keep alive time field, the request source address field, and the request destination address field that are in the first message.

117. The apparatus according to any one of claims 111 to 116, wherein the processing unit is further configured to:
generate a first forwarding table when the resource is successfully reserved for the first forwarding path locally, wherein the first forwarding table comprises a first forwarding entry, wherein
the first forwarding entry is a mapping relationship among the network address of the second intermediate node indicated by the request location identifier field in the first message, the network address of the source node indicated by the request source address field in the first message, the flow label indicated by the flow label field in the first message, a nexthop layer 2 identifier of the first intermediate node on the first forwarding path, an out interface identifier of the first intermediate node, a transport channel identifier TCID, and a logical channel identifier LCID.

118. The apparatus according to claim 117, wherein when the network address indicated by the request location identifier field in the first message is different from the network address indicated by the request destination address field in the first message, the first forwarding table further comprises a second forwarding entry, wherein
the second forwarding entry is a mapping relationship among the network address of the destination node indicated by the request destination address field in the first message, the network address of the source node indicated by the request source address field in the first message, the flow label indicated by the flow label field in the first message, the nexthop layer 2 identifier of the first intermediate node on the first forwarding path, the out interface identifier of the first intermediate node, the transport channel identifier TCID, and the logical channel identifier LCID.

119. The apparatus according to claim 117 or 118, wherein the processing unit is further configured to:
when time for which a forwarding entry in the first forwarding table is not accessed by a data packet reaches preset keep alive time, delete the forwarding entry from the first forwarding table.

120. A communication apparatus, wherein the apparatus is a second intermediate node or the apparatus is comprised in a second intermediate node, and the apparatus comprises:
a receiving unit, configured to receive a first message, wherein a first type field in the first message indicates that a type of the first message is a resource reservation path message, and a first return code field in the first message indicates that a resource reservation result of a first forwarding path on a target node is a success in reservation, the target node is a previous intermediate node of the second intermediate node on the first forwarding path, the first message indicates the second intermediate node to reserve a resource for the first forwarding path, and the first forwarding path meets a quality of service QoS condition; and
a processing unit, configured to locally reserve the resource for the first forwarding path based on the first message.

121. The apparatus according to claim 120, wherein the first message further comprises a first type-length-value TLV field, a V field in the first TLV field comprises an ordered set of an identifier indicating at least one link of the first forwarding path, and an identifier of each link in the at least one link is obtained based on a neighbor system identifier corresponding to the link and identifiers of interfaces of two neighboring intermediate nodes corresponding to the link.

122. The apparatus according to claim 121, wherein the V field in the first TLV field further comprises a first path link index field, and the first path link index field indicates an index of a link on which resource reservation is currently performed and that is in the at least one link of the first forwarding path.

123. The apparatus according to claim to 121 or 122, wherein the first message further comprises a request source address field and a request destination address field, the request source address field indicates a network address of a source node that requests to establish the first forwarding path, and the request destination address field indicates a network address of a destination node corresponding to the first forwarding path.

124. The apparatus according to claim 123, wherein the first message further comprises a request source location identifier field and a request location identifier field, the request source location identifier field indicates a network address of a first intermediate node accessed by the source node, and the request location identifier field indicates a network address of a last intermediate node on the first forwarding path.

125. The apparatus according to claim 123 or 124, wherein the first message further comprises a request flow label field, and the request flow label field indicates a flow label allocated by the source node to the first forwarding path.

126. The apparatus according to any one of claims 120 to 125, wherein the first message further comprises a keep alive time field, and the keep alive time field indicates keepalive duration of the first forwarding path.

127. The apparatus according to any one of claims 120 to 126, wherein the first message further comprises at least one of the following fields:
a message length field indicating a length of the first message,
a transaction number field identifying that the source node sends the first message once; and
a link quality information type-length-value TLV field indicating a link quality requirement met by the first forwarding path.

128. The apparatus according to any one of claims 120 to 127, wherein the apparatus further comprises a sending unit, configured to:
when the second intermediate node is not the last intermediate node on the first forwarding path, and the resource is successfully reserved for the first forwarding path locally, send a second message, wherein
the second message indicates a next hop of the second intermediate node on the first forwarding path to reserve a resource for the first forwarding path, and a second type field in the second message indicates that a type of the second message is the resource reservation path message, and a second return code field in the second message indicates that a resource reservation result of the first forwarding path on the second intermediate node is a success in reservation.

129. The apparatus according to any one of claims 120 to 127, wherein the apparatus further comprises a sending unit, configured to:
when the second intermediate node is not the last intermediate node on the first forwarding path, and the resource fails to be locally reserved for the first forwarding path, send a third message to the first intermediate node accessed by the source node, wherein the source node is an end node that requests to establish the first forwarding path, wherein
a third type field in the third message indicates that a type of the third message is a resource reservation confirm message, and a third return code field in the third message indicates that a resource reservation result of the first forwarding path on the second intermediate node is a failure in reservation.

130. The apparatus according to any one of claims 120 to 127, wherein the apparatus further comprises a sending unit, configured to:
when the second intermediate node is the last intermediate node on the first forwarding path, send a fourth message, so that the source node that requests to establish the first forwarding path determines an establishment result of the first forwarding path based on a fourth return code field in the fourth message, wherein
the fourth return code field indicates a resource reservation result of the first forwarding path on the second intermediate node, and a fourth type field in the fourth message indicates that a type of the fourth message is a resource reservation confirm message.

131. The apparatus according to claim 130, wherein the fourth message further comprises a second type-length-value TLV field, a V field in the second TLV field comprises the ordered set of the identifier indicating the at least one link of the first forwarding path, and the identifier of each link in the at least one link is obtained based on the neighbor system identifier corresponding to the link and the identifiers of the interfaces of the two neighboring intermediate nodes corresponding to the link.

132. The apparatus according to claim 131, wherein the V field in the second TLV field further comprises a second path link index field, and the second path link index field indicates that an index of a link on which resource reservation is currently performed and that is in the at least one link of the first forwarding path is an index of a last link in the at least one link.

133. The apparatus according to claim 131 or 132, wherein the fourth message further comprises the request source location identifier field, the request location identifier field, the request flow label field, the keep alive time field, the request source address field, and the request destination address field that are in the first message.

134. The apparatus according to any one of claims 120 to 133, wherein the processing unit is further configured to:
generate a first forwarding table when the resource is successfully reserved for the first forwarding path locally, wherein the first forwarding table comprises a first forwarding entry, wherein
the first forwarding entry is a mapping relationship among the network address indicated by the request location identifier field in the first message, the network address indicated by the request source address field in the first message, the flow label indicated by the flow label field in the first message, a nexthop layer 2 identifier of the second intermediate node, an out interface identifier of the second intermediate node, a transport channel identifier TCID, and a logical channel identifier LCID.

135. The apparatus according to claim 134, wherein when the network address indicated by the request location identifier field in the first message is different from the network address indicated by the request destination address field in the first message, the first forwarding table further comprises a second forwarding entry, wherein
the second forwarding entry is a mapping relationship among the network address indicated by the request destination address field in the first message, the network address indicated by the request source address field in the first message, the flow label indicated by the flow label field in the first message, the nexthop layer 2 identifier of the second intermediate node, the out interface identifier of the second intermediate node, the transport channel identifier TCID, and the logical channel identifier LCID.

136. The apparatus according to claim 134 or 135, wherein the processing unit is further configured to:
when time for which a forwarding entry in the first forwarding table is not accessed by a data packet reaches preset keep alive time, delete the forwarding entry from the first forwarding table.

137. A communication apparatus, comprising a processor, a transceiver, and a memory, wherein the memory is configured to store instructions, the processor is configured to execute the instructions, the transceiver is configured to communicate with another device under control of the processor, and when executing the instructions, the processor performs the method according to any one of claims 1 to 6, 25 to 40, 41 to 60, or 61 to 77.

138. A computer-readable storage medium, wherein the computer-readable storage medium stores a computer program, and the computer program is executed by a processor to implement the method according to any one of claims 1 to 6, 25 to 40, 41 to 60, or 61 to 77.

139. A vehicle, wherein the vehicle comprises the apparatus according to any one of claims 84 to 99.
